(19) Europäisches Patentamt / European Patent Office / Office européen des brevets

(11) **EP 2 054 472 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(21) Anmeldenummer: **07788408.8**

(22) Anmeldetag: **14.08.2007**

(51) Int Cl.:
*C08F 265/04* (2006.01)   *C08F 279/04* (2006.01)
*C08L 25/12* (2006.01)   *C08L 55/02* (2006.01)
*C08F 6/22* (2006.01)   *C08C 1/07* (2006.01)

(86) Internationale Anmeldenummer:
**PCT/EP2007/058388**

(87) Internationale Veröffentlichungsnummer:
**WO 2008/020012 (21.02.2008 Gazette 2008/08)**

(54) **THERMOPLASTISCHE FORMMASSEN AUF BASIS VON ACRYLNITRIL, STYROL UND BUTADIEN, SOWIE AGGLOMERATIONSMITTEL ENTHALTEND ETHYLACRYLAT UND METHACRYLAMID**

THERMOPLASTIC MOLDING COMPOUNDS BASED ON ACRYLONITRILE, STYRENE, AND BUTADIENE, AND AGGLOMERATING AGENT CONTAINING ETHYL ACRYLATE AND METHACRYLAMIDE

MATIÈRES THERMOPLASTIQUES À MOULER À BASE D'ACRYLONITRILE, DE STYRÈNE ET DE BUTADIÈNE, ET AGENT D'AGGLOMÉRATION COMPRENANT D'ACRYLATE D'ÉTHYLE ET DE MÉTHACRYLAMIDE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.08.2006 EP 06119176**

(43) Veröffentlichungstag der Anmeldung:
**06.05.2009 Patentblatt 2009/19**

(73) Patentinhaber: **Styrolution Europe GmbH**
**60325 Frankfurt am Main (DE)**

(72) Erfinder:
• **PEPERS, Michel**
  **5941 DB Velden (NL)**
• **MUEHLBACH, Klaus**
  **67269 Gruenstadt (DE)**
• **HAEHNLEIN, Marc**
  **68259 Mannheim (DE)**
• **SAUER, Michael**
  **68766 Hockenheim (DE)**
• **MITULLA, Konrad**
  **67071 Ludwigshafen (DE)**
• **OEPEN, Sabine**
  **67158 Ellerstadt (DE)**
• **SUWIER, Davy Roger**
  **68161 Mannheim (DE)**
• **NIESSNER, Norbert**
  **67159 Friedelsheim (SG)**

(74) Vertreter: **Jacobi, Markus Alexander et al**
**Isenbruck Bösl Hörschler LLP**
**Patentanwälte**
**Eastsite One**
**Seckenheimer Landstraße 4**
**68163 Mannheim (DE)**

(56) Entgegenhaltungen:
EP-A- 0 022 200      EP-A- 1 752 478
EP-A1- 1 108 732     EP-A2- 0 429 957
EP-A2- 0 494 534     WO-A-01/81438
WO-A-01/83574        WO-A-02/10222
WO-A1-99/01489       DE-A1- 10 308 506
DE-A1-102005 022 632   DE-B1- 2 427 960

• KYO DONG CHO, ET AL: "Synthesis and properties of agglomerating agent for high-solid NBR latexes", JOURNAL OF APPLIED POLYMER SCIENCE, Bd. 84, Nr. 2, 2002, Seiten 276-282, XP002462109,

EP 2 054 472 B1

## Beschreibung

Die Erfindung betrifft thermoplastische Formmassen auf Basis von Acrylnitril-Butadien-Styrol (ABS) mit verbesserten Eigenschaften. Ferner betrifft die Erfindung ein Verfahren zur Herstellung von thermoplastischen ABS-Formmassen und deren Verwendung. Auch Gegenstand der Erfindung sind Formkörper, Folien und Beschichtungen, die aus thermoplastischen Formmassen hergestellt werden können sowie deren Verwendung.

Es ist seit Jahrzehnten bekannt, thermoplastische Formmassen herzustellen, indem man Styrol-Acrylnitril-Copolymerisate durch Einarbeiten von Kautschuken modifiziert. Dies geschieht zum Beispiel durch Pfropfmischpolymerisation von Styrol und Acrylnitril in Gegenwart eines Kautschuks sowie durch nachträgliches Abmischen dieses Pfropfcopolymerisats mit einer separat hergestellten polymeren Matrix, die zum Beispiel aus einem Styrol-Acrylnitril-Copolymerisat oder einem Methylstyrol-Acrylnitril-Copolymerisat bestehen kann.

Aus EP-A 0 022 200 ist es bekannt, thermoplastische Formmassen herzustellen, die eine Copolymer-Matrix aus Styrol und Acrylnitril sowie ein Pfropfcopolymerisat aus einem Kautschuklatex, Styrol und Acrylnitril enthalten. Dabei wird zunächst ein Polybutadien-Latex durch radikalische Polymerisation unter Einsatz von Kaliumperoxodisulfat als Initiator hergestellt. Dieser Kautschuklatex wird dann einer Agglomeration unterzogen, die dazu dient, die Kautschukpartikel zu vergrößern. Diese Agglomeration kann beispielsweise durch eine Umsetzung des Kautschuklatex mit einer Emulsion eines Copolymeren aus Ethylacrylat und Methacrylsäureamid erfolgen. Anschließend erfolgt die Herstellung des Pfropfkautschuks dann durch Umsetzung des agglomerierten Kautschuklatex mit Styrol und Acrylnitril unter Einsatz eines Initiators.

Dem Fachmann ist ferner bekannt, dass die Größe der Kautschukpartikel einen wesentlichen Einfluss auf die physikalischen Eigenschaften der thermoplastischen Formmassen hat. Aus produktionstechnischen Gründen kann es sich als vorteilhaft erweisen, zunächst einen Kautschuklatex mit einer kleinen Partikelgröße der Kautschukteilchen herzustellen und in einem anschließenden Schritt durch ein Verfahren der Agglomeration die Partikelgröße der Kautschukteilchen zu vergrößern. Eine Schwierigkeit bei dem Schritt der Agglomeration besteht jedoch darin, dass die entstehende Dispersion oftmals neben den erwünschten Agglomerationsprodukten auch nicht agglomerierte Teilchen sowie ein Koagulat, gegebenenfalls mit sehr großen Teilchen enthält.

Dieses Koagulat kann die mechanischen Eigenschaften der thermoplastischen Formmassen negativ beeinflussen. Bei einer Abtrennung des Koagulats ergibt sich ein gegebenenfalls deutlicher Substanzverlust. Darüber hinaus ist man an einer möglichst hohen Ausbeute an Partikeln mit der gewünschten Teilchengröße (oder auch mehreren Teilchengrößen) interessiert, was insbesondere bei großtechnischen Anlagen von besonderer Bedeutung ist.

In EP-A 077 038 wird die Agglomeration eines dispergierten Kautschuks in Gegenwart einer Dispersion eines Säuregruppen enthaltenden Latex sowie in Gegenwart eines neutralen Elektrolyten beschrieben. Da der Agglomerationslatex freie Säuregruppen enthält, muss die Agglomeration bei einem nicht-sauren pH-Wert ausgeführt werden. Dieses Verfahren hat den Nachteil, dass die Effektivität der Agglomeration stark durch Schwankungen des pH-Werts beeinflusst wird, so dass der pH-Wert sehr genau eingehalten werden muss, um reproduzierbare Ergebnisse zu erhalten.

Aus EP-A 1 305 345 kennt der Fachmann ein weiteres Verfahren zur Agglomeration eines Butadien-Kautschuks, bei dem die Agglomeration in Gegenwart eines basischen Elektrolyten durchgeführt wird, beispielsweise in Gegenwart von Kaliumhydroxid.

Aus EP-A 0 714 941 ist ein Verfahren zur mechanischen Agglomeration von Kautschukpartikeln bekannt, das sich jedoch im technischen Maßstab nur mit großem Aufwand realisieren lässt.

Die Dokumente EP 0 429 957 A2, *"Synthesis and properties of agglomerating agent for high-solid NBR latexes"* (Kyo Dong Cho et al, J. App. Pol. Sci., Bd. 84, Nr. 2, 2002, Seiten 276-282) und EP 1 108 732 A1 offenbaren agglomerierend wirkende Komponenten aus 10 Gew.-% einem Ethylacrylat-Homopolymer und 90 Gew.-% einem Ethylacrylat-Methacrylamid-Copolymer.

Eine Aufgabe der vorliegenden Erfindung besteht darin, ein Gesamtverfahren zur Herstellung von ABS-Formmassen bereitzustellen, bei dem die einzelnen Verfahrensschritte so aufeinander abgestimmt sind, dass sie auch im großtechnischen Maßstab kostengünstig durchgeführt werden können. Bei dem Gesamtverfahren soll man ferner in technisch einfacher Durchführung und auf reproduzierbare Weise zu thermoplastischen Formmassen mit verbesserten Eigenschaften gelangen. Dabei kommt der Herstellung des Kautschuklatex, dem Verfahren zur Agglomeration der Kautschukpartikel und der anschließenden Pfropfcopolymerisation sowie dem potentiellen Abmischen mit anderen Copolymeren eine besondere Bedeutung zu.

Eine weitere Aufgabe der vorliegenden Erfindung ist es, ein verbessertes Verfahren zur Agglomeration von Kautschukpartikeln bereitzustellen, das es ermöglicht, unter Einsparung von teuren Ausgangsmaterialien in einem großtechnischen Prozess in reproduzierbarer Art und Weise Kautschukpartikel mit einer gewünschten Größenverteilung der Partikel herzustellen. Da der agglomerierte Kautschuklatex einen wesentlichen Einfluss auf die Eigenschaften der ABS-Formmassen hat, besteht ein großer Bedarf an verbesserten Verfahren zur Agglomeration von Kautschukpartikeln.

Die erfindungsgemäßen thermoplastischen Formmassen basieren im Wesentlichen auf einem Kautschuklatex, insbesondere einem Butadien-Latex, und weiteren kostengünstig verfügbaren Monomeren, insbesondere Acrylnitril, Styrol und/oder Methylstyrol.

Die erfindungsgemäßen Formmassen enthalten zum einen 40 bis 80 Gew.-% einer Copolymer-Matrix A (im wesentlichen aus Acrylnitril, Styrol und/oder α-Methylstyrol) und zum anderen 20 bis 60 Gew.-% eines Pfropfkautschuks B, der aus einer Pfropfgrundlage (B1) und einer Pfropfhülle (B2) aufgebaut ist. Darüber hinaus können die Formmassen 0 bis 10 Gew.-% an weiteren Komponenten (K) enthalten.

Gegenstand der Erfindung ist auch ein Verfahren zur Herstellung einer im Folgenden beschriebenen erfindungsgemäßen thrermoplastischen Formmasse, bei dem man

a) durch Massepolymerisation oder Lösungsmittelpolymerisation das thermoplastische Copolymers A herstellt,

b) durch Emulsionspolymerisation unter Verwendung eines Redox-Initiatorsystems das Pfropfcopolymer B herstellt, und

c) das thermoplastische Copolymer A und das Pfropfcopolymer B sowie gegebenenfalls die weitere Komponenten K und/oder die weiteren thermoplastischen Polymere (TP) mischt.

Insbesondere betrifft die vorliegende Erfindung ein Verfahren zur Herstellung einer thermoplastischen Formmasse wie im Folgenden beschrieben, wobei zur Herstellung des Pfropfpolymerisats B ein Redox-Initiatorsystem eingesetzt wird, enthaltend ein organisches Peroxid sowie mindestens ein Reduktionsmittel.

Insbesondere betrifft die vorliegende Erfindung ein Verfahren zur Herstellung einer thermoplastischen Formmasse wie im Folgenden beschrieben, wobei zur Herstellung des Pfropfpolymerisats B ein Redox-Initiatorsystem eingesetzt wird, enthaltend ein organisches Peroxid ausgewählt aus der Gruppe: Di-tert.-butylperoxid, Cumolhydroperoxid, tert.-Butylhydroperoxid und p-Menthanhydröperoxid oder Gemischen hieraus, sowie als Reduktionsmittel mindestens eine wasserlösliche Verbindung mit reduzierender Wirkung.

Insbesondere betrifft die vorliegende Erfindung ein Verfahren zur Herstellung einer thermoplastischen Formmasse wie im Folgenden beschrieben, wobei zur Herstellung des Pfropfpolymerisats B ein Redox-Initiatorsystem eingesetzt wird, enthaltend. mindestens ein organisches Peroxid ausgewählt aus der Gruppe: Cumolhydroperoxid, p-Menthanhydroperoxid und Mischungen hieraus, sowie mindestens ein Reduktionsmittel ausgewählt aus der Gruppe: Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)salze, Zinn(II)salze und Titan(III)salze.

Insbesondere betrifft die vorliegende Erfindung ein Verfahren zur Herstellung einer thermoplastischen Formmasse wie im Folgenden beschrieben, wobei zur Herstellung des Pfropfpolymerisats B ein Emulsionspolymerisation unter Verwendung eines Redox-Initiatorsystem enthaltend Cumolhydroperoxid, Dextrose sowie Eisen(II)salze durchgeführt wird, wobei das Cumolhydroperoxid kontinuierlich während der Pfropfpolymerisation zugeführt wird.

Verfahren zur Herstellung einer thermoplastischen Formmasse wie im Folgenden beschrieben, wobei zur Herstellung der Pfropfgrundlage B1 eine Emulsionspolymerisation unter Einsatz von Kaliumperoxodisulfat als Initiator durchgeführt wird.

Die Erfindung betrifft auch eine thermoplastische Formmasse, enthaltend ein thermoplastisches Copolymer A und ein Pfropfcopolymer B sowie gegebenenfalls weitere Komponenten K wobei die Formmasse enthält:

A: 40 bis 80 Gew.-% eines thermoplastischen Copolymers A erhältlich aus:

(A1) 20 bis 31 Gew.-%, bezogen auf das Copolymer A, Acrylnitril, und
(A2) 69 bis 80 Gew.-%, bezogen auf das Copolymer A, Styrol oder α-Methylstyrol oder einer Mischung aus Styrol und α-Methylstyrol,

B: 20 bis 60 Gew.-% eines Pfropfcopolymers B, herstellbar im wesentlichen aus:

(B1): 55 bis 70 Gew.-%, bezogen auf das Pfropfcopolymer B, einer Pfropfgrundlage (B1), erhältlich durch die Umsetzung von:

(B11) 0 bis 10 Gew.-%, bezogen auf die Pfropfgrundlage (B1), Styrol,
(B12) 90 bis 100 Gew.-%, bezogen auf die Pfropfgrundlage (B1), Butadien, und
(B13):0,01 bis 5 Gew.-%, bezogen auf die Pfropfgrundlage (B1), eines copolymerisierbaren, polyfunktionellen, agglomerierend wirkenden Copolymerisat (C) aus

92 bis 98 Gew.-%, bezogen auf die Gesamtfeststoffe in (C), Ethylacrylat und

2 bis 8 Gew.-%, bezogen auf die Gesamtfeststoffe in (C), Methylacrylamid

wobei dieses Copolymerisat (C)

40 bis 85 Gew.-% einer Homopolymer-Komponente aus Ethylacrylat und

15 bis 60 Gew.-% einer weiteren Polymer-Komponente enthält,

wobei diese weitere Polymer-Komponente einen Methacrylamid-Anteil von 6 bis 15 Gew.-% aufweist; wobei die Summe (B11) + (B12) + (B13) gerade 100 Gew.-% ergibt; und

(B2): 30. bis 45 Gew.-%, bezogen auf das Pfropfcopolymer B, einer Pfropfhülle erhältlich durch Umsetzung der Pfropfgrundlage (B1) mit einer Mischung von:

(B21)75 bis 80 Gew.-%, bezogen auf die Pfropfhülle (B2), Styrol und
(B22)20 bis 25 Gew.-%, bezogen auf die Pfropfhülle (B2), Acrylnitril,

wobei die Gesamtsumme aus Pfropfgrundlage (B1) und Pfropfhülle (B2) gerade 100 Gew.-% ergibt; und
K: 0 bis 5 Gew.-% weiterer Komponenten K,
wobei die Summe aus thermoplastischem Copolymer A, Pfropfcopolymer B und weiteren Komponenten K gerade 100 Gew.-% ergibt.

Die Copolymer-Matrix A wird vorzugsweise aus den Komponenten Acrylnitril und Styrol und/oder $\alpha$-Methylstyrol durch Massepolymerisation oder in Gegenwart eines oder mehrerer Lösungsmittel hergestellt. Bevorzugt sind dabei Copolymere A mit Molmassen $M_w$ von 50.000 bis 300.000 g/mol, wobei die Molmassen z.B. durch Lichtstreuung in Tetrahydrofuran bestimmt werden können (GPC mit UV-Detektion).

Die Copolymer-Matrix A kann insbesondere enthalten:

(Aa) Polystyrolacrylnitril, hergestellt aus, bezogen auf (Aa), 69 bis 80 Gew.-% Styrol und 20 bis 31 Gew.-% Acrylnitril, oder
(Ab) Poly-$\alpha$-Methylstyrolacrylnitril, hergestellt aus, bezogen auf (Ab), 69 bis 80 Gew.-% $\alpha$-Methylstyrol und 20 bis 31 Gew.-% Acrylnitril, oder
(Ac) eine Mischung der Copolymer-Matrix (Aa) und der Copolymer-Matrix (Ab).

Die Copolymer-Matrix A kann auch durch Copolymerisation von Acrylnitril, Styrol und $\alpha$-Methylstyrol gewonnen werden.

Das zahlengemittelte Molekulargewicht ($M_n$) der Copolymer-Matrix A beträgt vorzugsweise von 15.000 bis 100.000 g/mol (bestimmt mittels GPC mit UV-Detektion).
Die Viskosität (Vz) der copolymeren Matrix A beträgt (gemessen nach DIN 53726 bei 25°C in einer 0,5 gew.-%igen Lösung in DMF) z.B. von 50 bis 120 ml/g. Durch Massepolymerisation bzw. Lösungspolymerisation in z.B. Toluol oder Ethylbenzol kann die Copolymer-Matrix A hergestellt werden nach einem Verfahren, wie es beispielsweise im Kunststoff-Handbuch, Vieweg-Daumiller, Band V, (Polystyrol), Carl-Hanser-Verlag, München 1969, Seiten 122 f., Zeilen 12 ff. beschrieben wird.

Die Pfropfcopolymerkomponente B hat einen komplexen Aufbau und ist im wesentlichen aufgebaut aus 55 bis 70 Gew.-%, bezogen auf B, einer Pfropfgrundlage (B1) und zu 30 bis 45, Gew.-% aus einer Pfropfhülle (B2), wobei die Gew.-%-Angaben jeweils auf das Gesamtgewicht der Komponente B bezogen sind.

Die Pfropfgrundlage (B1) kann z.B. erhalten werden durch Umsetzung von 0 bis 10 Gew.-% Styrol und 90 bis 100 Gew.-% Butadien sowie 0,01 bis 5 Gew.-% an Hilfskomponenten, wobei die Gew.-%-Angaben sich auf die Pfropfgrundlage (B1) beziehen.

Die Pfropfhülle (B2) kann erhalten werden durch Umsetzung von 75 bis 80 Gew.-% an Styrol und 20 bis 25 Gew.-% Acrylnitril sowie 0,01 bis 5 Gew.-% an Hilfskomponenten (Gew. % bezogen auf die Pfropfhülle B2) in Gegenwart der Pfropfgrundlage (B1).

Die thermoplastische Formmasse enthält vorzugsweise mindestens ein thermoplastisches Pfropfpolymerisat B mit einen Kautschukgehalt von 20 bis 80 Gew.-%. Die Formmasse kann auch zwei oder mehr verschiedene Pfropfpolymerisate enthalten.

Zur Herstellung des Pfropfpolymerisats B wird bevorzugt ein Redox-Initiatorsystem eingesetzt, insbesondere enthaltend ein organisches Peroxid sowie mindestens ein Reduktionsmittel.

Als organisches Peroxid wird bevorzugt eine Verbindung ausgewählt aus der Gruppe: Di-tert.-butylperoxid, Cumolhydroperoxid,; tert.-Butylhydroperoxid und p-Menthanhydroperoxid oder Gemischen hieraus. Als Reduktionsmittel wird in der Regel mindestens eine wasserlösliche Verbindung mit reduzierender Wirkung verwendet.

In einer besonderen Ausführungsform der Erfindung wird zur Herstellung des Pfropfcopolymers B ein Redox-Initiatorsystem eingesetzt, enthaltend ein organisches Peroxid ausgewählt aus der Gruppe: Cumolhydroperoxid, p-Menthanhydroperoxid und Mischungen hieraus, sowie ein Reduktionsmittel ausgewählt aus der Gruppe: Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)salze, Zinn(II)salze und Titan(III)salze.

Zur Herstellung des Pfropfpolymerisats B wird bevorzugt eine Emulsionspolymerisation unter Verwendung eines Redox-Initiatorsystem enthaltend Cumolhydroperoxid, Dextrose sowie Eisen(II)salz durchgeführt. Vorzugsweise wird Cumolhydroperoxid zusammen mit Cumol eingesetzt, wobei das Verhältnis vorzugsweise von 20 : 1 bis etwa 1:10 sein kann. Vorzugsweise wird das Cumolhydroperoxid kontinuierlich während der Pfropfpolymerisation zugeführt, insbesondere als Mischung mit Cumol.

Zur Herstellung der Pfropfgrundlage (B1) wird bevorzugt eine Emulsionspolymerisation unter Einsatz von Kaliumperoxodisulfat als Initiator durchgeführt.

Wie bereits erwähnt wird das Copolymerisat A vorzugsweise aus den Monomeren Styrol und Acrylnitril, aus den Monomeren $\alpha$-Methylstyrol und Acrylnitril oder aus den Monomeren Styrol, $\alpha$-Methylstyrol und Acrylnitril aufgebaut. Im Prinzip sind jedoch auch Polymer-Matrices verwendbar, die weitere Monomerbausteine enthalten.

Erfindungsgemäß wird bei der Herstellung der thermoplastischen Formmasse für die Herstellung der Pfropfgrundlage (B1), bzw. für die Veränderung der Teilchengrößenverteilung der Pfropfgrundlage als copolymerisierbare, polyfunktionelle, agglomerierend wirkende Komponente mindestens ein Copolymerisat aus Ethylacrylat und Methyläcrylamid eingesetzt. Diese copolymerisierbare, polyfunktionelle, agglomerierend wirkende Komponente enthält mindestens ein Copolymerisat (C) aus 92 bis 98 Gew.-%, bezogen auf die Gesamtfeststoffe in (C), Ethylacrylat und 2 bis 8 Gew.-%, bezogen auf die Gesamtfeststoffe in (C), Methyläcrylamid. Bevorzugt wird ein Copolymerisat (C) aus 93 bis 97 Gew.-%, bezogen auf die Gesamtfeststoffe in (C), Ethylacrylat und 3 bis 7 Gew.-%, bezogen auf die Gesamtfeststoffe in (C), Methylacrylamid.

Bevorzugt wird dieses Agglomerations-Copolymer (C) als wässrige Dispersion, als so genannter Agglomerationslatex, eingesetzt.

Für die Herstellung des Pfropfcopolymers B wird bevorzugt von einer agglomerierten Pfropfgrundlage ausgegangen, die eine bimodale Teilchengrößenverteilung mit zwei Maxima aufweist. Diese Maxima liegen bei Teilchengrößen von 80 bis 120 nm einerseits und 350 bis 550 nm andererseits.

Geeignete Herstellungsverfahren für die Pfropfcopolymerisate B sind zum Beispiel die Emulsionspolymerisation, Lösungspolymerisation, Suspensionspolymerisation oder Massepolymerisation, wobei die Pfropfcopolymerisate B vorzugsweise durch wässrige radikalische Emulsionspolymerisation hergestellt werden. Geeignete Polymerisationsverfahren werden unter anderem beschrieben in WO-A 2002/10222, DE-A 28 26 925 sowie in EP-A 022 200.

Die Herstellung der Pfropfgrundlage (B1) kann beispielsweise durch radikalisch initiierte wässrige Emulsionspolymerisation erfolgen, indem eine Teilmenge der Monomeren in einem wässrigen Reaktionsmedium vorgelegt wird und die gegebenenfalls verbliebene Restmenge an Monomeren im wässrigen Reaktionsmedium nach Initiierung der radikalischen Polymerisationsreaktion zugegeben wird. Es ist auch möglich, im wässrigen Reaktionsmedium wenigstens eine Teilmenge des radikalischen Polymerisationsinitiators und gegebenenfalls weiterer Hilfsstoffe vorzulegen, das erhaltene wässrige Reaktionsmedium auf Polymerisationstemperatur zu bringen und bei dieser Temperatur die Monomeren dem wässrigen Reaktionsmedium zuzufügen. Dabei kann die Zuführung auch in Form einer Mischung erfolgen, beispielsweise als wässrige Monomeremulsion.

Die Reaktion wird durch wasserlösliche oder öllösliche radikalische Polymerisationsinitiatoren, wie z.B. anorganische oder organische Peroxide (z.B. Peroxodisulfat oder Benzolperoxid) oder mit Hilfe von Redox-Initiatorsystemen gestartet. Vorzugsweise wird Peroxodisulfat als Initiator bei der Herstellung der Pfropfgrundlage (B1) verwendet. In der Regel beträgt die Menge des eingesetzten Radikalinitiators, bezogen auf die Monomergesamtmenge, 0,01 bis 5 Gew.-%, bevorzugt 0,1 bis 3 Gew.-% und besonders bevorzugt 0,2 bis 1,5 Gew.-%.

Die Erfindung betrifft auch eine thermoplastische Formmasse, die als weitere Komponenten (K) eine oder mehrere Komponente enthält ausgewählt aus der Gruppe enthaltend Dispergiermittel (DM), Puffersubstanzen (PS), Molekulargewichtsregler (MR), Füllstoffe (F) und Zusatzstoffe (D).

In einer bevorzugten Ausführungsform der Erfindung wird als Radikalinitiator bei der Herstellung der Pfropfgrundlage B1 ein Peroxodisulfat, insbesondere Kaliumperoxodisulfat (KPS), in Verbindung mit weiteren Hilfskomponenten eingesetzt. Es können unter anderem ein Puffer (zum Beispiel Bicarbonat) und Kaliumstearat als Seife zum Einsatz kommen.

Als Molekulargewichtsregler (MR) kann beispielsweise tertiär-Dodecylmercaptan (TDM) zum Einsatz kommen, welches kontinuierlich oder auch zu verschiedenen Zeitpunkten während des Herstellprozesses des Kautschuklatex zugegeben werden kann. Die Art der Zugabe des Reglers kann sich auf die Eigenschaften des Endproduktes auswirken.

Im Rahmen des beschriebenen Polymerisationsverfahrens werden auch Dispergiermittel (DM) verwendet, die sowohl die Monomertröpfchen als auch die gebildeten Polymerisat-Teilchen im wässrigen Medium dispers verteilt halten und so die Stabilität der erzeigten wässrigen Polymerisatdispersion gewährleisten. Als Dispergiermittel (DM) kommen sowohl die zur Durchführung von radikalischen wässrigen Emulsionspolymerisationen üblicherweise eingesetzten Schutzkolloide als auch handelsübliche Emulgatoren in Betracht. Geeignete Schutzkolloide sind beispielsweise Polyvinylalkohole, Polyalkylenglykole, Alkalimetallsalze von Polyacrylsäuren und Polymethacrylsäuren und Gelatinederivate. Geeignete Schutzkolloide sind z.B. Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze.

Geeignete Schutzkolloide sind ferner auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, aminogruppentragende Acrylate, Methacrylate, Acrylamide und/oder Methacrylamide enthaltende Homo- und Copolymerisate. Eine ausführliche Beschreibung weiterer geeigneter Schutzkolloide findet sich auch in Houben-Weyl, "Methoden der organischen Chemie", Band XIV/1, Makromolekulare Stoffe, Georg-Thieme-Verlag, Stuttgart, 1961, Seiten 411 bis 420.

Es können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nicht-ionischer Natur sein. Im Falle der Verwendung von Gemischen grenzflächenaktiver Substanzen sollten die Einzelkomponenten miteinander verträglich sein. Im Allgemeinen sind anionische Emulgatoren untereinander und mit nicht-ionischen Emulgatoren verträglich.

Das gleiche gilt auch für kationische Emulgatoren, während anionische und kationische Emulgatoren meistens nicht miteinander kombiniert werden sollten. Eine Übersicht geeigneter Emulgatoren findet sich in Houben-Weyl, "Methoden der organischen Chemie", Band XIV/1, Makromolekulare Stoffe, Georg-Thieme-Verlag, Stuttgart, 1961, Seiten 192 bis 208. Erfindungsgemäß werden als Dispergiermittel insbesondere Emulgatoren eingesetzt wie anionische, kationische oder nicht-ionische Tenside. Gebräuchliche nicht-ionische Emulgatoren sind beispielsweise ethoxylierte Mono-, Di- und Trialkyl-phenole sowie ethoxylierte Fettalkohole. Übliche anionische Emulgatoren sind zum Beispiel Alkalimetall- und Ammoniumsalze von Alkylsulfaten (mit Alkylresten von $C_8$-$C_{12}$), von Schwefelsäure-halbestern ethoxylierter Alkanole (Alkylrest: $C_{12}$-$C_{18}$) und ethoxylierter Alkylphenole (Alkylreste: $C_4$-$C_{12}$) und von Alkylsulfonsäuren (Alkylrest: $C_{12}$-$C_{18}$).

Geeignete kationische Emulgatoren sind unter anderem $C_6$-$C_{18}$-Alkyl-, Alkylaryl- oder heterocyclische Reste aufweisende, primäre, sekundäre, tertiäre oder quartäre Ammoniumsalze, Pyridiniumsalze, Imidazoliniumsalze, Oxazoliniumsalze, Morpholiniumsalze, Tropyliumsalze, Sulfoniumsalze und Phosphoniumsalze. Beispielhafte Verbindungen sind u.a. Dodecylammoniumacetat oder das entsprechende Sulfat, Disulfate oder Acetate der verschiedenen 2-(N,N,N-Trimethylammonium)ethylparaffinsäureester, N-Cetylpyridiniumsulfat und N-Laurylpyridiniumsulfat. Die Emulgatoren und Schutzkolloide können auch als Mischungen eingesetzt werden.

Die als Dispergiermittel bevorzugt eingesetzten Emulgatoren werden vorteilhaft in einer Gesamtmenge von 0,005 bis 5 Gew.-%, vorzugsweise von 0,01 bis 5 Gew.-%, insbesondere von 0,1 bis 3 Gew.-%, jeweils bezogen auf die Monomer-Gesamtkonzentration, eingesetzt. Die Gesamtmenge der als Dispergiermittel zusätzlich oder statt der Emulgatoren eingesetzten Schutzkolloide beträgt oft 0,1 bis 10 Gew.-% und häufig 0,2 bis 7 Gew.-%, jeweils bezogen auf die Monömeren-Gesamtkonzentration. Bevorzugt werden jedoch anionische und/oder nicht-ionische Emulgatoren und insbesondere bevorzugt anionische Emulgatoren als Dispergiermittel eingesetzt.

Als weitere Polymerisationshilfsstoffe können die üblichen Puffersubstanzen (PS), durch welche pH-Werte von vorzugsweise 6 bis 11 eingestellt werden, wie Natriumbicarbonat und Natriumpyrophosphat, sowie 0 bis 3 Gew.-% eines Molekulargewichtsreglers (MR), wie z.B. Mercaptane, Terpinole oder dimeres $\alpha$-Methylstyrol, bei der Polymerisation verwendet werden. Die Puffersubstanzen können auch eine komplexierende Wirkung haben.

Die Reaktion der Polymerisation kann im Bereich von 0 bis 170°C durchgeführt werden. In der Regel werden Temperaturen zwischen 40 und 120°C, häufig zwischen 50 und 110°C und oft zwischen 60 und 100°C angewendet.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,03 bis 2 Gew.-% und oft von 0,04 bis 1,5 Gew.-% einer Polymersaat, jeweils bezogen auf die Monomer-Gesamtmenge, erfolgen. Eine Polymersaat kann insbesondere dann eingesetzt werden, wenn die Teilchengröße der mittels radikalisch wässriger Emulsionspolymerisation herzustellenden Polymerpartikel gezielt eingestellt werden soll, wie es in US 2,520,959 und US 3,397,165 beschrieben wird.

Die auf die vorstehend beschriebene Weise hergestellten Polymere (B1) eignen sich als Pfropfgrundlage für die Herstellung der Pfropfcopolymere B.

Eine wichtige Kenngröße für Pfropfcopolymere ist die Pfropfausbeute, wobei bei einer vollständigen Pfropfung die Pfropfausbeute 100 % beträgt. Für eine Reihe von Anwendungen sind Pfropfcopolymere mit möglichst hoher Pfropfausbeute von Vorteil, da diese nur geringe Mengen an freiem Polymerisat der Monomeren enthalten. Das nicht an den Kautschuk gebundene Polymerisat kann die physikalischen Eigenschaften des Copolymers negativ beeinflussen, was sich insbesondere in Mischungen mit weiteren Komponenten bemerkbar macht.

Es ist seit langem bekannt, dass man ABS-Pfropfcopolymere mit hoher Pfropfausbeute z. B. durch eine Pfropfcopolymerisation in Emulsion unter Verwendung eines Redox-initiatorsystems aus einem organischen Hydroperoxid und reduzierendem Zucker erhalten kann.

Die Pfropfhülle (B2) wird vorzugsweise nach Durchführung einer Agglomeration durch ein Emulsionspolymerisationsverfahren erzeugt. Die Pfropfhülle (B2) wird gemäß einer Ausführungsform der Erfindung in Gegenwart des nach den oben beschriebenen Verfahren erhaltenen Pfropfkerns (B1) aus einem Monomergemisch, enthaltend die Komponenten Styrol, Acrylnitril und gegebenenfalls weitere Monomere polymerisiert. Dabei können die Monomere (und gegebenenfalls weitere Monomere) einzeln oder in Mischungen miteinander zugefügt werden. Beispielsweise kann man zunächst Styrol allein und danach eine Mischung aus Styrol und Acrylnitril aufpfropfen. Es ist vorteilhaft, diese Pfropfcopolymerisation wieder in wässriger Emulsion unter den üblichen, vorstehend beschriebenen Bedingungen durchzuführen, wobei sich der Einsatz eines RedoxInitiatorsystems bewährt hat.

Die Pfropfcopolymerisation zur Erzeugung der Pfropfhülle (B2) kann im gleichen System erfolgen wie die Emulsionspolymerisation zur Herstellung der Pfropfgrundlage (B1), wobei, falls nötig, weitere Emulgatoren sowie Hilfsstoffe zugegeben werden können. Das gemäß einer Ausführungsform der Erfindung aufzupfropfende Monomergemisch kann dem Reaktionsgemisch auf einmal, verteilt auf mehreren Stufen - beispielsweise zum Aufbau mehrerer Pfropfauflagen - oder kontinuierlich während der Polymerisation zugegeben werden. Vorzugsweise können die Monomere (insbesondere Styrol und Acrylnitril) gleichzeitig zugegeben werden.

Der Pfropfungsgrad (PG) ist die Menge der eingesetzten Pfropfmonomere (beispielsweise Menge an Styrol plus Menge an Acrylnitril) geteilt durch die Summe aus der Menge der Pfropfgrundlage (z.B. Menge an Polybutadien) und der Menge der eingesetzten Pfropfmonomere.

Die Pfropfcopolymerisation des Gemischs der Komponenten Styrol, Acrylnitril und gegebenenfalls weiterer Monomere in Gegenwart der Pfropfgrundlage (B1) wird so durchgeführt, dass ein Pfropfungsgrad von 10 bis 70 Gew.-%, vorzugsweise 20 bis 60 Gew.-%, insbesondere 30 bis 55 Gew.-% resultiert. Da die Pfropfausbeute (PA) in der Regel nicht 100 % beträgt, ist der tatsächlich aufgepfropfte Teil der Polymere kleiner als die eingesetzte Menge. Daraus folgt, dass eine Menge an freien Polymeren entsteht. Die Steuerung der Pfropfausbeute bei der Pfropfpolymerisation kann unter anderem auch durch die Dosiergeschwindigkeit der Monomeren oder durch Initiator- und Reglerzugabe erfolgen. Beispielsweise führt eine größere Menge an eingesetztem Regler (z.B. Mercaptane) zu einer größeren Menge an freien Polymeren.

Zur Initiierung der Pfropf-Polymerisation sind insbesondere pfropfaktive und wasserlösliche Redox-Systeme geeignet. Beispielsweise kann man konventionelle wasserlösliche Starter wie z.B. Kaliumperoxodisulfat, Natriumperoxodisulfat, Ammoniumperoxodisulfat, Wasserstoffperoxid zusammen mit mindestens einem konventionellen Reduktionsmittel wie z.B. Natriumsulfit, Natriumdisulfit, Natriumhydrogensulfit, Natriumdithionit, Ascorbinsäure, Zucker oder das Natriumsalz der Hydroxymethansulfonsäure als Redox-System verwenden. Solche Redox-Systeme führen in vielen Fällen zu grobteiligeren Dispersionen. Besonders geeignete Redoxkatalysatoren mit hoher Pfropfaktivität sind wasserlösliche Startersysteme wie Redox-Systeme aus Wasserstoffperoxid und Schwermetallionen wie Cer-, Mangan- oder Eisen(II)salze, wie sie z.B. in Houben-Weyl, "Methoden der organischen Chemie", 4. Auflage, Band E 20, S. 2168, beschrieben werden.

Besonders geeignet ist das Redox-Initiatorsystem aus organischem Peroxid, wie z.B. Cumolhydroperoxid, einem organischen Reduktionsmittel und einem Eisen(II)salz (wie z.B. Eisen(II)sulfat), das feinteilige Dispersionen mit hoher Pfropfausbeute liefert. Der Einsatz eines Redox-Initiatorsystems enthaltend Cumolhydroperoxid und als Reduktionsmittel einen Zucker wie Glukose wird bereits im Jahr 1979 in EP-A 000 419 vorgeschlagen, ist aber auch aus EP-A 080720 oder EP-A 188814 bekannt. Aus WO 03/091300 ist der Einsatz von Kohlehydraten bei der Pfropfreaktion bekannt.

Die Polymerisation wird üblicherweise so durchgeführt, dass das Schwermetallsalz des Redox-Systems wie z.B. das Eisen(II)salz dem Ansatz bereits vor der Polymerisation zugesetzt wird, während das Peroxid gleichzeitig mit den Monomeren, aber getrennt davon zudosiert wird. Das Eisen(II)salz wird beispielsweise in Konzentrationen von 1 bis 200 mg/l Fe-(II)-Ionen, bezogen auf die gesamte Dispersion, eingesetzt, wobei auch höhere und niedrigere Konzentrationen möglich sind.

Die Zuführung des Redox-initiatorsystems kann auf verschiedene Weisen erfolgen, beispielsweise durch portionsweise Zugabe wie in WO 2001/30901 oder in WO 2002/28931 beschrieben. Vorzugsweise wird das Oxidatiönsmittel Cumolhydroperoxid verwendet (ggf. in Mischung mit Cumol), wobei dieses insbesondere zum Teil kontinuierlich zugeführt und zum Teil als Portion (z.B. einmalig) zugegeben wird.

Zusätzlich zu den Redox-Initiatoren können konventionelle Starter wie Öl-lösliche öder nur wenig wasserlösliche organische Peroxide oder Azo-Initiatoren Verwendung finden. Vorteile bietet beispielsweise die Zugabe weiterer Reduktionsmittel, die bevorzugt mit dem Eisensalz vor der Polymerisation vorgelegt werden. Als Reduktionsmittel kommen z.B. Natriumsufit, Natriumdisulfit, Natriumhydrogensulfit, Natriumdithionit, Ascorbinsäure, reduzierende Zucker sowie das Natriumsalz der Hydroxymethansulfonsäure in Frage.

Das Molgewicht des aufgepropften Polymeren kann zusätzlich eingestellt werden durch die Mitverwendung von Kettenüberträgern oder Molekulargewichtsreglern (MR) wie z.B. n-Dodecylmercaptan, t-Dodecylmercaptan, n- Butylmercaptan oder t-Butylmercaptan. Geeignet sind auch geruchsfreie Regler wie Terpinolene, siehe auch EP-A 1 191 044.

Die Polymerisation wird häufig bei pH-Werten von 2,5 bis 12, vorzugsweise bei pH-Werten von 8 bis 11 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak oder Ammoniumcarbonat auf den gewünschten Wert eingestellt werden. Bevorzugt ist eine Einstellung des pH-Wertes der wässrigen Polymerdispersionen auf 7 bis 11 im Anschluss an die Polymerisation durch Zugabe von Natronlauge, Kalilauge oder Ammoniak.

Die Konzentration der erfindungsgemäßen Dispersionen beträgt beispielsweise 10 bis 60 Gew.-%, bevorzugt 10 bis 50 Gew.-%, insbesondere 20 bis 50 Gew.-%.

Um die Lagerstabilität der wässrigen Polymerdispersionen zu erhöhen, kann es vorteilhaft sein, die im Redox-Initiatorsystem verwendeten Schwermetallionen im Anschluss an die Polymerisation durch Zugabe mindestens eines Komplexbildners zu binden. Hierfür eignen sich beispielsweise Komplexbildner wie Ethylendiamin-tetraessigsäure, Nitrilotriessigsäure, Diethylentriamin-pentaessigsäure, Polyasparaginsäure, Iminodibernsteinsäure, Citronensäure bzw. ihre Alkali- oder Ammoniumsalze. Die Einsatzmenge der Komplexbildner richtet sich dabei nach der Menge an Schwermetallsalz, das komplexiert werden soll. Üblicherweise werden die Komplexbildner in einer Menge von 1 bis 10 mol, bevorzugt 1,1 bis 5 mol pro mol an Schwermetall-ionen eingesetzt.

Zwischen der Herstellung der Pfropfgrundlage (B1) und dem Aufbringen der Pfropfhülle (B2) wird vorzugsweise ein Agglomerationsschritt durchgeführt, um die Teilchengrößen und Teilchengrößenverteilungen gezielt einzustellen. Verschiedene Verfahren zur teilweisen oder vollständigen Agglomeration der Pfropfgrundlage (B1) sind dem Fachmann bekannt, siehe z.B. EP-A 1 305 345, EP-A 029 613, EP-A 007 810, DE-A 12 33 131, DE-A 12 58 076 und DE-A 21 01 650. Die Agglomeration kann auch nach anderen dem Fachmann bekannten Methoden vorgenommen werden, jedoch besteht ein erheblicher Bedarf an verbesserten Agglomerationsverfahren, da diese einen erheblichen Einfluss auf die Qualität der Formmassen und auf die Kosten des Gesamtverfahrens haben.

Es können im Prinzip auch physikalische Agglomerationsverfahren wie Gefrier- oder Druckagglomerationsverfahren verwendet werden, es werden aber in der Regel bevorzugt chemische Methoden eingesetzt. Zu letzteren gehört auch die Zugabe von Elektrolyten oder von anorganischen oder organischen Säuren.

Bevorzugt wird eine bimodale Teilchengrössenverteilung der Pfropfgrundlage durch eine Agglomeration der Kautschukteilchen erzielt. Dazu können beispielsweise die Monomeren, welche den Kern aufbauen, bis zu einem Umsatz von üblicherweise mindestens 90, bevorzugt grösser 95 %, bezogen auf die eingesetzten Monomeren, zur Reaktion gebracht werden. Dieser Umsatz ist in der Regel nach 4 bis 20 Stunden erreicht. Der so erhaltene Kautschuklatex hat eine mittlereTeilchengrösse d50 von maximal 200 nm, bevorzugt unter 150 nm, und eine enge Teilchengrössenverteilung (d.h. ein nahezu monodisperses System).

In der zweiten Stufe wird der Kautschuklatex dann agglomeriert. Dies geschieht in der Regel durch Zugabe einer Dispersion eines Acrylesterpolymerisates. Vorzugsweise werden Dispersionen von Copolymerisaten von (C1-C4-Alkyl)-estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylol-methacrylamid oder N-Vinylpyrrolidon, eingesetzt. Bevorzugt wird ein Copolymerisat aus 90 bis 96 Gew.-% Ethylacrylat und 4 bis 10 Gew.-% Methacrylamid- verwendet. Die Agglomerierdispersion kann gegebenenfalls auch mehrere der genannten Acrylesterpolymerisate enthalten. Die Konzentration der Acrylesterpolymerisate in der zur Agglomeration verwendeten Dispersion soll im allgemeinen zwischen 3 und 40 Gew.-% liegen.

Bei der Agglomeration werden in der Regel 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe kann variiert werden, im allgemeinen dauert sie etwa 1 bis 60 Minuten bei einer Temperatur zwischen 20° und 90°C, vorzugsweise zwischen 30° und 75° C.

Außer mittels einer Acrylesterpolymerisat-Dispersion kann der Kautschuklatex prinzipiell auch durch andere Agglomeriermittel wie z.B. Essigsäureanhydrid agglomeriert werden. Auch eine Agglomeration durch Druck oder Einfrieren ist möglich, jedoch wenig vorteilhaft. Die genannten Methoden sind dem Fachmann seit längerem bekannt. Unter den bislang beschriebenen Bedingungen wird jedoch häufig nur ein Teil der Kautschukteilchen agglomeriert, so dass eine bi- oder polymodale Verteilung entsteht.

Nach der Agglomeration liegen im allgemeinen weniger als 40, vorzugsweise zwischen 5 und 35 % der Teilchen (Zahlen-Verteilung) im nicht-agglomerierten Zustand vor. Der erhaltene Teil-agglomerierte Kautschuklatex ist verhältnismäßig stabil, so dass er ohne weiteres gelagert und transportiert werden kann, ohne dass Koagulation eintritt.

Um eine bimodale Teilchengrössenverteilung des Pfropfpolymerisates B zu erzielen, ist es prinzipiell auch möglich, zwei verschiedene Pfropfpolymerisate, die sich in ihrer mittleren Teilchengrösse unterscheiden, getrennt voneinander in üblicher Weise herzustellen und die Pfropfpolymerisate dann in einem gewünschten Mengenverhältnis zusammenzugeben. Die kann jedoch zu höheren Produktionskosten führen.

Die genannten Verfahren haben aber alle den Nachteil, dass größere Mengen an agglomerierend wirkenden Komponenten verbraucht werden, was unter anderem die Kosten des Herstellverfahrens in die Höhe treibt.

Gemäß einem weiteren Aspekt der vorliegenden Erfindung wird die Agglomeration von Kautschukpartikeln mittels eines speziellen und effizienteren Agglomerationspolymerisats vorgenommen, wobei dieses Verfahren nicht nur auf die oben beschriebenen Kautschukpartikel (B1) anwendbar ist, sondern auch auf andere Kautschukpartikel.

Für die Agglomeration von als Pfropfgrundlage dienenden Kautschukpartikeln eignet sich eine copolymerisierbare, polyfunktionelle, agglomerierend wirkende Komponente C gemäss Anspruch 20.

Zu den bevorzugten Agglomerations-polymerisaten zählen insbesondere solche mit einem Molekulargewicht ($M_w$) von 30.000 bis 300.000 g/mol.

Ein weiterer Aspekt der vorliegenden Erfindung ist ein allgemeines Verfahren zur Agglomeration eines in wässriger Phase dispergierten Kautschuks durch die Zugabe einer wässrigen Dispersion enthaltend die copolymerisierbare, polyfunktionelle, agglomerierend wirkende Komponente (C)

Ferner betrifft die Erfindung ein Verfahren zur Herstellung einer agglomerierend wirkenden Komponente (C), enthaltend Ethylacrylat und Methylacrylamid, enthaltend 92 bis 98 Gew.-%, bezogen auf die Gesamtfeststoffe in (C), Ethylacrylat und 2 bis 8 Gew.-%, bezogen auf die Gesamtfeststoffe in (C), Methylacrylamid, wobei sie 40 bis 85 Gew.-% einer Homopolymer-Komponente aus Ethylacrylat und 15 bis 60 Gew.-% einer weiteren Polymer-Komponente enthält, wobei diese weitere Polymer-Komponente einen Methacrylamid-Anteil von 6 bis 15 Gew.-% aufweist, bei dem man zunächst eine Teilmenge an Ethylacrylat polymerisiert (Bildung der Grundlage) sowie anschließend in einem mehrstufigen Zugabeverfahren weitere Teilmengen an Ethylacrylat und das Methylacrylamid (gegebenenfalls als Mischung) zugibt.

Bevorzugt wird ein Verfahren zur Herstellung einer agglomerierend wirkenden Komponente (C), enthaltend Ethylacrylat und Methylacrylamid, bei dem man zunächst eine Teilmenge des Ethylacrylats polymerisiert, anschließend eine weitere Teilmenge an Ethylacrylat zuführt sowie erst anschließend das Methylacrylamid zusammen mit Ethylacrylat zugibt. In einem vereinfachten Darstellungsversuch kann man von der Bildung einer Grundlage (Kern) aus Ethylacrylat ausgehen, um die herum sich eine oder mehrere Schichten aus Ethylacrylat bilden, die dann von Ethylacrylat-Methylacrylamid-Copolymer umgeben werden (Modell der Zwiebelschalen).

Auch die Verwendung der erfindungsgemäßen agglomerierend wirkenden Komponente (C) zur Herstellung eines agglomerierten Kautschuklatex ist Gegenstand dieser Erfindung.

Gegenstand der vorliegenden Erfindung ist auch die agglomerierend wirkende Komponente (C) selbst, enthaltend 92 bis 98 Gew.-%, bezogen auf die Gesamtfeststoffe in (C), Ethylacrylat und 2 bis 8 Gew.-%, bezogen auf die Gesamtfeststoffe in (C), Methylacrylamid, wobei sie 40 bis 85 Gew.-% einer Homopolymer-Komponente aus Ethylacrylat und 15 bis 60 Gew.-% einer weiteren Polymer-Komponente enthält, wobei diese weitere Polymer-Komponente einen Methacrylamid-Anteil von 6 bis 15 Gew.-% aufweist.

Die weitere Polymerkomponente in (C) hat dabei einen Methacrylamid-Anteil von 6 bis 15 Gew.-%, insbesondere 7 bis 13 Gew.-%, bevorzugt auch 7 bis 12 Gew.%.

Die Agglomerationspolymerisate können dadurch hergestellt werden, dass man zunächst beispielsweise Methylmethacrylat (zum Beispiel 10 Gew.-% der gesamten Monomermenge) polymerisiert und anschließend eine Mischung von beispielsweise 5 Gew.-% Methylacrylamid und 95 Gew.-% Ethylacrylat hinzufügt (wobei die hinzugefügte Mischung von Monomeren 90 Gew.-% der Gesamtmonomermenge beträgt).

Die Konzentration der Agglomerisationspolymerisate (C) in der zur Agglomeration verwendeten Dispersion soll im Allgemeinen im Bereich von 3 bis 60, bevorzugt im Bereich von 5 bis 40 Gew.-% liegen. Die Agglomerationsdispersion kann auch eine Mischung aus zum Beispiel zwei oder mehreren unterschiedlichen Agglomerations-polymerisaten enthalten. Bevorzugt wird das Polymerisat in wässriger Phase dispergiert. Bei der Agglomeration werden in der Regel 0,1 bis 5, vorzugsweise 0,4 bis 3 Gew.-Teile der Agglomerierdispersion auf 100 Gew.-Teile des Kautschuks, jeweils berechnet auf Feststoffe, eingesetzt.

Die Agglomeration wird bevorzugt bei einer Temperatur von 20 bis 120°C, besonders bevorzugt von 30 bis 100°C durchgeführt. Die Zugabe von C kann auf einmal oder portionsweise, kontinuierlich oder mit einem Zulaufprofil über einen bestimmten Zeitraum erfolgen. Nach einer bevorzugten Ausführungsform erfolgt die Zugabe von C derart, dass pro Minute 1/1 bis 1/100 der Gesamtmenge von C eingetragen werden. Die Agglomerierzeit beträgt bevorzugt von einer Minute bis mehrere Stunden, beispielsweise bis 2 Stunden, besonders bevorzugt von 10 bis 60 Minuten.

Als basische Elektrolyte kommen erfindungsgemäß organische oder anorganische Hydroxide in Betracht. Anorganische Hydroxide kommen vor allem in Betracht: Einwertige basische Elektrolyte werden bevorzugt. Besonders bevorzugt werden Lithiumhydroxid, Natriumhydroxid oder Kaliumhydroxid, eingesetzt. Nach einer der besonders bevorzugten Ausführungsformen wird KOH als basischer Elektrolyt verwendet. Nach einer anderen bevorzugten Ausführungsform wird NaOH als basischer Elektrolyt eingesetzt. Es können aber auch Mischungen aus zwei oder mehr basischen Elektrolyten eingesetzt werden. Dies kann beispielsweise dann vorteilhaft sei, wenn das Wachstum der Kautschukpartikel genau gesteuert werden soll. So kann es zum Beispiel günstig sein, Mischungen aus LiOH mit KOH oder Mischungen aus LiOH mit NaOH einzusetzen. Mischungen aus KOH und NaOH zu verwenden ist ebenfalls möglich und zählt zu einer weiteren bevorzugten Ausführungsform. Im allgemeinen werden die Elektrolyte vor der Zugabe gelöst.

Bevorzugtes Lösungsmittel ist die wässrige Phase.

Bevorzugt werden verdünnte Lösungen verwendet, zum Beispiel Lösungen einer Konzentration im Bereich von 0,001 bis 0,1, insbesondere von 0,001 bis 0,05, bevorzugt weniger als 0,03, beispielsweise weniger als 0,025 g basischer Elektrolyt/ml Lösungsmittel.

Die Zugabe der basischen Elektrolyte kann vor der Zugabe des Agglomerationspolymerisates, gleichzeitig zusammen oder getrennt von diesem oder nach Zugabe von B erfolgen. Es ist auch möglich die basischen Elektrolyten in der Dispersion von C vorzumischen.

Nach einer bevorzugten Ausführungsform erfolgt die Zugabe der basischen Elektrolyten vor der Zugabe des Agglomerationspolymerisates. In der Regel wird der basische Elektrolyt in einer Menge im Bereich von 0,01 bis 4 Gew.-%, bevorzugt 0,05 bis 2,5, insbesondere 0,1 bis 1,5 Gew.-% bezogen auf den Kautschuk B (Feststoff), eingesetzt.

Der pH-Wert während der Agglomerisation beträgt im allgemeinen von 6 bis 13. Nach einer bevorzugten Ausführungsform beträgt der pH-Wert von 8 bis 13.

Die nach dem erfindungsgemäßen Verfahren erhaltenen agglomerierten Kautschuke eignen sich als Pfropfgrundlage für die Herstellung von Pfropfpolymerisaten. Prinzipiell können die Kautschuke mit den unterschiedlichsten ungesättigten Verbindungen gepfropft werden, bevorzugt werden die oben genannten Monomere verwendet.

Die Pfropfcopolymerisate B haben üblicherweise eine mittlere Teilchengröße $d_{50}$ von 50 bis 700 nm, bevorzugt von 60 bis 600 nm und besonders bevorzugt von 80 bis 300 nm. Diese Teilchengrößen können erzielt werden, indem man als noch nicht agglomerierte Pfropfgrundlage (B1) einen Latex mit Teilchengrößen $d_{50}$ von 50 bis 350 nm, bevorzugt 60 bis 300 nm und besonders bevorzugt von 75 bis 150 nm verwendet.

Die Teilchengrößenverteilung der Pfropfcopolymerisate B kann mono-, bi- oder multimodal sein. Gemäß einer besonders bevorzugten Ausführungsform der Erfindung ist die Teilchengrößenverteilung bimodal. Gemäß einer weiteren Ausführungsform ist die Teilchengrößenverteilung der Komponente B bimodal, wobei ein Maximum bei 80 bis 120 nm liegt und ein zweites Maximum bei 350 bis 550 nm.

Als mittlere Teilchengrößen bzw. Teilchengrößenverteilungen werden die aus der integralen Massenverteilung bestimmten Größen angegeben. Bei diesen und den weiteren im Rahmen der vorfiegenden Erfindung angegebenen Teilchengrößen handelt es sich in der Regel um das Gewichtsmittel der Teilchengrößen, wie sie mittels einer analytischen Ultrazentrifuge entsprechend der Methode nach W. Scholtan und H. Lange, Kolloid.-Zeitschrift und Z.-Polymere 250 (1972), Seiten 782 bis 796, bestimmt werden, soweit keine anderen Angaben gemacht werden.

Unter Pfropfcopolymerisat wird auch eine Mischung unterschiedlicher Pfropfkautschuke verstanden werden. So kann beispielsweise zu der wässrigen Reaktionsmischung eines Pfropfkautschuks die Lösung, Suspension oder Emulsion eines oder mehrerer weiterer Pfropfkautschuke zugegeben werden. Die Mischung dieser Pfropfkautschuke kann anschließend isoliert werden. Besonders bevorzugt wird ein Pfropfkautschuk aus seiner Reaktionsmischung isoliert.

Die erfindungsgemäßen Pfropfcopolymerisate B können so weiter verwendet werden, wie sie in der Reaktionsmischung anfallen, beispielsweise als Latexemulsion oder Latexdispersion. Alternativ können sie aber auch in einem weiteren Schritt aufgearbeitet werden. Maßnahmen zur Aufarbeitung sind dem Fachmann im Prinzip bekannt. Zu den Aufarbeitungsschritten zählt zum Beispiel die Isolierung der Pfropfcopolymerisate B aus der Reaktionsmischung, zum Beispiel durch Sprühtrocknung, Scherung oder durch Fällen mit starken Säuren oder mittels anderer Fällungsmittel, z.B. aus anorganischen Verbindungen wie Magnesiumsulfat. Zu den Aufarbeitungsschritten zählt auch das Trocknen des isolierten Kautschuks.

Wie bereits oben beschrieben ist die bevorzugte Copolymer-Matrix Komponente A ein Polystyrol-Acrylnitril, Poly-$\alpha$-Methylstyrol-Acrynitril oder deren Mischungen. Bevorzugt sind dabei Copolymere A mit (massegemittelten) Molmassen $M_w$ von 50.000 bis 300.000 g/mol, wobei die Molmassen durch Lichtstreuung in Tetrahydrofuran bestimmt werden können. In einer bevorzugten Ausführungsform der Erfindung wird die Komponente A nach der Herstellung nach dem Fachmann bekannten Verfahren isoliert und vorzugsweise zu einem Granulat verarbeitet.

Ein weiterer Gegenstand der Erfindung ist eine thermoplastische Formmasse, die zusätzlich mindestens ein weiteres thermoplastischen Polymere (TP), ausgewählt aus der Gruppe der Polycarbonate, Polyestercarbonate, Polyester und Polyamide enthält. Auch die Verwendung einer thermoplastischen Formmasse zur Herstellung von Formteilen und die Formkörper selbst, hergestellt aus einer thermoplastischen Formmasse, sind Gegenstand der Erfindung.

Die erfindungsgemäßen ABS-Copolymere können auch z.B. mit weiteren thermoplastischen Polymeren (TP) gemischt werden. Dabei kommen insbesondere teilkristalline Polyamide, teilaromatische Copolyamide, Polyester, Polyoxyalkylen, Polyarylensulfide, Polyetherketone, Polyvinylchloride und/oder Polycarbonate in Frage.

Die geeigneten Polycarbonate bzw. Polyestercarbonate können linear oder verzweigt sein. Verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten. Die Polycarbonate bzw. Polyestercarbonate können aromatisch gebundenes Halogen, vorzugsweise Brom und/oder Chlor enthalten. Vorzugsweise sind sie jedoch halogenfrei. Sie haben mittlere Molekulargewichte ($M_w$, Gewichtsmittel; bestimmt z.B. durch Ultrazentrifugation oder Streulichtmessung) von 10 000 bis 200 000, vorzugsweise von 20 000 bis 80 000.

Geeignete thermoplastische Polyester sind vorzugsweise Polyalkylenterephthalate, d.h. Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (siehe Kunststoff-Handbuch, Band VIII. S. 695 ff, Carl Hanser Verlag, München 1973). In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste. Die Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten (siehe z.B. DE 2 407 647, DE 2 407 776 sowie DE 2715 932). Die Polyalkylenterephthalate können durch Einbau relativ kleiner Mengen 3-oder 4-wertiger Alkohole oder 3- oder 4-basiger Carbonsäuren, wie sie in DE 1 900 270 und der US 3,692,744 beschrieben sind, verzweigt werden.

Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden. Bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate. Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykokbutandiol-1,4)-terephthalate.

Geeignete Polyamide sind bekannte Homopolyamide, Copolyamide und Mischungen dieser Polyamide. Es können teilkristalline und/oder amorphe Polyamide sein. Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylhexamethylendiamin und/oder 2,2.4-Trimethylhexamethylendiamin und/oder Isophorondiamin besteht und deren Zusammensetzung bekannt ist. Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskömponenten, hergestellt werden.

Als amorphe Polyamide können bekannte Produkte eingesetzt werden, die erhalten werden durch Polykondensation von Diaminen wie Ethylendiamin, Hexamethylendiamin, Decamethylendiamin, 2,2,4- und/oder2,4,4-Trimethylhexamethylendiamin, m- und/oder p-Xylylendiamin, Bis-(4-aminocyclohexyl)-methan, Bis-(4-amino-cyclohexyl)-propan, 3,3'-Di-methyl-4,4'-diaminodicyclohexylmethan, 3-Amino-methyl,3,5,5-trimethylcyclohexylamin, 2,5- und/oder 2,6-Bis-(aminomethyl)-norbornan und/oder 1,4-Diaminomethylcyclohexan mit Dicarbonsäuren wie Oxal-säure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomere erhalten werden, sind geeignet, ferner Copolymere, die unter Zusatz von Aminocarbonsäuren wie $\varepsilon$-Aminocapronsäure, $\omega$-Aminoundecansäure oder $\omega$-Aminotaurinsäure oder ihren Lactamen, hergestellt werden. Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Tri-methylhexamethylendiamin, 2,5- und/oder 2,6-Bis-(aminomethyl)-norbornen; oder aus Isophthalsäure. 4.4'-Diaminodicyclohexylmethan und $\varepsilon$-Caprolactam; oder aus Isophthalsäure, 3,3'-Dimethyl-4,4'-diaminodicyclohexylmethan und Laurinlactam; oder aus Terephthalsäure und dem Isomerengemisch aus 2,2,4- und/oder 2,4,4-Trimethylhexamethylendiamin.

Falls zusätzlich mindestens ein Polymer, ausgewählt aus der Gruppe der Pölycarbonate, Polyester, Polyestercarbonate und Polyamide verwendet wird, beträgt dessen Menge bis zu 500 Gew.-Teile, vorzugsweise bis zu 400 Gew.-Teile und besonders bevorzugt bis zu 300 Gew.-Teile (jeweils bezogen auf 100 Gew.-Teile Polymer-Matrix A + Pfropfcopolymer B). Es können aber auch Mischungen aus zwei oder mehreren der genannten Polymere eingesetzt werden. Die erfindungsgemäßen thermoplastischen Formmassen können, bezogen auf die ABS-Komponenten 0 bis 90 Gew.-%, bevorzugt 0 bis 50 Gew.-%, insbesondere bevorzugt 0 bis 20 Gew.-% der oben genannten Polymere enthalten.

Als Komponente können die erfindungsgemäßen thermoplastischen Formmassen ferner auch 0 bis 50 Gew.-%, vorzugsweise 0 bis 40 Gew.-%, insbesondere 0 bis 30 Gew.-% an faser- oder teilchenförmigen Füllstoffen (F) oder deren Mischungen enthalten, jeweils bezogen auf die Menge der Komponenten A plus B. Beispielsweise können als Füll- oder Verstärkungsstoffe Glasfasern, die mit einer Schlichte und einem Haftvermittler ausgerüstet sein können, Glaskugeln, Mineralfasern, Aluminiumoxidfasern, Glimmer, Quarzmehl oder Wollastonit zugesetzt werden. Außerdem können Metallflocken, Metallpulver, Metallfasern, metallbeschichtete Füttstoffe, z.B. nickelbeschichtete Glasfasern sowie andere Zuschlagstoffe, die elektromagnetische Wellen abschirmen, den erfindungsgemäßen Formmassen beigemischt werden. Zusätzlich können Kohlenstofffasern, Ruß, insbesondere Leitfähigkeitsruß oder nickelbeschichtete C-Fasern zugesetzt werden.

Den erfindungsgemäßen ABS-Formmassen können als Hilfs- und Verarbeitungszusatzstoffe verschiedene Additive (D) in Mengen von 0 bis 10 Gew.-%, bevorzugt 0 bis 5 Gew.-%, insbesondere 0 bis 4 Gew.-% zugesetzt werden. Als Zusatzstoffe (D) kommen alle solche Substanzen in Betracht, die üblicherweise zur Verarbeitung oder Ausrüstung der Polymere zum Einsatz kommen.

Genannt seien beispielsweise Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit; Mittel gegen die Wärmezersetzung und insbesondere Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Hinsichtlich weiterer üblicher Hilfs- und Zusatzstoffe wird z.B. auf "Plastics Additives Handbook", Ed. Gächter und Müller, 4th edition, Hanser Publ., Munich, 1996, verwiesen.

Geeignete Pigmente sind beispielsweise Titandioxid, Phthalocyanine, Ultramarinblau, Eisenoxide oder Ruß, sowie die gesamte Klasse der organischen Pigmente.

Geeignete Färbemittel sind z.B. alle Farbstoffe, die zur transparenten, halbtransparenten oder nichttransparenten Einfärbung von Polymeren verwendet werden können, insbesondere solche, die zur Einfärbung von Styrolcopolymeren geeignet sind.

Als geeignete Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien sind z.B. sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können.

Ferner kommen Hydrochinone und Hydrochinon-analoge, substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, z.B. Irganox. Zusammen mit den zuvor beispielhaft genannten phenolischen Antioxidantien können sogenannte Co-Stabilisatoren mitverwendet werden, insbesondere Phosphor- oder Schwefelhaltige Co-Stabilisatoren. Solche P-oder S-haltigen Co-Stabilisatoren sind dem Fachmann bekannt.

Geeignete Stabilisatoren gegen Lichteinwirkung sind z.B. verschiedene substituierte Resorcine, Salicylate, Benzotriazole und Benzophenone. Als Mattierungsmittel kommen sowohl anorganische Stoffe wie Talkum, Glaskugeln oder Metallcarbonate (wie z.B. $MgCO_3$, $CaCO_3$) in Betracht, als auch Polymerpartikel - insbesondere sphärische Partikel mit Durchmessern $d_{50}$ (Gewichtsmittel) über 1 mm - auf Basis von z.B. Methylmethacrylat, Styrolverbindungen, Acrylnitril oder deren Mischungen. Ferner kann man auch Polymere verwenden, die saure und/oder basische Monomere einpolymerisiert enthalten.

Geeignete Anti-Tropfmittel sind beispielsweise Polytetrafluorethylen (Teflon)-Polymere und ultrahochmolekulares Polystyrol (Molmasse $M_w$ über 2 000 000).

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein.

Die Einarbeitung der Glasfasern kann sowohl in Form von Kurzglasfasern als auch in Form von Endlossträngen (Rovings) erfolgen.

Als teilchenförmige Füllstoffe eignen sich z.B. Ruß, amorphe Kieselsäure, Magnesiumcarbonat, gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester, Copolymere aus Ethylenoxidglycol und Propylenoxidglycol (insbesondere Zweiblock- oder Dreiblockcopolymere aus Ethylenoxid- und Propylenoxid-Blöcken) und Glycerinmono- und -distearate, sowie deren Mischungen.

Geeignete Stabilisatoren sind beispielsweise gehinderte Phenole, aber auch Vitamin E bzw. analog dazu aufgebaute Verbindungen, wie auch butylierte Kondensationsprodukte von p-Kresol und Dicyclopentadien. Auch HALS-Stabilisatoren (Hindered Amine Light Stabilizers), Benzophenone, Resorcine, Salicylate, Benzotriazole sind geeignet. Andere geeignete Verbindungen sind zum Beispiel Thiocarbonsäureester. Einsetzbar sind auch $C_6$-$C_{20}$-Alkylester der Thiopropionsäure, besonders die Stearylester und Laurylester. Man kann auch Thiodipropionsäuredilaurylester (Dilaurylthiodipropionat), Thiodipropionsäuredisterarylester (Distearylthiodipropionat) oder deren Mischungen verwenden. Weitere Additive sind beispielsweise HALS-Absorber, wie Bis(2,2,6,6-tetramethyl-4-piperidyl)sebazat oder UV-Absorber wie 2H-Benzotriazol-2-yl-(4-methylphenol). Derartige Additive werden üblicherweise in Mengen von 0,01 bis zu 2 Gew.-% (bezogen auf das Gesamtgemisch) verwendet.

Geeignete Gleit- und Entformungsmittel sind Stearinsäuren, Stearylalkohol, Stearinsäureester, Amidwachse (Bisstearylamid),Polyolefinwachse bzw. allgemein höhere Fettsäuren, deren Derivate und entsprechende Fettsäuregemische mit 12 bis 30 Kohlenstoffatomen. Auch Ethylen-bis-stearamid (z. B. Irgawax, Hersteller Ciba, Schweiz) ist besonders geeignet. Die Mengen dieser Zusätze liegen im Bereich von 0,05 bis 5 Gew.-%.

Auch Silikonöle, oligomeres Isobutylen oder ähnliche Stoffe kommen als Zusatzstoffe in Betracht. Die üblichen Mengen, falls verwendet, betragen von 0,001 bis 3 Gew.-%. Auch Pigmente, Farbstoffe, Farbaufheller, wie Ultramarinblau, Phthalocyanine, Titandioxid, Cadmiumsulfide; Derivate der Perylentetracarbonsäure sind verwendbar. Verarbeitungshilfsmittel und Stabilisatoren wie UV-Stabilisatoren, Wärmestabilisatoren (z.B. butylierte Reaktionsprodukte von p-Cresol und Dicyclopentadien; Wingstay L; Hersteller: Goodyear; oder aber Thiodipropionsäuredilaurylester, Irganox, Hersteller: Ciba), Schmiermittel und Antistatika (z.B. Ethylenoxid-Propylenoxid-Copolymere wie Pluronic (Hersteller: BASF) werden, falls eingesetzt, üblicherweise in Mengen von 0,01 bis 5 Gew.-% verwendet, bezogen auf die gesamte Formmasse.

Die einzelnen Zusatzstoffe werden in der Regel in den jeweils üblichen Mengen verwendet. Das Mischen der Pfropfpolymerisate mit den anderen Bestandteilen zu den Formmassen kann nach jeder beliebigen Weise nach allen bekannten Methoden erfolgen. Vorzugsweise erfolgt jedoch das Abmischen der Komponenten durch gemeinsames Extrudieren, Kneten oder Verwalzen der Komponenten, z.B. bei Temperaturen im Bereich von 180 bis 400°C, wobei die Komponenten, sofern erforderlich, zuvor aus der bei der Polymerisation erhaltenen Lösung oder wässrigen Dispersion isoliert werden. Die in wässriger Dispersion erhaltenen Produkte der Pfropfcopolymerisation können z.B mit Magnesiumsulfat ausgefällt werden. Sie können vorzugsweise nur teilweise entwässert werden und als feuchte Krümel (beispielsweise mit einer Restfeuchte von 1 bis 40 %, insbesondere 20 bis 40 %) mit den Matrix-Polymeren vermischt werden, wobei dann während des Vermischens die vollständige Trocknung der Pfropfcopolymerisate erfolgt. Die Trocknung der Partikel kann auch gemäß DE-A 19907136 erfolgen.

Die Herstellung der erfindungsgemäßen Formmassen aus den Komponenten A und B (und gewünschtenfalls den weiteren Polymeren, den Füllstoffen (F) sowie üblichen Zusatzstoffen (D)) kann nach allen bekannten Methoden erfolgen. Vorzugsweise erfolgt jedoch das Abmischen der Komponenten durch Schmelzevermischung, beispielsweise gemeinsames Extrudieren, Kneten oder Verwalzen der Komponenten. Dies wird bei Temperaturen im Bereich von 160 bis 400°C, bevorzugt von 180 bis 280°C durchgeführt. In einer bevorzugten Ausführungsform wird die Komponente (B) zuvor aus der bei den jeweiligen Herstellungsschritten erhaltenen wässrigen Dispersion teilweise oder vollständig isoliert. Beispielsweise können die Pfropfcopolymerisate B als feuchte oder trockene Krümel/Pulver mit einem Granulat der thermoplastischen Copolymer-Matrix A im Extruder vermischt werden.

Ein weiterer Gegenstand der Erfindung ist die Verwendung der beschriebenen Formmassen zur Herstellung von Formteilen wie Platten oder Halbzeugen, Folien, Fasern oder auch von Schäumen sowie die entsprechenden Formteile wie Platten, Halbzeuge, Folien, Fasern oder Schäume.

Die Verarbeitung kann mittels der bekannten Verfahren der Thermoplastverarbeitung durchgeführt werden, insbesondere kann die Herstellung durch Thermoformen, Extrudieren, Spritzgießen, Kalandrieren, Hohlkörperblasen, Pressen, Press-sintern, Tiefziehen oder Sintern, vorzugsweise durch Spritzgießen erfolgen.

Es wurde für die erfindungsgemäßen Formmassen eine gegenüber den herkömmlichen ABS-Polymeren verbessertes Herstellverfahren gefunden. Dabei ist zum einen der Schritt der Agglomeration durch Anwendung einer effizienteren Komponente (C) verbessert, aber auch das Verfahren der Redox-initiierten Pfropfcopolymerisation optimiert. Die ABS-Formmassen weisen eine besondere Beständigkeit, eine gute Einfärbbarkeit, eine geringe Eigenfarbe sowie hervorragende mechanische Eigenschaften wie Zähigkeit, Steifigkeit auf.

Des Weiteren wurde für die erfindungsgemäßen Formmassen überraschenderweise ein verbesserter Oberflächenglanz, eine ausgezeichnete Kälte-Zähigkeit und eine verbesserte Fließfähigkeit gefunden.

Die Polymere weisen einen optimierten Vernetzungszustand der Polymerpartikel auf, was sich auch an den Relaxationszeiten (T2) erkennen läßt. Eine Methode zur Charakterisierung des Vernetzungszustandes von vernetzten Polymerteilchen ist die Messung des Quellungsindex (QI), der ein Maß für die Quellbarkeit eines mehr oder weniger stark vernetzten Polymeren durch ein Lösemittel ist. Übliche Quellungsmittel sind beispielsweise Methyl-ethylketon oder Toluol. Üblicherweise liegt der Quellungsindex der erfindungsgemässen Formmassen im Bereich (QI) = 10 bis 60, bevorzugt bei 15 bis 55 und besonders bevorzugt bei 20 bis 50. Ein weiteres Maß für die Charakterisierung der in den ABS-Formmassen eingesetzten Pfropfgrundlage und deren Vernetzungszustand ist der Gelgehalt, d. h. derjenige Produktanteil, der vernetzt und damit in einem bestimmten Lösemittel nichtlöslich ist.

Der Gelgehalt wird vorzugsweise im gleichen Lösemittel wie der Quellungsindex bestimmt. Übliche Gelgehalte der eingesetzten Pfropfgrundlagen liegen im Bereich 50 bis 90 %, bevorzugt 55 bis 90% und besonders bevorzugt 60 bis 85%.

Die Bestimmung des Quellungsindex geschieht beispielsweise nach einem Verfahren, bei dem ca. 0,2 g des Feststoffes einer durch Verdampfen des Wassers verfilmten Pfropfgrundlagen-Dispersion in einer Menge von z.B. 50 g Toluol gequollen werden. Nach z.B. 24 Stunden wird das Toluol abgesaugt und die Probe ausgewogen. Nach dem Trocknen der Probe im Vakuum wird diese erneut ausgewogen. Der Quellungsindex ist dann das Verhältnis der Auswaage nach dem Quellungsvorgang zu der Auswaage trocken nach der erneuten Trocknung.

Dementsprechend errechnet sich der Gelanteil aus dem Verhältnis der Trockenauswaage nach dem Quellschritt zur Einwaage vor dem Quellschritt (x 100%).

Nachfolgend werden die zur Charakterisierung der Polymere eingesetzten Untersuchungsmethoden kurz zusammengefasst:

a) Charpy-Kerbschlagzähigkeit (ak) [kJ/m$^2$]:

Die Kerbschlagzähigkeit wird ermittelt an Probekörpern (80 x 10 x 4 mm, hergestellt nach ISO 294 in einem Familienwerkzeug, bei einer Massetemperatur von 250°C und einer Werkzeugtemperatur von 60°C), bei 23°C bzw. -40°C nach ISO 179-2/1 eA (F):

b) Durchstoß (multi-axiale Zähigkeit) [Nm]:

Der Durchstoß wird ermittelt an Plättchen (60 x 60 x 2 mm, hergestellt nach ISO 294 in einem Familienwerkzeug, bei einer Massetemperatur von 240°C und einer Werkzeugtemperatur von 50°C), nach ISO 6603-2.

c) Fließfähigkeit (MVR[ml/10']):

Die Fließfähigkeit wird ermittelt an einer Polymerschmelze bei 220°C und 10 kg Belastung nach ISO 1133 B.

d) Elastizität (E-Modul [MPa]):

Die Elastizität wird an Prüfkörpern (hergestellt nach ISO 294 bei einer Mässetemperatur von 250°C und einer Werkzeugtemperatur von 60°C) geprüft nach ISO 527-2/1A/50.

e) Koagulatmenge:

Es wird die Menge an Koagulat bezogen auf den Pfropfkautschuk nach Filtration über ein Sieb mit einer Maschenweite von ca. 1 mm bestimmt, welches 17 Stunden bei 80°C und unter Stickstoff (200 mbar) getrocknet wurde:

f) Teilchengröße:

Bei der Angabe der mittleren Teilchengröße (d) handelt es sich um das Gewichtsmittel der Teilchengröße, wie sie mittels einer analytischen Ultrazentrifuge entsprechend der Methode von W. Mächtle, S. Harding (Hrg.), Analytische Ultrazentrifuge (AUC) in Biochemistry and Polymer Science, Royal Society of Chemistry Cambridge, UK 1992, S. 1447 bis 1475, bestimmt werden kann. Die Ultrazentrifugenmessung liefert die integrale Massenverteilung des Teilchendurchmessers einer Probe. Hieraus lässt sich entnehmen, wie viel Gewichtprozent der Teilchen einen Durchmesser gleich oder kleiner einer bestimmten Größe haben.

Die Bestimmung der Teilchengröße kann auch durch Hydrodynamic Fractionation (HDF) erfolgen. Bei der HDF-Messung erfolgt ein Fluss eines flüssigen Trägermaterials durch eine mit einem polymeren Trägermaterial befüllten Säule. Während kleine Partikel, die auch in kleinere Zwischenräume passen, mit einer geringen Fließgeschwindigkeit die Säule durchlaufen, werden Partikel mit größerem Durchmesser schneller transportiert. Am Ende der Säule erfolgt eine Bestimmung der Teilchengröße mittels eines UV-Detektors (bei einer Wellenlänge von 254 nm). Die zu untersuchenden Proben werden vorzugsweise auf eine Konzentration von 0,5 g/l des flüssigen Trägermaterials verdünnt, anschließend einem Filtrationsprozess unterzogen und dann auf die Säule gegeben. Handelsübliche HDF-Geräte werden beispielsweise von dem Hersteller Polymer Laboratories angeboten. Die angegebenen HDF-Werte beziehen sich auf die Volumenverteilung.

Der gewichtsmittlere Teilchendurchmesser $d_{50}$ gibt denjenigen Teilchendurchmesser an, bei dem 50 Gew.-% aller Teilchen einen größeren und 50 Gew.-% einen kleineren Teilchendurchmesser aufweisen.

g) Quellungsindex und Gelgehalt [%]:

Aus der wässrigen Dispersion der Pfropfgrundlage wurde durch Verdampfen des Wassers ein Film hergestellt. 0,2 g dieses Films wurden mit 50 g Toluol versetzt. Nach 24 Stunden wurde das Toluol von der aufgequollenen Probe abgesaugt und die Probe ausgewogen. Nach 16 Stunden Trocknen der Probe im Vakuum bei 110 °C wurde erneut ausgewogen.

Es wurden berechnet:

$$Quellungindex\ QI = \frac{Masse\ der\ aufgequollenen,\ abgesaugten\ Probe}{Masse\ der\ im\ Vakuum\ getrockneten\ Probe}$$

$$Gelgehalt = \frac{Masse\ der\ im\ Vakuum\ getrockneten\ Probe}{Einwaage\ der\ Probe\ vor\ der\ Quellung} \bullet 100\%$$

h) Viskosität

Die Viskositätszahl ($V_Z$) wird nach DIN 53726 an einer 0,5 %igen Lösung des Polymers in DMF bestimmt.

i) Glanzverhalten (Gloss Sensitivity)

Zur Bestimmung des Glanzverhaltens werden mittels einer Spritzgussmaschine rechteckige Plättchen mit den Abmessungen 40 mm x 60 mm x 2 mm aus der Polymerschmelze hergestellt. Dabei kommen Temperaturen von 230, 255 und 280°C zur Anwendung. Die Formtemperatur beträgt 30°C, die Einspritzzeiten 0,1 bis 0,5 Sekunden. Der Glanz wird durch Reflektionsmessung nach der Norm ISO 2813 bei einem Winkel von 45° jeweils an zehn Testplättchen bestimmt, wobei ein Messgerät des Herstellers BYK Mikroglas zur Anwendung kommt.

j) Vernetzungszustand

Eine Methode zur Charakterisierung des Vernetzungszustandes von Polymeren ist die Messung von NMR-Relaxationszeiten der beweglichen Protonen, die sog. $T_2$-Zeiten. Je stärker vernetzt ein bestimmtes Polymer ist, desto niedriger liegen seine $T_2$-Zeiten.

Übliche $T_2$-Zeiten für die erfindungsgemäßen Pfropfgrundlagen sind $T_2$-Zeiten im Bereich 1 bis 50 ms, bevorzugt 2,5 bis 40 ms und besonders bevorzugt 2,5 bis 30 ms, jeweils gemessen an verfilmten Proben bei 80°C.

Die Bestimmung der $T_2$-Zeit geschieht durch Messen der NMR-Relaxation einer entwässerten und verfilmten Probe der Pfropfgrundlagendispersion. Hierzu wird beispielsweise die Probe nach Ablüften über Nacht im Vakuum getrocknet und dann mit einem geeigneten Meßgerät vermessen. Vergleichbar sind nur Proben, die nach der gleichen Methode vermessen wurden, da die Relaxation stark temperaturabhängig ist. Die bei einer Protonenresonanzfrequenz von 20 MHz und einer Temperatur von 140°C gemessene effektive transversale Relaxationszeit der Materialien liegt im Bereich zwischen 1 und 50 ms. Zur Bestimmung der Relaxationszeiten wird eine aus einem Festkörperecho und mehreren Spinecho-Messungen zusammengesetzte Magnetisierungsabfallkurve benutzt. Als effektive Relaxationszeit wird die Zeit angesetzt, nach der die Magnetisierungsabfallkurve auf einen Faktor 1/e gegenüber der mittels des FestkörperEchos bestimmten Ausgangsamplitude abgefallen ist.

Die Erfindung wird durch die nachfolgenden Beispiele näher erläutert:

Beispiel 1: Allgemeine Herstellung der Copolymer-Matrix A

Durch Lösungspolymerisation z.B. in einem organischen Lösungsmittel wie Toluol oder Ethylbenzol können verschiedene Ausführungsformen der Copolymer-Matrix A hergestellt werden. Dabei kann nach einem Verfahren, wie es beispielsweise im KunststoffHandbuch, Vieweg-Daumiller, Band V, (Polystyrol), Carl-Hanser-Verlag, München 1969, Seiten 122 f., Zeilen 12 ff. allgemein beschrieben ist, gearbeitet werden. Auch ist es möglich, eine Matrix als Mischung zweier (oder mehrerer) Matrices herzustellen.

1a) Die Copolymer-Matrix (A-1) kann in einem konkreten Beispiel ausgehend von 76 Gew.-% Styrol und 24 Gew.-% Acrylnitril bei einer Temperatur von 150 bis 180°C und einem Lösungsmittelanteil von 10,5 bis 20,5 Gew.-% ohne Einsatz eines Initiators mit einer Viskosität $V_Z$ von 65 ml/g hergestellt werden.

1b) Alternativ kann eine Copolymer-Matrix (A-2) hergestellt werden ausgehend von den gleichen Monomermengen, jedoch mit einer Viskosität $V_Z$ von 75 ml/g.

1c) Alternativ kann die Copolymer-Matrix (A-3) ausgehend von 73 Gew.-% Styrol und 27 Gew.-% Acrylnitril hergestellt werden. Diese Copolymer-Matrix (A-3) hat eine Viskosität $V_Z$ von 65 ml/g.

1d) Alternativ kann eine Copolymer-Matrix ausgehend von 73 Gew.-% Styrol und 27 Gew.-% Acrylnitril (A-4) hergestellt werden, die eine Viskosität $V_Z$ von 70 ml/g hat.

1e) Ausgehend von ebenfalls 73 Gew.-% Styrol und 27 Gew.% Acrylnitril lässt sich eine Copolymer-Matrix (A-5) herstellen, die eine Viskosität $V_Z$ von 75 ml/g hat.

1f) Alternativ lässt sich eine Copolymer-Matrix (A-6) ausgehend von 73 Gew.-% Styrol und 27 Gew.-% Acrylnitril herstellen, wobei diese Copolymer-Matrix (A-6) eine Viskosität $V_Z$ von 85 ml/g hat.

1g) Alternativ lässt sich eine Copolymer-Matrix (A-7) ausgehend von 72 Gew.-% Styrol und 28 Gew.% Acrylnitril herstellen, wobei diese Copolymer-Matrix eine Viskosität $V_Z$ von 80 ml/g hat.

1h) Alternativ lässt sich eine Copolymer-Matrix (A-8) ausgehend von 72 Gew.-% Styrol und 28 Gew.-% Acrylnitril herstellen, wobei diese Copolymer-Matrix eine Viskosität $V_Z$ von 60 ml/g hat.

1i) Alternativ lässt sich eine Copolymer-Matrix (A-9) ausgehend von 72 Gew.-% Styrol und 28 Gew.-% Acrylnitril herstellen, wobei diese Copolymer-Matrix eine Viskosität von 80 ml/g hat.

1j) Alternativ lässt sich eine Copolymer-Matrix (A-10) als Mischung ausgehend von 34 Gew.-% der Matrix (A-1) und 66 Gew.-% der Matrix (A-7) herstellen.

1k) Alternativ lässt sich eine Copolymer-Matrix (A-11) als Mischung ausgehend von 50 Gew.-% der Matrix (A-3) und 50 Gew.-% der Matrix (A-9) herstellen.

1l) Alternativ lässt sich eine Copolymer-Matrix (A-12) als Mischung ausgehend von 75 Gew.-% der Matrix (A-3) und 25 Gew.-% der Matrix (A-9) herstellen.

Beispiel 2: Allgemeine Herstellung des Kautschuklatexes (B1)

Allgemeine Beschreibung eines möglichen Herstellungsverfahrens:
Ausgehend von 0 bis 10 Gew.-% Styrol (B11) und 90 bis 100 Gew.-% Butadien (B12) kann die Herstellung des Kautschuklatex (B1) im Allgemeinen durch folgende Schritte erfolgen:

a) Vorlage von Wasser, 0,1 bis 0,6 Gew.-%, bezogen auf (B1), Kaliumperoxodisulfat (KPS) als Initiator, einem Bicarbonat-Puffer und 0,1 bis 1,0 Gew.-%, bezogen auf (B1), Kaliumstearat als Seife;
b) Zulauf (Z1) der gesamten Menge an Styrol, gegebenenfalls gleichzeitig mit bis zu 10 Gew.% der Gesamtmenge an Butadien, innerhalb von 10 bis 30 Minuten (ggf. inklusive einer Wartezeit), wobei die Geschwindigkeit des Zulaufs gleichmäßig sein oder variiert werden kann; anschließend
c) Zulauf (Z2) von bis zu 35 Gew.-% der Gesamtmenge an Butadien innerhalb von 1 bis zu 45 Minuten, wobei die Geschwindigkeit des Zulaufs gleichmäßig sein oder variiert werden kann; nach einer Wartezeit von 1 bis 30 Minuten erfolgt,
d) Zulauf (Z3) der restlichen 65 bis 100 Gew.-% der Gesamtmenge an Butadien, wobei die Geschwindigkeit des Zulaufs gleichmäßig sein oder variiert werden kann.

Die Geschwindigkeit des Zulaufs von (Z1), (Z2) und (Z3) kann gleich oder unterschiedlich sein. Die Polymerisation der wässrigen Emulsion erfolgt bei etwa 67°C, wobei die Temperatur bis zu 80°C gesteigert werden kann. Die Reaktion erfolgt bis zu einem Monomerumsatz von mindestens 90 %. Als Molekulargewichtsregler wird z.B. tert.-Dodecylmercaptan (TDM) eingesetzt und in vorzugsweise drei bis fünf Portionen zugegeben. Es entstehen dabei in der Regel Kautschukpartikel mit folgenden Kenngrößen:

Teilchengrößenverteilung:

$d_{50}$ (Gewichtsmittel, Ultrazentrifuge) 90 +/- 25 nm,
$d_{50}$ (Zahlenmittel, Ultrazentrifuge) 80 +/- 25 nm;

Quellungsindex : (QI) von 25 bis 75 (gemessen in Toluol);

Gelgehalt: 65 ± 20%.

Beispiel 2.1 Herstellungsverfahren für Kautschuklatex (B1-1) bei 67°C

In dem nachfolgend aufgeführten konkreten Beispiel werden in einem 150 I-Reaktor bei einer konstanten Reaktionstemperatur von 67°C die Monomeren in einer Emulsionspolymerisation umgesetzt. Dazu werden 43,12 kg einer Monomermischung enthaltend 93 Gew.-% Butadien und 7 Gew.-% Styrol in Gegenwart von 1 Gew.-% an tertiär-Dodecylmercaptan (TDM) sowie 311 g des Kaliumsalzes einer $C_{20}$-Fettsäure, 82 g Kaliumpersulfat, 147 g Natriumhydrogencarbonat und 58,4 kg Wasser umgesetzt. Dabei wird zunächst Styrol während eines Zeitraums von 20 Minuten eingespeist. Nach der Zugabe des Styrols wird eine erste Menge an Butadien in einem Zeitraum von 25 Minuten zugegeben, wobei diese Butadienmenge gerade 10 % der Gesamtmonomermenge entspricht. Der verbleibende Anteil des Butadiens wird dann in einem Zeitraum von 8,5 Stunden zugegeben. Das TDM wird in einer einmaligen Zugabe am Anfang der Reaktion oder vorzugsweise in mehreren (z.B. in 3) Portionen beigefügt. Die Nachpolymerisationszeit beträgt 4 Stunden.

Der Umsetzungsgrad bei der Herstellung des Kautschuklatex (B1-1) beträgt 95 % oder mehr. Der Kautschuk weist einen Quellungsindex (QI) gleich 25 auf. Die Teilchengrößenverteilung (Gewichtsmittel) beträgt d50 gleich 80 nm. Es wird eine $T_2$-Zeit von 5,4 ms gemessen.

Beispiel 2.2 Herstellungsverfahren für den Kautschuklatex (B1-2) bei 70°C

In einem 150 I-Reaktor wird bei einer konstanten Temperatur von 70°C die Emulsionspolymerisation durchgeführt. Dazu werden 43,12 kg einer Monomermischung aus 96 Gew.% Butadien und 4 Gew.-% Styrol bei einer Temperatur von 70°C in Gegenwart von 1,39 Gew.-% TDM, 311 g eines Kaliumsalzes einer $C_{20}$-Fettsäure, 82 g Kaliumpersulfat, 147 g Natriumhydrogencarbonat und 58,4 kg Wasser umgesetzt. Dabei wird zunächst während eines Zeitraums von 15 Minuten Styrol und Butadien (entsprechend 7 Gew.-% der Gesamtmonomermenge) gleichzeitig zugegeben. Nach 15 Minuten Wartezeit wird eine zweite Teilmenge des Butadiens (entsprechend 10 Gew.-% der Gesamtmonomermenge) über einen Zeitraum von 25 Minuten zugegeben. Die restliche Menge an Butadien wird dann während eines Zeitraums von 7,5 Stunden zugeführt. Die genannte Menge von 1,39 Gew. % an TDM wird in vier Portionen zugeführt, wobei eine erste Portion von 0,1 Gew.-% TDM nach Ende von Zulauf 1 zugesetzt werden, die letzte Portion 8 Stunden nach Beginn von Zulauf 1.

Es erfolgt vorzugsweise eine Nachpolymerisation für zwei Stunden. Der Umsetzungsgrad der Monomeren bei der Herstellung des Kautschuklatex (B1-2) beträgt 95 % oder mehr. Der Kautschuk weist einen Quellungsindex von (QI) gleich 55 auf. Die Teilchengrößenverteilung (Gewichtsmittel) beträgt d50 gleich 90 nm. Es wird eine $T_2$-Zeit von 13 ms gemessen.

Beispiel 2.3 Herstellungsverfahren für den Kautschuklatex (B1-3) bei 70°C

In einem 150 I-Reaktor wird bei einer konstanten Temperatur von 71°C die Emulsionspolymerisation durchgeführt. Dazu werden 43,12 kg einer Monomermischung aus 96 Gew.-% Butadien und 4 Gew.-% Styrol bei einer Temperatur von 70°C in Gegenwart von 1,5 Gew.-% TDM, 311 g eines Kaliumsalzes einer $C_{20}$-Fettsäure, 82 g Kaliumpersulfat, 147 g Natriumhydrogencarbonat und 58,4 kg Wasser umgesetzt. Dabei wird zunächst während eines Zeitraums von 15 Minuten Styrol und Butadien (entsprechend 7 Gew.% der Gesamtmonomermenge) gleichzeitig zugegeben. Nach 15 Minuten Wartezeit wird eine zweite Teilmenge des Butadiens (entsprechend 10 Gew.-% der Gesamtmonomermenge) über einen Zeitraum von 25 Minuten zugegeben. Die restliche Menge an Butadien wird dann während eines Zeitraums von 7,5 Stunden zugeführt. Die genannte Menge von 1,5 Gew. % an TDM wird in vier Portionen zugeführt (davon 0,9 Gew.-% nach Ende von Zulauf 1). Es erfolgt vorzugsweise eine Nachpolymerisation für 4 Stunden.

Der Umsetzungsgrad der Monomeren bei der Herstellung des Kautschuklatex (B1-3) beträgt 95 % oder mehr. Der Kautschuk weist einen Quellungsindex von (QI) gleich 40 auf. Die Teilchengrößenverteilung (Gewichtsmittel) beträgt d50 gleich 90 nm.

Es wird eine $T_2$-Zeit von 9 ms gemessen.

Beispiel 2.4 Herstellungsverfahren für den Kautschuklatex (B1-4) bei 70°C

In einem 150 I-Reaktor wird bei einer konstanten Temperatur von 70°C die Emulsionspolymerisation durchgeführt. Dazu werden 43,12 kg einer Monomermischung aus 96 Gew.-% Butadien und 4 Gew.-% Styrol bei einer Temperatur von 70°C in Gegenwart von 1,1 Gew.% TDM, 311 g eines Kaliumsalzes einer $C_{20}$-Fettsäure, 82 g Kaliumpersulfat, 147 g Natriumhydrogencarbonat und 58,4 kg Wasser umgesetzt. Dabei wird zunächst während eines Zeitraums von 15 Minuten Styrol und Butadien (entsprechend 7 Gew.-% der Gesamtmonomermenge) gleichzeitig zugegeben. Nach 15 Minuten Wartezeit wird eine zweite Teilmenge des Butadiens (entsprechend 10 Gew.-% der Gesamtmonomermenge) über einen Zeitraum von 25 Minuten zugegeben. Die restliche Menge an Butadien wird dann während eines Zeitraums von 7,5 Stunden zugeführt. Die genannte Menge von 1,1 Gew.-% an TDM wird in vier Portionen zugeführt (davon 0,1 Gew.-% nach Ende von Zulauf 1). Es erfolgt vorzugsweise eine Nachpolymerisation für zwei Stunden.

Der Umsetzungsgrad der Monomeren bei der Herstellung des Kautschuklatex (B1-4) beträgt 95 % oder mehr. Der Kautschuk weist einen Quellungsindex von (QI) gleich 45 auf. Die Teilchengrößenverteilung (Gewichtsmittel) beträgt d50 gleich 90 nm.

Es wird eine $T_2$-Zeit von 10 ms gemessen.

Beispiel 2.5 Herstellungsverfahren für den Kautschuklatex (B1-5) bei 70°C

In einem 150 I-Reaktor wird bei einer konstanten Temperatur von 70°C die Emulsionspolymerisation durchgeführt. Dazu werden 43,12 kg der Monomere Styrol und Butadien sequenziell zugegeben. Zunächst werden während 7,5 Minuten Styrol zugesetzt (Menge entsprechend 3,5 Gew.-% der Gesamtmonomermenge), danach werden während 7,5 Minuten Butadien zugesetzt (Menge entsprechend 3,5 Gew.% der Gesamtmonomermenge). Die Gesamtmenge an Monomeren entspricht 96 Gew.-% Butadien und 4 Gew.-% Styrol. Die Reaktion erfolgt bei einer Temperatur von 70°C in Gegenwart von 1,1 Gew.-% TDM, 311 g eines Kaliumsalzes einer $C_{20}$-Fettsäure, 82 g Kaliumpersulfat, 147 g Natriumhydrogencarbonat und 58,4 kg Wasser. Dabei wird zunächst während eines Zeitraums von 7,5 Minuten Styrol und dann für 7,5 Minuten Butadien (entsprechend insgesamt 7 Gew.-% der Gesamtmonomermenge) zugegeben. Nach 15 Minuten Wartezeit wird eine zweite Teilmenge des Butadiens (entsprechend 10 Gew.-% der Gesamtmonomermenge) über einen Zeitraum von 25 Minuten zugegeben. Die restliche Menge an Butadien wird dann während eines Zeitraums von 7,5 Stunden zugeführt. Die genannte Menge von 1,1 Gew.-% an TDM wird in vier Portionen zugeführt (0,11 Gew.-% nach Ende von Zulauf 1; 0,33 Gew.-% nach Ende von Zulauf 2; 0,33 Gew.-% 3 Stunden nach Beginn von Zulauf 1 und 0,33 Gew.-% 8 Stunden nach Beginn von Zulauf 1). Es erfolgt vorzugsweise eine Nachpolymerisation für zwei Stunden.

Der Umsetzungsgrad der Monomeren bei der Herstellung des Kautschuklatex (B1-5) beträgt 95 % oder mehr. Der Kautschuk weist einen Quellungsindex von (QI) gleich 40 auf. Die Teilchengrößenverteilung (Gewichtsmittel) beträgt d50 gleich 90 nm.

Es wird eine $T_2$-Zeit von 10 ms gemessen.

Beispiel 2.6 Herstellungsverfahren für den Kautschuklatex_(B1-6) bei 67°C

In dem nachfolgend aufgeführten Beispiel werden in einem 150 I-Reaktor bei einer konstanten Reaktionstemperatur von 67°C die Monomeren in einer Emulsionspolymerisation umgesetzt. Dazu werden 43,12 kg einer Monomermischung enthaltend 93 Gew.-% Butadien und 7 Gew.-% Styrol in Gegenwart von 1,1 Gew.-% an tertiärDodecylmercaptan (TDM) sowie 311 g des Kaliumsalzes einer $C_{20}$-Fettsäure, 82 g Kaliumpersulfat, 147 g Natriumhydrogencarbonat und 58,4 kg Wasser umgesetzt. Dabei wird zunächst Styrol während eines Zeitraums von 20 Minuten eingespeist. Nach der Zugabe des Styrols wird eine erste Menge an Butadien in einem Zeitraum von 25 Minuten zugegeben, wobei diese Butadienmenge gerade 10 % der Gesamtmonomermenge entspricht. Der verbleibende Anteil des Butadiens wird dann in einem Zeitraum von 8,5 Stunden zugegeben. Das TDM wird in einer einmaligen Zugabe am Anfang der Reaktion beigefügt, es erfolgt nur eine kürzere Phase der Nachpolymerisation.

Je nach Länge der Nachpolymerisationsphase (NPP) erhält man drei verschiedene Produkte.

Bei NPP gleich 4 Stunden erhält man einen Kautschuk mit einem Quellungsindex von (QI) gleich 30 (B1-6a) und es wird eine $T_2$-Zeit von 8 ms gemessen.

Bei NPP gleich 180 Minuten erhält man einen Kautschuk mit einem Quellungsindex von (QI) gleich 40 (B1-6b), wobei eine $T_2$-Zeit von 10 ms gemessen wird.

Bei NPP gleich 120 Minuten erhält man einen Kautschuk mit einem Quellungsindex von (QI) gleich 50 (B1-6c) und es wird eine $T_2$-Zeit von 13 ms gemessen.

Der Umsetzungsgrad bei der Herstellung des Kautschuklatex (B1-6) beträgt jeweils 95 % oder mehr. Die Teilchengrößenverteilung (Gewichtsmittel) beträgt d50 etwa 80 nm.

Beispiel 2.7 Herstellungsverfahren für den Kautschuklatex (B1-7) bei 70°C

In dem nachfolgenden Beispiel werden in einem 150 I-Reaktor bei einer Temperatur von 70°C 0,26 kg eines Kaliumsalzes einer C20-Fettsäure und 15 g Natriumhydrogencarbonat zugegeben und ein Polystyrol-Saat-Latex zugeben (mit d50 = 35 nm). Der Feststoffgehalt der Vorlage beträgt danach 0,9%. Anschließend werden 3,38 kg Styrol zugegeben. Danach wird 19 g KPS zugegeben. Danach werden zwei Zuläufe gleichzeitig gestartet. In Zulauf 1 werden innerhalb 9,5 Stunden 136 g Kaliumsalzes einer C20-Fettsäure, 243 g TDM, 44,9 kg Butadien und 15,75 kg Wasser zugegeben.

In Zulauf 2, werden 4,5 kg Wasser und 174 g KPS innerhalb 17 Stunden zugefahren. Zwei Stunden nach Beginn der Zuläufe 1 und 2 erwärmt man auf 75°C und nach 5 Stunden nach Beginn der Umsetzung auf 80° C. Nach dem Ende von Zulauf 1 wird auf 85°C geheizt. 1 Stunde nach dem Ende von Zulauf 2 wird die Temperatur auf 90°C erhöht. Nach dem Ende von Zulauf 2 wird für 6 Stunden nach-polymerisiert. Danach wird der Reaktionskessel entspannt und 1 Stunde bei 90° C unter Vakuum gehalten.

Der Feststoffgehalt am Ende beträgt 46% und der Quellungsindex des Polymers QI ist 30. Die Teilchengrößenverteilung (gemessen mittels Hydrodynamic Fractionation) ist etwa d50 gleich 270 nm (monomodale enge Verteilung). Der T2-Wert beträgt 7 ms.

Beispiel 3 Allgemeine Vorschrift zur Agglomeration der Kautschukpartikel

Die Agglomeration der in Beispiel 2 beschriebenen Kautschukpartikel kann bei einer Temperatur von beispielsweise 70°C erfolgen, wobei für eine vollständige Durchmischung der Komponenten während des Agglomerationsprozesses Sorge zu tragen ist.

Der als Ausgangsmaterial dienende Kautschuklatex aus Beispiel 2.1 hat eine durchschnittliche Teilchengröße $d_{50}$ von 100 nm, einen Quellungsindex von 25 und einen Feststoffgehalt von 40 %.

Die Agglomeration erfolgt durch eine kontinuierliche Zugabe des Agglomerationslatex über einen Zeitraum von 45 Minuten, wobei der Agglomerationslatex eine wässrige Dispersion mit einem Feststoffgehalt von 10 % darstellt. Die Menge an eingesetztem Agglomerationslatex (Feststoff), die einer bestimmten Menge an Kautschuk (als Feststoff) zugesetzt wird, wird üblicherweise als "phr" bezeichnet. Diese für das Gesamtverfahren wichtige Kenngröße bedeutet eine Menge an Agglomerationslatex auf 100 Teile Kautschuk. Beispielsweise bedeutet 1,5 phr das zu 100 g festem Butadien-Kautschuk gerade 1,5 g fester Agglomerationslatex hinzugefügt wird. Nach der vollständigen Hinzuführung des Agglomerationslatex wird die oben beschriebene Mischung für 15 Minuten gerührt. Anschließend wird Kaliumstearat als wässrige Lösung zugefügt.

In den nachfolgend aufgeführten Versuchsbeispielen werden sowohl die für die Kosten des Gesamtherstellungsverfahrens wichtigen Mengen an Agglomerationslatex wie auch die Zusammensetzungen des jeweils eingesetzten Agglomerationslatex variiert.

Beispiel 3.1a Verfahren zu Herstellung des Agglomerationslatex mit zweifacher Zuführung von Monomeren

Für die Herstellung der copolymerisierbaren, polyfunktionellen, agglomerierend wirkenden Komponente (Agglomerationslatex) wird von den handelsüblichen, aber nicht kostengünstigen Monomeren Ethylacrylat und Methylacrylamid ausgegangen.

Eine vorgelegte Menge von Wasser, Ethylacrylat (10 Gew.-% der gesamten Monomermenge), eines oberflächenaktiven Mittels (K30) (K30 ist dabei ein Gemisch aus überwiegend sekundären Natriumalkansulfonaten mit einer Kettenlänge von C-15), und der Initiator (Kaliumpersulfat, KPS) werden auf eine Temperatur von 82°C erwärmt.

Anschließend werden für einen Zeitraum von 1,5 Stunden weitere Mengen von Ethylacrylat, K30 und KPS zugesetzt, wobei die Menge des zugesetzten Ethylacrylats gerade 45 Gew.-% der gesamten Monomermenge entspricht. Am Ende der Reaktion wurden insgesamt 0,75 Gew.-% K30 und 0,2 Gew.-% KPS bezogen auf die Gesamtdispersion zugegeben. Der theoretische Pölymergehalt beträgt 41 %.

Anschließend werden eine Mischung von Methylacrylamid (MAM), Wasser und Ethylacrylat (EA) einerseits sowie K30 und der Initiator andererseits zugeführt. Die Zugabe erfolgt für einen Zeitraum von 1,5 Stunden, wobei die Mischung der Monomeren aus 92,3 Gew.-% Ethylacrylat und 7,7 Gew.-% MAM besteht. Nach Beendigung der Zugabe wird für 1 Stunde bei 80°C gehalten.

Man erhält ein copolymeres Produkt, das aus einem Ethylacetat-Grundlage und einer Copolymer-Hülle besteht. Diese Hülle (wobei unter "Hülle" nicht notwendigerweise eine räumliche Anordnung zu verstehen sein muss) ist im Wesentlichen aus Ethylacrylat-Methylacrylamid-Copolymeren mit einem großen EA-Anteil aufgebaut. Das Verhältnis der Größen von EA-Grundlage zu Copolymer-Hülle ist für die agglomerierende Wirkung des Produktes wichtig.

Durch eine Reduzierung der Größe der Polymerhülle im Verhältnis zum EA-Grundlage kann man zum einen ohne negative Auswirkungen (z.B. auf die Koagulatbildung bei der Agglomeration) den MAM-Gehalt in der Copolymerhülle erhöhen. Ferner erweist sich die auf diese Weise aufgebaute copolymerisierbaren, polyfunktionellen, agglomerierend wirkenden Komponente (Agglomerationslatex) als effizienter, d.h. eine kleinere Menge der Komponente ist zur Agglomeration der Kautschukpartikel erforderlich. Trotz höherer Effizienz des Agglomerationslatex wird eine gesteigerte Koagulatbildung vermieden. Im erhaltenen Agglomerationslatex beträgt die Teilchengrößenverteilung (gemessen mittels Hydrodynamic Fractionation) etwa d50 gleich 100 nm.

Beispiel 3.1b Verfahren zu Herstellung des Agglomerationslatex mit zweifacher Zuführung von Monomeren

Eine vorgelegte Menge von Wasser, Ethylacrylat (10 % der gesamten Monomermenge), eines oberflächenaktiven Mittels (K30) und der Initiator (Kaliumpersulfat) werden auf eine Temperatur von 82°C erwärmt.

Anschließend werden für einen Zeitraum von 2 Stunden und 15 Minuten weitere Mengen von Ethylacrylat, K30 und KPS zugesetzt, wobei die Menge des zugesetzten Ethylacrylats gerade 65 Gew.-% der gesamten Monomermenge entspricht.

Anschließend werden eine Mischung von Methylacrylamid (MAM), Wasser und Ethylacrylats (EA) sowie K30 und der Initiator zugeführt. Die Zugabe der Restmonomere erfolgt für einen Zeitraum von 45 Minuten, wobei die Monomerenmischung aus 90 Gew.-% Ethylacrylat und 10 Gew.-% MAM besteht. Nach Beendigung der Zugabe wird für 1 Stunde bei 80°C gehalten. Im erhaltenen Agglomerationslatex beträgt die Teilchengrößenverteilung (gemessen mittels Hydrodynamic Fractionation) etwa d50 gleich 100 nm.

Beispiel 3.1c Verfahren zu Herstellung des Agglomerationslatex (Vergleich)

Eine vorgelegte Menge von Wasser, Ethylacrylat (10 % der gesamten Monomermenge), eines oberflächenaktiven Mittels (K30) und der Initiator (Kaliumpersulfat) werden auf eine Temperatur von 82°C erwärmt.

Anschließend werden für einen Zeitraum von 3 Stunden eine Mischung von Ethylacrylat (Restmenge von 90%), K30 und KPS, Methylacrylamid (MAM) und Wasser zugeführt. Die Zugabe enthält dabei eine Mischung von 94,8 Gew.-% Ethylacrylat und 5,2 Gew.-% MAM. Nach Beendigung der Zugabe wird für 1 Stunde bei 80°C gehalten. Im erhaltenen Agglomerationslatex beträgt die Teilchengrößenverteilung (gemessen mittels Hydrodynamic Fractionation) etwa d50 gleich 100 nm.

Beispiel 3.1d Verfahren zu Herstellung des Agglomerationslatex (Vergleich)

Eine vorgelegte Menge von Wasser, Ethylacrylat (10 % der gesamten Monomermenge), eines oberflächenaktiven Mittels (K30) und der Initiator (Kaliumpersulfat) werden auf eine Temperatur von 82°C erwärmt.

Anschließend werden für einen Zeitraum von 3 Stunden eine Mischung von Ethylacrylat (Restmenge von 90%), K30 und KPS, Methylacrylamid (MAM) und Wasser zugeführt. Die Zugabe enthält dabei eine Mischung von 92,3 Gew.-% Ethylacrylat und 7,7 Gew.% MAM. Nach Beendigung der Zugabe wird für 1 Stunde bei 80°C gehalten. Im erhaltenen Agglomerationslatex beträgt die Teilchengrößenverteilung (gemessen mittels Hydrodynamic Fractionation) etwa d50 gleich 100 nm.

Beispiel 3.1e Verfahren zu Herstellung des Agglomerationslatex (Vergleich)

Eine vorgelegte Menge von Wasser, Ethylacrylat (10 % der gesamten Monomermenge), eines oberflächenaktiven Mittels (K30) und der Initiator (Kaliumpersulfat) werden auf eine Temperatur von 82°C erwärmt.

Anschließend werden für einen Zeitraum von 3 Stunden eine Mischung von Ethylacrylat (Restmenge von 90%), K30 und KPS, Methylacrylamid (MAM) und Wasser zugeführt. Die Zugabe enthält dabei eine Mischung von 91,6 Gew.-% Ethylacrylat und 8,4 Gew.-% MAM. Nach Beendigung der Zugabe wird für 1 Stunde bei 80°C gehalten. Im erhaltenen Agglomerationslatex beträgt die Teilchengrößenverteilung (gemessen mittels Hydrodynamic Fractionation) etwa d50 gleich 100 nm.

Beispiel 3.1f Verfahren zu Herstellung des Agglomerationslatex mit zweifacher Zuführung von Monomeren

Eine vorgelegte Menge von Wasser, Ethylacrylat (10 % der gesamten Monomermenge), eines oberflächenaktiven Mittels (K30) und der Initiator (Kaliumpersulfat) werden auf eine Temperatur von 82°C erwärmt.

Anschließend werden für einen Zeitraum von 2,5 Stunden weitere Mengen von Ethylacrylat, K30 und KPS zugesetzt, wobei die Menge des zugesetzten Ethylacrylats gerade 65 Gew.-% der gesamten Monomermenge entspricht.

Erst anschließend wird eine Mischung von Methylacrylamid (MAM), Wasser und Ethylacrylat (EA) sowie K30 und der Initiator zugeführt. Die Zugabe der Restmonomere erfolgt für einen Zeitraum von 1,5 Stunden, wobei die Monomerenmischung aus 92,3 Gew.-% Ethylacrylat und 7,7 Gew.-% MAM besteht. Nach Beendigung der Zugabe wird für 1 Stunde bei 80°C gehalten. Im erhaltenen Agglomerationslatex beträgt die Teilchengrößenverteilung (gemessen mittels Hydrodynamic Fractionation) etwa d50 gleich 100 nm.

Beispiel 3.1g Verfahren zu Herstellung des Agglomerationslatex mit zweifacher Zuführung von Monomeren

Eine vorgelegte Menge von Wasser, Ethylacrylat (10 % der gesamten Monomermenge), eines oberflächenaktiven Mittels (K30) und der Initiator (Kaliumpersulfat) werden auf eine Temperatur von 82°C erwärmt.

Anschließend werden für einen Zeitraum von 2 Stunden und 15 Minuten weitere Mengen von Ethylacrylat, K30 und KPS zugesetzt, wobei die Menge des zugesetzten Ethylacrylats gerade 65 Gew.-% der gesamten Monomermenge entspricht.

Anschließend werden eine Mischung von Methylacrylamid (MAM), Wasser und Ethylacrylat (EA) sowie K30 und der Initiator zugeführt. Die Zugabe der Restmonomere erfolgt für einen Zeitraum von 45 Minuten, wobei die Monomerenmischung aus 87,4 Gew.-% Ethylacrylat und 12,6 Gew.-% MAM besteht. Nach Beendigung der Zugabe wird für 1 Stunde bei 80°C gehalten. Im erhaltenen Agglomerationslatex beträgt die Teilchengrößenverteilung (gemessen mittels Hydrodynamic Fractionation) etwa d50 gleich 110 nm.

Beispiel 3.1h Verfahren zu Herstellung des Agglomerationslatex mit zweifacher Zuführung von Monomeren

Für die Herstellung der copolymerisierbaren, polyfunktionellen, agglomerierend wirkenden Komponente (Agglomerationslatex) wird von den handelsüblichen, aber nicht kostengünstigen Monomeren Ethylacrylat und Methylacrylamid ausgegangen.

Eine vorgelegte Menge von Wasser, Ethylacrylat (10 Gew.-% der gesamten Monomermenge), Kaliumoleat als oberflächenaktiven Mittel, und der Initiator (Kaliumpersulfat, KPS) werden auf eine Temperatur von 82°C erwärmt.

Anschließend werden für einen Zeitraum von 1,5 Stunden weitere Mengen von Ethylacrylat, K30 und KPS zugesetzt, wobei die Menge des zugesetzten Ethylacrylats gerade 45 Gew.-% der gesamten Monomermenge entspricht. Am Ende der Reaktion wurden insgesamt 0,84 Gew.-% Kaliumoleat und 0,2 Gew.-% KPS bezogen auf die Gesamtdispersion zugegeben. Der theoretische Polymergehalt beträgt 41 %.

Anschließend werden eine Mischung von Methylacrylamid (MAM), Wasser und Ethylacrylat (EA) einerseits sowie K30 und der Initiator andererseits zugeführt. Die Zugabe erfolgt für einen Zeitraum von 1,5 Stunden, wobei die Mischung der Monomeren aus 92,3 Gew.% Ethylacrylat und 7,7 Gew.-% MAM besteht. Nach Beendigung der Zugabe wird für 1 Stunde bei 80°C gehalten.

Im erhaltenen Agglomerationslatex beträgt die Teilchengrößenverteilung (gemessen mittels Hydrodynamic Fractionation) etwa d50 gleich 110 nm.

Beispiel 3.2 Agglomeration eines Kautschuklatex mit 1,5 phr Agglomerationslatex

Die Agglomeration erfolgt wie in Beispiel 3 bei einer Temperatur von 70°C unter ständiger Durchmischung der Komponenten während des Agglomerationsprozesses.

Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1a beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,1 phr erreicht wurde.

Dies bedeutet, dass auf 100 g festes Butadien nur 0,1 g koaguliertes Butadien gefunden wurden. Der Volumenanteil der agglomerierten Partikel betrug jedoch etwa 80 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 455 nm.

Beispiel 3.3 Agglomeration eines Kautschuklatex mit 1,5 phr Agglomerationslatex

Die Agglomeration erfolgt wie in Beispiel 3 bei einer Temperatur von 70°C unter ständiger Durchmischung der Komponenten während des Agglomerationsprozesses. Der wie in Beispiel 2.2 beschrieben hergestellte Kautschuklatex mit einer durchschnittlichen Teilchengröße $D_{50}$ von 100 nm und einem Quellungsindex von 55 sowie einem Feststoffgehalt von 40 % wird agglomeriert durch Zusatz des in Beispiel 3.1a beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergab sich, dass nur eine Koagulierungsrate von 0,2 phr erreicht wurde. Dies bedeutet, dass auf 100 g Butadien nur 0,2 g koaguliertes Butadien gefunden wurden. Der Volumenanteil der agglomerierten Partikel betrug jedoch etwa 84 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 430 nm.

Beispiel 3.4 Agglomeration eines Kautschuklatex mit 1,7 phr Agglomerationslatex

Die Agglomeration erfolgt wie in Beispiel 3 bei einer Temperatur von 70°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1b beschriebenen Agglomerationslatex während eines Zeitraums von 45 Minuten. Die Menge des zugesetzten Agglomerationslatex im Verhältnis zum Kautschuk (phr) beträgt dabei 1,7.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,1 phr erreicht wurde. Dies bedeutet, dass auf 100 g festes Butadien nur 0,1 g koaguliertes Butadien gefunden wurden. Der Volumenanteil der agglomerierten Partikel betrug jedoch etwa 80 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 480 nm.

Beispiel 3.5 Agglomeration eines Kautschuklatex mit 1,5 phr Agglomerationslatex (klassisch)

Die Agglomeration erfolgt wie in Beispiel 3 bei einer Temperatur von 70°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1c beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,1 phr erreicht wurde. Dies bedeutet, dass auf 100 g festes Butadien nur 0,1 g koaguliertes Butadien gefunden wurden. Der Volumenanteil der agglomerierten Partikel betrug etwa 60 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 410 nm.

Beispiel 3.6 Agglomeration eines Kautschuklatex mit 2,5 phr Agglomerationslatex (vergleich)

Die Agglomeration erfolgt wie in Beispiel 3 bei einer Temperatur von 70°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1c beschriebenen Agglomerationslatex während eines Zeitraums von 45 Minuten. Die Menge des zugesetzten Agglomerationslatex im Verhältnis zum Kautschuk (phr) beträgt dabei jedoch 2,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,1 phr erreicht wurde. Dies bedeutet, dass auf 100 g festes Butadien nur 0,1 g koaguliertes Butadien gefunden wurden. Der Volumenanteil der agglomerierten Partikel betrug jedoch etwa 82 %.

Es ergibt sich für das Produkt eine bimodale Teilchengrößenverteilung (gemessen mittels Hydrodynamic Fractionation) mit zwei Maxima, ein erstes bei etwa 100 nm, ein zweites bei 425 nm.

Beispiel 3.7 Agglomeration eines Kautschuklatex mit 2,5 phr Agglomerationslatex (vergleich)

Die Agglomeration erfolgt wie in Beispiel 3 bei einer Temperatur von 70°C unter ständiger Durchmischung der Komponenten, während des Agglomerationsprozesses. Der wie in Beispiel 2.2 beschrieben hergestellte Kautschuklatex mit einer durchschnittlichen Teilchengröße $D_{50}$ von 100 nm und einem Quellungsindex von 55 sowie einem Feststoffgehalt von 40 % wird agglomeriert durch Zusatz des in Beispiel 3.1c beschriebenen Agglomerationslatex während eines Zeitraums von 45 Minuten. Die Menge des zugesetzten Agglomerationslatex im Verhältnis zum Kautschuk (phr) beträgt dabei jedoch 2,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,1 phr erreicht wurde. Dies bedeutet, dass auf 100 g festes Butadien nur 0,1 g koaguliertes Butadien gefunden wurden. Der Volumenanteil der agglomerierten Partikel betrug jedoch etwa 85 %.

Es ergibt sich für das Produkt eine bimodale Teilchengrößenverteilung (gemessen mittels Hydrodynamic Fractionation) mit zwei Maxima, ein erstes bei etwa 100 nm, ein zweites bei 420 nm.

Beispiel 3.8 Agglomeration eines Kautschuklatex mit 1,5 phr Agglomerationslatex

Die Agglomeration erfolgt wie in Beispiel 3 bei einer Temperatur von 70°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1d beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,5 phr erreicht wurde. Dies bedeutet, dass auf 100 g festes Butadien sogar 0,5 g koaguliertes Butadien gefunden wurden. Der Volumenanteil der agglomerierten Partikel betrug etwa 74 %.

Es ergibt sich für das Produkt eine bimodale Teilchengrößenverteilung (gemessen mittels Hydrodynamic Fractionation) mit zwei Maxima, ein erstes bei etwa 100 nm, ein zweites bei 435 nm.

Beispiel 3.9 Agglomeration eines Kautschuklatex mit 1,5 phr Agglomerationslatex

Die Agglomeration erfolgt die in Beispiel 3 bei einer Temperatur von 70°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1e beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,9 phr erreicht wurde. Dies bedeutet, dass auf 100 g festes Butadien sogar 0,9 g koaguliertes Butadien gefunden wurden. Der Volumenanteil der agglomerierten Partikel betrug nur etwa 62 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 430 nm.

Beispiel 3.10 Agglomeration eines Kautschuklatex mit 1,7 phr Agglomerationslatex

Die Agglomeration erfolgt wie in Beispiel 3 bei einer Temperatur von 70°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1f beschriebenen Agglomerationslatex während eines Zeitraums von 45 Minuten. Die Menge des zugesetzten Agglomerationslatex im Verhältnis zum Kautschuk (phr) beträgt dabei 1,7.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,1 phr erreicht wurde. Dies bedeutet, dass auf 100 g festes Butadien nur 0,1 g koaguliertes Butadien gefunden wurden. Der Volumenanteil der agglomerierten Partikel betrug nur etwa 65 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 450 nm.

Beispiel 3.11 Agglomeration eines Kautschuklatex mit 1,5 phr Agglomerationslatex

Die Agglomeration erfolgt wie in Beispiel 3 bei einer Temperatur von 68°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1g beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Der Volumenanteil der agglomerierten Partikel betrug nur etwa 65 %. Es ergibt sich für das Produkt eine bimodale Teilchengrößenverteilung (gemessen mittels Hydrodynamic Fractionation) mit zwei Maxima, ein erstes bei etwa 100 nm, ein zweites bei 490 nm.

Beispiel 3.12 Agglomeration eines Kautschuklatex mit 1,5 phr Agglomerationslatex

Die Agglomeration erfolgt wie in Beispiel 3 bei einer Temperatur von 68°C unter ständiger Durchmischung der Komponenten während des Agglomerationsprozesses. Der wie in Beispiel 2.1 beschrieben hergestellte Kautschuklatex mit einer durchschnittlichen Teilchengröße $D_{50}$ von 100 nm und einem Quellungsindex von 25 sowie einem Feststoffgehalt von 40 % wird agglomeriert durch Zusatz des in Beispiel 3.1h beschriebenen Agglomerationslatex während eines Zeitraums von 45 Minuten. Die Menge des zugesetzten Agglomerationslatex im Verhältnis zum Kautschuk (phr) beträgt dabei 1,5.

Nach Beendigung der Zugabe des Agglomerationslatex wird die erhaltene Mischung für 15 Minuten weiter gerührt. Anschließend wird Kaliumstearat als wässrige Lösung zugesetzt. Bei der Isolierung des koagulierten Kautschuks nach erfolgter Agglomeration ergibt sich, dass nur eine Koagulierungsrate von 0,2 phr erreicht wurde. Dies bedeutet, dass auf 100 g festes Butadien nur 0,2 g koaguliertes Butadien gefunden wurden. Der Volumenanteil der agglomerierten Partikel betrug etwa 86 %.
Es ergibt sich für das Produkt eine bimodale Teilchengrößenverteilung (gemessen mittels Hydrodynamic Fractionation) mit zwei Maxima, ein erstes bei etwa 100 nm, ein zweites bei 509 nm.

Beispiel 4.1 (gleich Beispiel 4.2a) Agglomeration der Kautschukpartikel aus Beispiel 2.1 und Pfropfreaktion unter Einsatz von Peroxodisulfat als Initiator

4384 g des in Beispiel 2.2 hergestellten Kautschuklatex werden wie in Beispiel 3 beschrieben bei einer Temperatur von 68°C agglomeriert. Nach der Agglomeration wurden 17,8 g Kaliumstearat zugesetzt. Anschließend wurden 2,5 g Kaliumpersulfat sowie Wasser hinzugefügt, wobei die Menge an Wasser so bemessen war, dass der Feststoffgehalt der entstehende Dispersion nach der Polymerisationsreaktion einen Wert von etwa 40% beträgt.

Anschließend wurden 66,4 g Acrylnitril und 265,6 g Styrol (Zugabe 1) zugegeben. Anschließend erfolgte eine Zugabe von 49,8 g Acrylnitril und 199,2 g Styrol (Zugabe 2). Danach folgte noch ein dritte Zugabe von 149,4 g Acrylnitril und 597,6 g Styrol (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71°C beträgt. Bei Beendigung der Monomerzugabe erfolgt eine erneute Zugabe von 2,5 g Kaliumperoxodisulfat als Initiator. Die Polymerisationsreaktion wird für 1 Stunde weitergeführt.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60° C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.2b Agglomeration der Kautschukpartikel aus Beispiel 2.2 und Pfropfreaktion unter Einsatz von Peroxodisulfat als Initiator

4384 g des in Beispiel 2.2 hergestellten Kautschuklatex werden wie in Beispiel 3 beschrieben bei einer Temperatur von 68°C agglomeriert. Nach der Agglomeration wurden 17,8 g Kaliumstearat zugesetzt. Anschließend wurden 2,5 g Kaliumpersulfat sowie Wasser hinzugefügt, wobei die Menge an Wasser so bemessen war, dass der Feststoffgehalt der entstehende Dispersion nach der Polymeristionsreaktion einen Wert von etwa 40% beträgt.

Anschließend wurden 76,4 g Acrylnitril und 255,6 g Styrol (Zugabe 1) zugegeben. Anschließend erfolgte eine Zugabe von 57,3 g Acrylnitril und 191,7 g Styrol (Zugabe 2). Danach folgte noch ein dritte Zugabe von 171,8 g Acrylnitril und 584,3 g Styrol (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71°C beträgt. Bei Beendigung der Monomerzugabe erfolgt eine erneute Zugabe von 2,5 g Kaliumperoxodisulfat als Initiator. Die Polymerisationsreaktion wird für 1 Stunde weitergeführt.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen.

Man erhält ein ABS-Copolymer mit einer Restfeuchte von etwa 30%.

Beispiel 4.6a Agglomeration der Kautschukpartikel aus Beispiel 2.1 und Pfropfreaktion unter Einsatz von Peroxodisulfat als Initiator

4384 g des in Beispiel 2.1 hergestellten Kautschuklatex werden wie in Beispiel 3 beschrieben bei einer Temperatur von 68°C agglomeriert.

Nach der Agglomeration wurden 17,8 g Kaliumstearat zugesetzt. Anschließend wurden 2,5 g Kaliumpersulfat sowie Wasser hinzugefügt, wobei die Menge an Wasser so bemessen war, dass der Feststoffgehalt der entstehende Dispersion nach der Polymerisationsreaktion einen Wert von etwa 40% beträgt.

Anschließend wurden 66,4 g Acrylnitril und 265,6 g Styrol (Zugabe 1) zugegeben. Anschließend erfolgte eine Zugabe von 49,8 g Acrylnitril und 199,2 g Styrol (Zugabe 2). Danach folgte noch ein dritte Zugabe von 149,4 g Acrylnitril und 597,6 g Styrol (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71°C beträgt. Bei Beendigung der Monomerzugabe erfolgt eine erneute Zugabe von 2,5 g Kaliumperoxodisulfat als Initiator. Die Polymerisationsreaktion wird für 1 Stunde weitergeführt.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen.

Man erhält ein ABS-Copolymer mit einer Restfeuchte von etwa 30%.

Beispiel 4.6b Agglomeration der Kautschukpartikel aus Beispiel 2.1 und Pfropfreaktion unter Einsatz von Peroxodisulfat als Initiator

4384 g des in Beispiel 2.1 hergestellten Kautschuklatex werden wie in Beispiel 3 beschrieben bei einer Temperatur von 68°C agglomeriert. Nach der Agglomeration wurden 17,8 g Kaliumstearat zugesetzt. Anschließend wurden 2,5 g Kaliumpersulfat sowie Wasser hinzugefügt, wobei die Menge an Wasser so bemessen war, dass der Feststoffgehalt der entstehende Dispersion nach der Polymerisationsreaktion einen Wert von etwa 40% beträgt.

Anschließend wurden 76,4 g Acrylnitril und 255,6 g Styrol (Zugabe 1) zugegeben. Anschließend erfolgte eine Zugabe von 57,3 g Acrylnitril und 191,7 g Styrol (Zugabe 2). Danach folgte noch ein dritte Zugabe von 171,8 g Acrylnitril und 584,3 g Styrol (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71°C beträgt. Bei Beendigung der Monomerzugabe erfolgt eine erneute Zugabe von 2,5 g Kaliumperoxodisulfat als Initiator. Die Polymerisationsreaktion wird für 1 Stunde weitergeführt.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen.

Man erhält ein ABS-Copolymer mit einer Restfeuchte von etwa 30%.

Beispiel 4.6c Agglomeration der Kautschukpartikel aus Beispiel 2.1 und Pfropfreaktion unter Einsatz von Peroxodisulfat als Initiator

4384 g des in Beispiel 2.1 hergestellten Kautschuklatex werden wie in Beispiel 3 beschrieben bei einer Temperatur von 68°C agglomeriert. Nach der Agglomeration wurden 17,8 g Kaliumstearat zugesetzt. Anschließend wurden 2,5 g Kaliumpersulfat sowie Wasser hinzugefügt, wobei die Menge an Wasser so bemessen war, dass der Feststoffgehalt der entstehende Dispersion nach der Polymerisationsreaktion einen Wert von etwa 40% beträgt.

Anschließend wurden 79,68 g Acrylnitril und 252,32 g Styrol (Zugabe 1) zugegeben. Anschließend erfolgte eine Zugabe von 59,8 g Acrylnitril und 189,24 g Styrol (Zugabe 2). Danach folgte noch ein dritte Zugabe von 179,3 g Acrylnitril und 576,7 g Styrol (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71°C beträgt. Bei Beendigung der Monomerzugabe erfolgt eine erneute Zugabe von 2,5 g Kaliumperoxodisulfat als Initiator. Die Polymerisationsreaktion wird für 1 Stunde weitergeführt.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100° C für 10 Minuten. Die Dispersion wird anschließend abgekühlt, zentrifugiert und mit Wasser gewaschen.

Man erhält ein ABS-Copolymer mit einer Restfeuchte von etwa 30%.

Beispiel 4.7 Pfropfung der Kautschukpartikel aus Beispiel 2.7 unter Einsatz von Peroxodisulfat als Initiator

Zu 4384 g des in Beispiel 2.7 hergestellten Kautschuklatex werden 2,5 g Kaliumperoxodisulfat sowie Wasser hinzugefügt, wobei die Menge an Wasser so bemessen ist, dass der Feststoffgehalt der entstehende Dispersion nach der Polymerisationsreaktion einen Wert von etwa 40% beträgt.

Anschließend wurden 66,4 g Acrylnitril und 265,6 g Styrol (Zugabe 1) zugegeben. Anschließend erfolgte eine Zugabe von 49,8 g Acrylnitril und 199,2 g Styrol (Zugabe 2). Danach folgte noch ein dritte Zugabe von 149,4 g Acrylnitril und 597,6 g Styrol (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71°C beträgt. Bei Beendigung der Monomerzugabe erfolgt eine erneute Zugabe von 2,5 g kaliumperoxodisulfat als Initiator. Die Polymerisationsreaktion wird für 1 Stunde weitergeführt.

Im Pfropfcopolymer beträgt die Teilchengrößenverteilung (gemessen mittels Hydrodynamic Fractionation) d50 gleich 307 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert.

Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.8 Agglomeration der Kautschukpartikel aus Beispiel 2.1 und Pfropfreaktion, unter Einsatz von Peroxodisulfat als Initiator sowie TDM als Regler

4384 g des in Beispiel 2.1 hergestellten Kautschuklatex werden wie in Beispiel 3 beschrieben bei einer Temperatur von 68°C agglomeriert. Nach der Agglomeration wurden 17,8 g Kaliumstearat zugesetzt. Anschließend wurden 2,5 g Kaliumpersulfat sowie Wasser hinzugefügt, wobei die Menge an Wasser so bemessen war, dass der Feststoffgehalt der entstehende Dispersion nach der Polymerisationsreaktion einen Wert von etwa 40% beträgt.

Anschließend wurden 66,4 g Acrylnitril und 265,6 g Styrol sowie 3,32 g TDM (Zugabe 1) zugegeben. Anschließend erfolgte eine Zugabe von 49,8 g Acrylnitril und 199,2 g Styrol sowie 2,5 g TDM (Zugabe 2). Danach folgte noch ein dritte Zugabe von 149,4 g Acrylnitril und 597,6 g Styrol sowie 7,5 g TDM (Zugabe 3). Die Zugaben 1,2 und 3 erfolgen innerhalb von 180 Minuten, wobei Zugabe 1 innerhalb die erste Stunde erfolgt und wobei die Reaktionstemperatur nach gut der Hälfte der Zeit 71 °C beträgt.

Bei Beendigung der Monomerzugabe erfolgt eine erneute Zugabe von 2,5 g Kaliumperoxodisulfat als Initiator. Die Polymerisationsreaktion wird für 1 Stunde weitergeführt.

Die entstandene Pfropfcopolymerdispersion weist eine bimodale Partikelgrößen-verteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen.

Man erhält ein ABS-Copolymer mit einer Restfeuchte von etwa 30%.

Beispiel 4.9 Agglomeration der Kautschukpartikel aus Beispiel 2.1 und Pfropfreaktion unter Einsatz von Peroxodisulfat als Initiator

3904 g des in Beispiel 2.1 hergestellten Kautschuklatex werden wie in Beispiel 3 beschrieben bei einer Temperatur von 68°C agglomeriert. Nach der Agglomeration werden 15,5 g Kaliumstearat zugesetzt. Anschließend werden 3,0 g Kaliumpersulfat sowie Wasser hinzugefügt, wobei die Menge an Wasser so bemessen ist, dass der Feststoffgehalt der entstehende Dispersion nach der Polymerisationsreaktion einen Wert von etwa 40% beträgt.

Anschließend wurden 78,4 g Acrylnitril und 313,6 g Styrol (Zugabe 1) zugegeben. Anschließend erfolgte eine Zugabe von 58,8 g Acrylnitril und 235,2 g Styrol sowie 2,94 g TDM (Zugabe 2). Danach folgte noch ein dritte Zugabe von 176,4 g Acrylnitril sowie 705,6 g Styrol und 8,82 g TDM (Zugabe 3). Die Zugaben 1, 2 und 3 erfolgen innerhalb von 180 Minuten, wobei Zugabe 1 innerhalb die erste Stunde erfolgt und wobei die Reaktionstemperatur nach gut der Hälfte der Zeit auf 71 ° C stieg. Bei Beendigung der Monomerzugabe erfolgt eine erneute Zugabe von 2,5 g Kaliumpersulfat als Initiator. Die Polymerisationsreaktion wird für 1 Stünde weitergeführt.

Beispiel 4.10 Agglomeration der Kautschukpartikel aus Beispiel 2.1 und Pfropfreaktion unter Einsatz eines Redox-Initiatorsystems

4384 g des in Beispiel 2.1 hergestellten Kautschuklatex werden einer Agglomeration (bei 55°C, Feststoffgehalt = 40%) wie in Beispiel 3 beschrieben unterzogen und an-schließend mit 20 g Kaliumstearat als Emulgator versetzt. Anschließend wird Wasser in einer Menge zugesetzt, die nach erfolgter Polymerisation zu einem Feststoffgehalt von etwa 40% führt.

Anschließend werden 66,4 Acrylonitril sowie 265,6 g Styrol und 3,32 g TDM zugesetzt (Zugabe 1). Die Temperatur wird auf 58°C eingestellt. Anschließend wird eine Lösung aus Dextrose, Natriumpyrophosphat und Eisen(II)-sulfat in Wasser zugesetzt. Sobald die Temperatur 60°C beträgt, werden 3,4 g Cumolhydroperoxid (80%-ige Lösung in Cumol) auf ein Mal als Initiator der Polymerisationsreaktion zugegeben. Innerhalb von 60 Minuten wird die Temperatur auf 72°C erhöht.

Anschließend werden 199,2 g Acrylnitril, 796,8 g Styrol, 10,0 g TDM und 3,0 g Cumolhydroperoxid (80%-ige Lösung in Cumol) als in 1035 g Wasser emulgierte Mischung sowie 6,4 g Kaliumstearat kontinuierlich zugefügt (Zugabe 2), wobei diese Zuführung innerhalb von 3 Stunden erfolgt, und die Temperatur auf 72° C konstant gehalten wird. Nach der Zugabe der Monomeren erfolgt eine erneute Zugabe von 2,0 g Cumolhydroperoxid (80%-ige Lösung in Cumol) und die Temperatur wird für 60 Minuten bei 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und ide Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.11 Agglomeration der Kautschukpartikel aus Beispiel 2.1 und Pfropfreaktion unter Einsatz eines Redox-Initiatorsystems

4384 g des in Beispiel 2.1 hergestellten Kautschuklatex werden einer Agglomeration (bei 55°C, Feststoffgehalt = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt.

Anschließend werden 66,4 Acrylonitril sowie 265,6 g Styrol und 1,66 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 3,4 g Cumolhydroperoxid (80%-ige Lösung in Cumol) auf ein Mal als Initiator der Polymerisationsreaktion zugegeben. Innerhalb von 60 Minuten wird die Temperatur auf 72° C erhöht.

Anschließend werden 199,2 g Acrylnitril, 796,8 g Styrol, 7,5 g TDM und 3,0 g Cumol-hydroperoxid (80%-ige Lösung in Cumol) als in 1035 g Wasser emulgierte Mischung sowie 6,4 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,0 g Cumolhydroperoxid (80%-ige Lösung in Cumol) und die Temperatur wird für 60 Minuten bei 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und ide Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.12 Agglomeration der Kautschukpartikel aus Beispiel 2.1 und Pfropfreaktion unter Einsatz eines Redox-Initiatorsystems

4384 g des in Beispiel 2.1 hergestellten Kautschuklatex werden einer Agglomeration (bei 55°C, Feststoffgehalt = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt.

Anschließend werden 66,4 Acrylnitril sowie 265,6 g Styrol und 1,66 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 3,4 g Cumolhydroperoxid (80%-ige Lösung in Cumol) auf ein Mal als Initiator der Polymerisationsreaktion zugegeben. Innerhalb von 60 Minuten wird die Temperatur auf 72°C erhöht.

Anschließend werden 199,2 g Acrylnitril, 796,8 g Styrol, 5,0 g TDM und 3,0 g Cumol-hydroperoxid (80%-ige Lösung in Cumol) als in 1035 g Wasser emulgierte Mischung sowie 6,4 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,0 g Cumolhydroperoxid (80%-ige Lösung in Cumol) und die Temperatur wird für 60 Minuten bei 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und ide Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.13 Agglomeration der Kautschukpartikel aus Beispiel 2.1 und Pfropfreaktion unter Einsatz eines Redox-Initiatorsystems

4384 g des in Beispiel 2.1 hergestellten Kautschuklatex werden einer Agglomeration (bei 55°C, Feststoffgehalt = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt.

Anschließend werden 66,4 Acrylnitril sowie 265,6 g Styrol und 3,32 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 1,7 g Cumolhydroperoxid (80%-ige Lösung in Cumol) auf ein Mal als Initiator der Polymerisationsreaktion zugegeben. Innerhalb von 60 Minuten wird die Temperatur auf 72°C erhöht.

Anschließend werden 199,2 g Acrylnitril, 796,8 g Styrol, 10,0 g TDM und 1,5 g Cumolhydroperoxid (80%-ige Lösung in Cumol) als in 1035 g Wasser emulgierte Mischung sowie 6,4 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,0 g Cumolhydroperoxid (80%-ige Lösung in Cumol) und die Temperatur wird für 60 Minuten bei 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und ide Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.14 Agglomeration der Kautschukpartikel aus Beispiel 2.1 und Pfropfreaktion unter Einsatz von Peroxodisulfat als Initiator

4457 g des in Beispiel 2.1 hergestellten Kautschuklatex werden einer Agglomeration (bei 55°C, Feststoffgehalt = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt..

Anschließend werden 66,4 Acrylonitril sowie 265,6 g Styrol zugesetzt (Zugabe 1). Die Temperatur wird auf 60°C eingestellt. Sobald die Temperatur 60°C beträgt, wird 2,7 g KPS auf ein Mal als Initiator der Polymerisationsreaktion zugegeben. Innerhalb von 60 Minuten wird die Temperatur auf 72°C erhöht.

Anschließend werden 199,2 g Acrylnitril, 796,8 g Styrol, 10,0 g TDM und 2,4 g KPS als in 1035 g Wasser emulgierte Mischung sowie 6,4 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 1,6 g Kaliumpersulfat und die Temperatur wird für 60 Minuten bie 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen.

Man erhält ein ABS-Copolymer mit einer Restfeuchte von etwa 30%.

Beispiel 4.15 Agglomeration der Kautschukpartikel aus Beispiel 2.1 und Pfropfreaktion unter Einsatz von Peroxodisulfat als Initiator

4761 g des in Beispiel 2.1 hergestellten Kautschuklatex werden wie in Beispiel 3 beschrieben bei einer Temperatur von 68°C agglomeriert. Nach der Agglomeration werden 20 g Kaliumstearat zugesetzt. Anschließend werden 2,8 g Kaliumpersulfat sowie Wasser hinzugefügt, wobei die Menge an Wasser so bemessen ist, dass der Feststoffgehalt der entstehende Dispersion nach der Polymerisationsreaktion einen Wert von etwa 40% beträgt.

Anschließend werden 74,7 g Acrylnitril und 298,8 g Styrol (Zugabe 1) zugegeben. Anschließend erfolgte eine Zugabe von 56,0 g Acrylnitril und 224,1 g Styrol (Zugabe 2). Danach folgt noch ein dritte Zugabe von 168,1 g Acrylnitril und 672,3 g Styrol (Zugabe 3). Die Zugaben 1,2 und 3 erfolgen innerhalb von 180 Minuten, wobei Zugabe 1 innerhalb der ersten Stunde erledigt ist und wobei die Reaktionstemperätur nach gut der Hälfte der Zeit 75°C beträgt. Bei Beendigung der Monomerzugabe erfolgt eine erneute Zugabe von 2,8 g Kaliumpersulfat als Initiator. Die Polymerisationsreaktion wird für 1 Stunde weitergeführt.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen.

Man erhält ein ABS-Copolymer mit einer Restfeuchte von etwa 30%.

Versuche zur effektiveren Agglomerierung:

a) Vergleich: (mit 2,5% des gemäß Beispiel 3.1c hergestellten Agglomerationslatex) Die getrocknete Koagulatmenge nach Ende der Pfropfung beträgt 30 g. Im agglomerierten Copolymer beträgt die Teilchengrößenverteilung (gemessen mittels Hydrodynamic Fractionation) etwa d50 gleich 350 nm. Die Agglomerationsausbeute ist 75% und die d50 (HDF) der Agglomeraten ist 390 nm.

b) Verbessert: (mit 1,5% des gemäß Beispiel 3.1g hergestellten Agglomerationslatex) Die getrocknete Koagulatmenge nach Ende der Pfropfung beträgt 35 g. Im agglomerierten Copolymer beträgt die Teilchengrößenverteilung (gemessen mittels Hydrodynamic Fractionation) d50 gleich 460 nm. Die Agglomerationsausbeute ist 75% und die d50 (HDF) von der Agglomeraten ist 490 nm.

c) Verbessert: (mit 1,5% des gemäß Beispiel 3.1a hergestellten Agglomerationslatex) Die getrocknete Koagulatmenge nach Ende der Pfropfung beträgt 30 g. Im agglomerierten Copolymer beträgt die Teilchengrößenverteilung (gemessen mittels Hydrodynamic Fractionation) d50 gleich 441 nm. Die Agglomerationsausbeute ist 75% und die d50 (HDF) von der Agglomeraten ist 450 nm

Beispiel 4.16a Agalomeration der Kautschukpartikel aus Beispiel 2.1 und Pfropfreaktion unter Einsatz eines Redox-Initiatorsystems

4761,5 g des in Beispiel 2.1 hergestellten Kautschuklatex werden einer Agglomeration (bei 55°C, FG = 40%) wie in Beispiel 3 beschrieben unterzogen und anschließend mit 22,3 g Kaliumstearat als Emulgator versetzt. Anschließend wird Wasser in einer Menge zugesetzt, die nach erfolgter Polymerisation zu einem Feststoffgehalt von etwa 40% führt. Anschließend werden 74,7 Acrylnitril sowie 298,8 g Styrol und 3,74 g tertiär-Dodecylmercaptan (TDM) zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60° C beträgt, werden 3,8 g Cumolhydroperoxid (80%-ige Lösung in Cumol) auf ein Mal als Initiator der Polymerisationsreaktion zugegeben. Innerhalb von 60 Minuten wird die Temperatur auf 72°C erhöht.

Anschließend werden 224,1 g Acrylnitril, 896,4 g Styrol, 11,2 g TDM und 3,4 g Cumolhydroperoxid (80%-ige Lösung in Cumol) als in 1162 g Wasser emulgierte Mischung sowie 7,2 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,3 g Cumolhydroperoxid (80%-ige Lösung in Cumol) und die Temperatur wird für 60 Minuten bie 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60°C gekühlt und mit einer 0,5 %-igen wässerigen Magnesiumsülfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.16b Agglomeration der Kautschukpartikel aus Beispiel 2.1 und Pfropfreaktion unter Einsatz eines Redox-Initiatorsystems

4761,5 g des in Beispiel 2.1 hergestellten Kautschuklatex werden einer Agglomeration (bei 55°C, FG = 40%) wie in Beispiel 3 beschrieben unterzogen und anschließend mit 22,3 g Kaliumstearat als Emulgator versetzt. Anschließend wird Wasser in einer Menge zugesetzt, die nach erfolgter Polymerisation zu einem Feststoffgehalt von etwa 40% führt. Anschließend werden 69,64 g Acrylnitril sowie 283,9 g Styrol und 3,74 g tertiärDodecylmercaptan (TDM) zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60° C beträgt, werden 3,8 g Cumolhydroperoxid (80%-ige Lösung in Cumol) auf ein Mal als Initiator der Polymerisationsreaktion zugegeben. Innerhalb von 60 Minuten wird die Temperatur auf 72°C erhöht.

Anschließend werden 268,92 g Acrylnitril, 851,6 g Styrol, 11,2 g TDM und 3,4 g Cumolhydroperoxid (80%-ige Lösung in Cumol) als in 1162 g Wasser emulgierte Mischung sowie 7,2 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,3 g Cumolhydroperoxid (80%-ige Lösung in Cumol) und die Temperatur wird für 60 Minuten bie 72°C gehalten, um eine Vervollständigung der Polymerisation zu erhalten.

Die entstandene Pfropfcopolymerdispersion weist eine bimodale Partikelgrößenverteilung auf und eine durchschnittliche Partikelgröße d50 von 150 bis 350 nm sowie eine Partikelgröße d90 von 400 bis 600 nm. Bei der Teilchengrößenverteilung ergeben sich zwei Peakmaxima, das erste im Bereich von 50 nm bis 150 nm, das zweite Maximum bei 200 bis 600 nm.

Der so hergestellten Copolymerdispersion werden 0,2 Gew.-% (bezogen auf den Feststoffgehalt) eines Stabilisators zugesetzt und die Mischung wird auf 60° C gekühlt und mit einer 0,5 %-igen wässerigen Magnesiumsulfatlösung koaguliert. Anschließend erfolgt ein Alterungschritt bei einer Temperatur von 100°C für 10 Minuten. Die Dispersion wird anschließend abgekühlt, zentrifugiert und mit Wasser gewaschen. Man erhält ein ABS-Copolymer mit einer Restfeuchte von etwa 30%.

Beispiel 4.17 Agglomeration der Kautschukpartikel aus Beispiel 2.1 und Pfropfreaktion unter Einsatz eines Redox-Initiatorsystems

4639,4 g des in Beispiel 2.1 hergestellten Kautschuklatex werden einer Agglomeration (bei 55° C, FG = 40%) wie in Beispiel 3 beschrieben unterzogen und anschließend mit 21,8 g Kaliumstearat als Emulgator versetzt. Anschließend wird Wasser in einer Menge zugesetzt, die nach erfolgter Polymerisation zu einem Feststoffgehalt von etwa 40% führt.

Anschließend werden 77,4 g Acrylonitril sowie 309,6 g Styrol und 3,9 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 4,0 g Cumolhydroperoxid (80%-ige Lösung in Cumol) auf ein Mal als Initiator der Polymerisationsreaktion zugegeben. Innerhalb von 60 Minuten wird die Temperatur auf 72°C erhöht.

Anschließend werden 232 g Acrylnitril, 928,8 g Styrol, 11,6 g TDM und 3,5 g Cumolhydroperoxid (80%-ige Lösung in Cumol) als in 930 g Wasser emulgierte Mischung sowie 7,0 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,3 g Cumolhydroperoxid (80%-ige Lösung in Cumol) und die Temperatur wird für 60 Minuten bei 72°C gehalten, um eine Vervollständigung der Polymerisation zu erhalten.

Beispiel 4.18 Agglomeration der Kautschukpartikel aus Beispiel 2.1 und Pfropfreaktion unter Einsatz eines Redox-Initiatorsystems

4476,6 g des in Beispiel 2.1 hergestellten Kautschuklatex werden einer Agglomeration (bei 55°C, FG = 40%) wie in Beispiel 3 beschrieben unterzogen und anschließend mit 21 g Kaliumstearat als Emulgator versetzt. Anschließend wird Wasser in einer Menge zugesetzt, die nach erfolgter Polymerisation zu einem Feststoffgehalt von etwa 40% führt. Anschließend werden 81 g Acrylnitril sowie 324 g Styrol und 4,1 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 4,2 g Cumolhydroperoxid (80%-ige Lösung in Cumol) auf ein Mal als initiator der Polymerisationsreaktion zugegeben. Innerhalb von 60 Minuten wird die Temperatur auf 72°C erhöht.

Anschließend werden 243 g Acrylnitril, 972 g Styrol, 12,2 g TDM und 3,7 g Cumolhydroperoxid (80%-ige Lösung in Cumol) als in 930 g Wasser emulgierte Mischung sowie 6,8 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,4 g Cumolhydroperoxid (80%-ige Lösung in Cumol) und die Temperatur wird für 60 Minuten bie 72°C gehalten, um eine Vervollständigung der Polymerisation zu erhalten.

Beispiel 4.19 Agglomeration der Kautschukpartikel aus Beispiel 2.1 und Pfropfreaktion unter Einsatz eines Redox-Initiatorsystems

4313,8 g des in Beispiel 2.1 hergestellten Kautschuklatex werden einer Agglomeration (bei 55°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Anschließend werden 84,6 Acrylnitril sowie 338,4 g Styrol und 4,2 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 4,3 g Cumolhydroperoxid (80%-ige Lösung in Cumol) auf ein Mal als initiator der Polymerisationsreaktion zugegeben. Innerhalb von 60 Minuten wird die Temperatur auf 72°C erhöht.

Anschließend werden 253,8 g Acrylnitril, 1015 g Styrol, 12,7 g TDM und 3,8 g Cumolhydroperoxid (80%-ige Lösung in Cumol) als in 930 g Wasser emulgierte Mischung sowie 6,5 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,6 g Cumolhydroperoxid (80%-ige Lösung in Cumol) und die Temperatur wird für 60 Minuten bie 72°C gehalten, um eine Vervollständigung der Polymerisation zu erhalten.

Beispiel 4.20 Agglomeration der Kautschukpartikel aus Beispiel 2.1 und Pfropfreaktion unter Einsatz eines Redox-Initiatorsystems

4254,6 g des in Beispiel 2.1 hergestellten Kautschuklatex werden einer Agglomeration (bei 68° C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 73°C eingestellt.

Anschließend wird eine Lösung aus Dextrose, Natriumpyrosphosphat und Eisen(II)-sulfat in Wasser zugesetzt. Anschließend werden 66,4 g Acrylonitril sowie 265,6 g Styrol und 3,32 g tertiär-Dodecylmercaptan (TDM) kontinuierlich innerhalb von 45 Minuten zugesetzt (Zugabe 1). Gleichzeitig werden 3,4 g Cumolhydroperoxid (80%-ige Lösung in Cumol) als initiator der Polymerisationsreaktion und 0,5 g Kaliumstearat kontinuierlich zugesetzt.

Anschließend werden 199,2 g Acrylnitril, 796,8 g Styrol und 10,0 g TDM als Mischung zugeführt. Gleichzeitg wird 2,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und die Temperatur auf 73°C konstant gehalten wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 73°C gehalten, um eine Vervollständigung der Polymerisation zu erhalten.

Beispiel 4.21 Agglomeration der Kautschukpartikel aus Beispiel 2.1 und Pfropfreaktion unter Einsatz eines Redox-Initiatorsystems

4254,6 g des in Beispiel 2.1 hergestellten Kautschuklatex werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 73°C eingestellt.

Anschließend wird eine Lösung aus Dextrose, Natriumpyrosphosphat und Eisen(II)-sulfat in Wasser zugesetzt. Anschließend werden 66,4 gAcrylonitril sowie 265,6 g Styrol und 3,32 g TDM kontinuierlich innerhalb von 45 Minuten zugesetzt (Zugabe 1). Gleichzeitig werden 3,4 g Cumolhydroperoxid (80%-ige Lösung in Cumol) als Initiator der Polymerisationsreaktion und 0,5 g Kaliumstearat kontinuierlich zugesetzt.

Anschließend werden 199,2 g Acrylnitril, 796,8 g Styrol und 10,0 g TDM als Mischung zugeführt. Gleichzeitg wird 3,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bei 80°C gehalten, um eine Vervollständigung der Polymerisation zu erhalten.

Diese Reaktions-Fahrweise führt zu einer vereinfachten Handhabung der Herstellung, insbesondere hinsichtlich der Temperaturkontrolle.

Beispiel 4.22 Agglomeration der Kautschukpartikel aus Beispiel 2.6c und Pfropfreaktion unter Einsatz eines Redox-Initiatorsystems

4254,6 g des in Beispiel 2.6c hergestellten Kautschuklatex (mit QI gleich 50) werden einer Agglomeration (bei 68° C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Fest-stoffgehalt von etwa 40% führt. Die Temperatur wird auf 73°C eingestellt.

Anschließend wird eine Lösung aus Dextrose, Natriumpyrosphosphat und Eisen(II)-sulfat in Wasser zugesetzt. Anschließend werden 66,4 gAcrylonitril sowie 265,6 g Styrol und 3,32 g TDM kontinuierlich innerhalb von 45 Minuten zugesetzt (Zugabe 1). Gleichzeitig werden 3,4 g Cumolhydroperoxid (80%-ige Lösung in Cumol) als Initiator der Polymerisationsreaktion und 0,5 g Kaliumstearat kontinuierlich zugesetzt.

Anschließend werden 199,2 g Acrylnitril, 796,8 g Styrol und 10,0 g TDM als Mischung zugeführt. Gleichzeitg wird 3,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.23 Agglomeration der Kautschukpartikel aus Beispiel 2.1 und Pfropfreaktion unter Einsatz eines Redox-Initiatorsystems

4254,6 g des in Beispiel 2.1 hergestellten Kautschuklatex werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 73°C eingestellt.

Anschließend wird eine Lösung aus Dextrose, Natriumpyrosphosphat und Eisen(II)-sulfat in Wasser zugesetzt. Anschließend werden 66,4 Acrylonitril sowie 265,6 g Styrol und 3,32 g TDM kontinuierlich innerhalb von 3 Minuten zugesetzt (Zugabe 1). 3,4 g Cumolhydroperoxid (80%-ige Lösung in Cumol) als Initiator der Polymerisationsreaktion und 0,5 g Kaliumstearat werden anschließend innerhalb 45 Minuten kontinuierlich zugesetzt.

Anschließend werden 199,2 g Acrylnitril, 796,8 g Styrol und 10,0 g TDM als Mischung zugeführt. Gleichzeitg wird 2,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.24 Agglomeration der Kautschukpartikel aus Beispiel 2.6c und Pfropfreaktion unter Einsatz eines Redox-Initiatorsystems

4254,6 g des in Beispiel 2.6c hergestellten Kautschuklatex (QI gleich 50) werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Anschließend wird eine Lösung aus Dextrose, Natriumpyrosphosphat und Eisen(II)-sulfat in Wasser zugesetzt. Anschließend werden 76,36 gAcrylonitril sowie 255,64 g Styrol und 3,32 g TDM kontinuierlich innerhalb von 45 Minuten zugesetzt (Zugabe 1). Gleichzeitig werden 3,4 g Cumolhydroperoxid (80%-ige Lösung in Cumol) als Initiator der Polymerisationsreaktion und 0,5 g Kaliumstearat kontinuierlich zugesetzt.

Anschließend werden 229,1 g Acrylnitril, 766,9 g Styrol und 10,0 g TDM als Mischung zugeführt. Gleichzeitg wird 3,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten. Diese Reaktions-Fahrweise führt zu einer vereinfachten Handhabung der Herstellung, insbesondere hinsichtlich der Temperaturkontrolle.

Beispiel 4.25 Agglomeration der Kautschukpartikel aus Beispiel 2.6b und Pfropfreaktion unter Einsatz eines Redox-Initiatorsystems

4254,6 g des in Beispiel 2.6b hergestellten Kautschuklatex (QI gleich 40) werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Anschließend wird eine Lösung aus Dextrose (6,3 g), Natriumpyrosphosphat (7,7 g Decahydrat) und Eisen(II)-sulfat (0,105 g) in Wasser zugesetzt. Anschließend werden 76,36 gAcrylonitril sowie 255,64 g Styrol und 3,32 g TDM kontinuierlich innerhalb von 45 Minuten zugesetzt (Zugabe 1).

Gleichzeitig werden 3,4 g Cumolhydroperoxid (80%-ige Lösung in Cumol) als Initiator der Polymerisationsreaktion und 0,5 g Kaliumstearat kontinuierlich zugesetzt.

Anschließend werden 229,1 g Acrylnitril, 766,9 g Styrol und 10 g TDM als Mischung zugeführt. Gleichzeitg wird 3,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.26 Agglomeration der Kautschukpartikel aus Beispiel 2.6b und Pfropfreaktion unter Einsatz eines Redox-Initiatorsystems

4254,6 g des in Beispiel 2.6b hergestellten Kautschuklatex (Qi gleich 40) werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Anschließend wird eine Lösung aus Dextrose (4,7 g), Natriumpyrosphosphat (5,8 g Decahydrat) und Eisen(II)-sulfat (0,79 g) in Wasser zugesetzt. Anschließend werden 76,36 gAcrylonitril sowie 255,64 g Styrol und 2,49 g TDM kontinuierlich innerhalb von 45 Minuten zugesetzt (Zugabe 1). Gleichzeitig werden 2,55 g Cumolhydroperoxid (80%-ige Lösung in Cumol) als Initiator der Polymerisationsreaktion und 0,5 g Kaliumstearat kontinuierlich zugesetzt.

Anschließend werden 229,1 g Acrylnitril, 766,9 g Styrol und 7,5 g TDM als Mischung zugeführt. Gleichzeitg wird 2,3 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80° C angehoben wird. Nach der Zugabe der Monomeren erfolgt eine erneute Zugabe von 1,5 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.27 Agglomeration der Kautschukpartikel aus Beispiel 2.6b und Pfropfreaktion unter Einsatz eines Redox-Initiatorsystems

4254,6 g des in Beispiel 2.6b hergestellten Kautschuklatex (QI gleich 40) werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Anschließend wird eine Lösung aus Dextrose (3,1 g), Natriumpyrosphosphat (3,9 g Decahydrat) und Eisen(II)-sulfat (0,052g) in Wasser zugesetzt. Anschließend werden 76,36 gAcrylnitril sowie 255,64 g Styrol und 1,66 g TDM kontinuierlich innerhalb von 45 Minuten zugesetzt (Zugabe 1). Gleichzeitig werden 1,7 g Cumolhydroperoxid (80%-ige Lösung in Cumol) als Initiator der Polymerisationsreaktion und 0,5 g Kaliumstearat kontinuierlich zugesetzt.

Anschließend werden 229,1 g Acrylnitril, 766,9 g Styrol und 5,0 g TDM als Mischung zugeführt. Gleichzeitg wird 1,5 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 1,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.28 Agglomeration der Kautschukpartikel aus Beispiel 2.5 und Pfropfreaktion unter Einsatz eines Redox-Initiatorsystems

4254,6 g des in Beispiel 2.5 hergestellten Kautschuklatex (QI gleich 40) werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Anschließend wird eine Lösung aus Dextrose, Natriumpyrosphosphat und Eisen(II)-sulfat in Wasser zugesetzt. Anschließend werden 76,36 gacrylonitril sowie 255,64 g Styrol und 3,32 g TDM kontinuierlich innerhalb von 45 Minuten zugesetzt (Zugabe 1). Gleichzeitig werden 3,4 g Cumolhydroperoxid (80%-ige Lösung in Cumol) als Initiator der Polymerisationsreaktion und 0,5 g Kaliumstearat kontinuierlich zugesetzt.

Anschließend werden 229,1 g Acrylnitril, 766,9 g Styrol und 10,0 g TDM als Mischung zugeführt. Gleichzeitg wird 3,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80° C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.29 Agglomeration der Kautschukpartikel aus Beispiel 2.4 und Pfropfreaktion unter Einsatz eines Redox-Initiatorsystems

4476,6 g des in Beispiel 2.4 hergestellten Kautschuklatex werden einer Agglomeration (bei 55° C, FG = 40%) wie in Beispiel 3 beschrieben unterzogen und anschließend mit 21 g Kaliumstearat als Emulgator versetzt. Anschließend wird Wasser in einer Menge zugesetzt, die nach erfolgter Polymerisation zu einem Feststoffgehalt von etwa 40% führt. Anschließend werden 81 g Acrylonitril sowie 324 g Styrol und 4,1 g TDM zugesetzt (Zugabe 1). Die Temperatur wird auf 58°C eingestellt. Anschließend wird eine Lösung aus Dextrose, Natriumpyrosphosphat und Eisen(II)-sulfat in Wasser zugesetzt. Sobald die Temperatur 60°C beträgt, werden 4,2 g Cumolhydroperoxid (80%-ige Lösung in Cumol) auf ein Mal als initiator der Polymerisationsreaktion zugegeben. Inner-halb von 60 Minuten wird die Temperatur auf 72°C erhöht.

Anschließend werden 243 g Acrylnitril, 972 g Styrol, 12,2 g TDM und 3,7 g Cumolhydroperoxid (80%-ige Lösung in Cumol) als in 930 g Wasser emulgierte Mischung sowie 6,8 g Kaliumstearat kontinuierlich zugefügt (Zugabe 2), wobei diese Zuführung innerhalb von 3 Stunden erfolgt, und die Temperatur auf 72°C konstant gehalten wird. Nach der Zugabe der Monomeren erfolgt eine erneute Zugabe von 2,4 g Cumolhydroperoxid (80%-ige Lösung in Cumol) und die Temperatur wird für 60 Minuten bie 72°C gehalten, um eine Vervollständigung der Polymerisation zu erhalten.

<u>4.30 Agglomeration der Kautschukpartikel aus Beispiel 2.2 und Pfropfreaktion unter Einsatz eines Redox-Initiatorsystems</u>

4254,6 g des in Beispiel 2.2 hergestellten Kautschuklatex (QI gleich 55) werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Nun wird eine Lösung aus Dextrose, Natriumpyrosphosphat und Eisen(II)-sulfat in Wasser zugesetzt. Anschließend werden 76,36 gAcrylonitril sowie 255,64 g Styrol und 3,32 g TDM kontinuierlich innerhalb von 45 Minuten zugesetzt (Zugabe 1). Gleichzeitig werden 3,4 g Cumolhydroperoxid (80%-ige Lösung in Cumol) als Initiator der Polymerisationsreaktion und 0,5 g Kaliumstearat kontinuierlich zugesetzt.

Anschließend werden 229,1 g Acrylnitril, 766,9 g Styrol und 10,0 g TDM als Mischung zugeführt. Gleichzeitg wird 3,0 g Cumolhydroperoxid (80%-ige Lösung in Cumol) als in 200 g Wasser emulgierte Mischung sowie 0,5 g Kaliumstearat kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.31 Agglomeration der Kautschukpartikel aus Beispiel 2.6b und Pfropfreaktion unter Einsatz eines Redox-Initiatorsystems

4743,24 g des in Beispiel 2.6b (QI = 40) hergestellten Kautschuklatex werden einer Agglomeration (bei 68°C, FG = 40%) wie in Beispiel 3 beschrieben unterzogen und anschließend mit 22,3 g Kaliumstearat als Emulgator versetzt. Anschließend wird Wasser in einer Menge zugesetzt, die nach erfolgter Polymerisation zu einem Feststoffgehalt von etwa 40% führt. Die Temperatur wird auf 68°C eingestellt.

Anschließend wird eine Lösung aus Dextrose (7,81 g), Natriumpyrosphosphat (8,7 g Decahydrat) und Eisen(II)-sulfat (0,118 g) in Wasser zugesetzt. Anschließend werden 74,7 g Acrylnitril sowie 298,8 g Styrol und 3,74 g tertiär-Dodecylmercaptan (TDM) kontinuierlich innerhalb von 45 Minuten zugesetzt (Zugabe 1). 3,8 g Cumolhydroperoxid (80%-ige Lösung in Cumol) als initiator wird der Polymerisationsreaktion auf einmal zugegeben.

Anschließend werden 224,1 g Acrylnitril, 896,4 g Styrol und 11,21 g TDM als Mischung zugeführt. Gleichzeitig wird 3,38 g Cumolhydroperoxid (80%-ige Lösung in Cumol) kontinuierlich zugefügt (Zugabe 2), wobei diese Zuführung innerhalb von 2 Stunden erfolgt, und wobei die Temperatur auf 80° C angehoben wird.

Nach der Zugabe der Monomeren erfolgt eine erneute Zugabe von 2,3 g Cumolhydroperoxid (80%-ige Lösung in Cumol) die Temperatur wird für 60 Minuten bie 80°C gehalten, um eine Vervollständigung der Polymerisation zu erhalten.

Beispiel 4.32 Agglomeration der Kautschukpartikel aus Beispiel 2.6b und Pfropfreaktion unter Einsatz eines Redox-Initiatorsystems

4743,24 g des in Beispiel 2.6b (QI = 40) hergestellten Kautschuklatex werden einer Agglomeration (bei 68°C, FG = 40%) wie in Beispiel 3 beschrieben unterzogen und anschließend mit 22,3 g Kaliumstearat als Emulgator versetzt. Anschließend wird Wasser in einer Menge zugesetzt, die nach erfolgter Polymerisation zu einem Feststoffgehalt von etwa 40% führt. Die Temperatur auf wird auf 68°C eingestellt.

Anschließend wird eine Lösung aus Dextrose (7,81 g), Natriumpyrosphosphat (17,4 g Decahydrat) und Eisen(II)-sulfat (0,237 g) in Wasser zugesetzt. Anschließend werden 74,7 g Acrylnitril sowie 298,8 g Styrol und 3,74 g tertiär-Dodecylmercaptan (TDM) kontinuierlich innerhalb von 45 Minuten zugesetzt (Zugabe 1). 3,8 g Cumolhydroperoxid (80%-ige Lösung in Cumol) als initiator wird der Polymerisationsreaktion auf einmal zugegeben.

Anschließend werden 224,1 g Acrylnitril, 896,4 g Styrol und 11,21 g TDM als Mischung zugeführt. Gleichzeitg wird 3,38 g Cumolhydroperoxid (80%-ige Lösung in Cumol) kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,3 g Cumolhydroperoxid (80%-ige Lösung in Cumol) die Temperatur wird für 60 Minuten bie 80°C gehalten, um eine Vervollständigung der Polymerisation zu erhalten.

Beispiel 4.33 Agglomeration der Kautschukpartikel aus Beispiel 2.6b und Pfropfreaktion unter Einsatz eines Redox-Initiatorsystems

4743,24 g des in Beispiel 2.6b (QI = 40) hergestellten Kautschuklatex werden einer Agglomeration (bei 68°C, FG = 40%) wie in Beispiel 3 beschrieben unterzogen und anschließend mit 22,3 g Kaliumstearat als Emulgator versetzt. Anschließend wird Wasser in einer Menge zugesetzt, die nach erfolgter Polymerisation zu einem Fest-stoffgehalt von etwa 40% führt. Die Temperatur auf wird auf 68°C eingestellt.

Anschließend wird eine Lösung aus Dextrose (7,81 g), Natriumpyrosphosphat (4,35 g Decahydrat) und Eisen(II)-sulfat (0,059 g) in Wasser zugesetzt.

Anschließend werden 74,7 g Acrylonitril sowie 298,8 g Styrol und 3,74 g tertiärDodecylmercaptan (TDM) kontinuierlich innerhalb von 45 Minuten zugesetzt (Zugabe 1). 3,8 g Cumolhydroperoxid (80%-ige Lösung in Cumol) als Initiator wird der Polymerisationsreaktion auf einmal zugegeben.

Anschließend werden 224,1 g Acrylnitril, 896,4 g Styrol und 11,21 g TDM als Mischung zugeführt. Gleichzeitg wird 3,38 g Cumolhydroperoxid (80%-ige Lösung in Cumol) kontinuierlich zugefügt (Zugabe 2), wobei diese Zuführung innerhalb von 2 Stunden erfolgt, und wobei die Temperatur auf 80°C angehoben wird. Nach der Zugabe der Monomeren erfolgt eine erneute Zugabe von 2,3 g Cumolhydroperoxid (80%-ige Lösung in Cumol) die Temperatur wird für 60 Minuten bie 80°C gehalten, um eine Vervollständigung der Polymerisation zu erhalten.

Beispiel 4.34 Agglomeration der Kautschukpartikel aus Beispiel 2.3 und Pfropfreaktion unter Einsatz eines Redox-Initiatorsystems

5265 g des in Beispiel 2.3 beschriebenen Kautschuklatex werden nach dem in Beispiel 3 beschrieben Verfahren agglomeriert und anschließend mit 20 g Kaliumstearat versetzt. Es folgt eine Wasserzugabe, wobei eine solche Wassermenge zum Einsatz kommt, dass die entstehende Reaktionsmischung einen Feststoffgehalt von etwa 40 % aufweist.

Anschließend wird eine Lösung von Dextrose, Natriumpyrophosphat und Eisensulfat in Wasser zugesetzt. Bei einer Temperatur von 68°C werden 4,96 g Cumolhydroperpoxid, 343,6 g Acrylnitril, 1.151,4 g Styrol und 14,94 g TDM kontinuierlich während eines Zeitraums von 2 Stunden und 45 Minuten hinzugefügt, wobei Cumolhydroperoxid (als 80 gew.% ige Lösung in Cumol) und TDM separat zugeführt werden und die Temperatur allmählich von 68°C auf 80,5°C steigt. Abschließend erfolgt eine erneute Zugabe von 2,25 g Cumolhydroperoxid und die Polymerisation wird für 60 Minuten förtgeführt. Diese Fahrweise der Redox-initiierten Reaktion führt zu einer vereinfachten Handhabung, einer, insbesondere in technischem Maßstab besseren Temperaturkontrolle und kürzeren Zykluszeiten.

Das so erhaltene Pfropfcopolymer hat eine bimodale Partikelgrößenverteilung, wobei die durchschnittliche Partikelgröße $d_{50}$ etwa 150 bis 350 nm beträgt, die Partikelgröße $d_{90}$ beträgt 400 bis 600 nm. Die Partikelgrößenverteilung weist ein erstes Maximum im Bereich von 50 bis 150 nm und ein zweites Maximum im Bereich von 200 bis 600 nm auf. Zu der so erhaltenen Copolymerdispersion werden 0,2 Gew.-% Stabilisator hinzugefügt und die erhaltene Mischung bei einer Temperatur von 60°C gekühlt und durch Zusatz einer 0,5 %igen Magnesiumsulfatlösung koaguliert. Es folgt ein Alterungsschritt bei 100°C für 10 Minuten. Anschließend wird die Reaktionsmischung abgekühlt, zentrifugiert und das erhaltene Copolymer mit Wasser gewaschen. Das Propfcopolymer hat noch eine Restfeuchte von etwa 30 %.

Beispiel 4.35 Agglomeration der Kautschukpartikel aus Beispiel 2.1 und Pfropfreaktion unter Einsatz von Peroxodisulfat

6267,4 g des in Beispiel 2.1 beschriebenen Kautschuklatex werden nach dem in Beispiel 3 beschrieben Verfahren bei 68°C agglomeriert und anschließend mit 25,7 g Kaliumstearat versetzt. Es folgt eine Wasserzugabe, wobei eine solche Wassermenge zum Einsatz kommt, dass die entstehende Reaktionsmischung einen Feststoffgehalt von etwa 40 % aufweist, sowie Zusatz von 1,7 g Kaliumperoxodisulfat.

Anschließend wird 45 g Acrylnitril, 180 g Styrol hinzugefügt (Zugabe 1). Anschließend erfolgt eine erneute Zugabe von 34 g Acrylnitril, 135 g Styrol hinzugefügt (Zugabe 2). Danach erfolgt eine dritte Zugabe von 101 g Acrylnitril, 405 g Styrol (Zugabe 3). Die drei Zugaben erfolgen binnen 180 Minuten, wobei Zugabe 1 innerhalb einer Stunde erfolgt. Nach der Hälfte der Zeit der Zugabe 1 beträgt die Temperatur 71°C. Nach der Zugabe der Monomere wird 1,7 g KPS zugesetzt und die Polymerisation wird für 60 Minuten fortgeführt.

Das so erhaltene Pfropfcopolymer hat eine bimodale Partikelgrößenverteilung, wobei die durchschnittliche Partikelgröße $d_{50}$ etwa 350 nm (HDF-Messung) beträgt.

Zu der so erhaltenen Copolymerdispersion werden 0,2 Gew.-% Stabilisator hinzugefügt und die erhaltene Mischung bei einer Temperatur von 60°C gekühlt und durch Zusatz einer 0,5 %igen Magnesiumsulfatlösung koaguliert. Es folgt ein Alterungsschritt bei 100°C für 10 Minuten. Anschließend wird die Reaktionsmischung abgekühlt, zentrifugiert und das erhaltene Copolymer mit Wasser gewaschen. Das Propfcopolymer hat noch eine Restfeuchte von etwa 30 %.

Beispiel 4.36 Agglomeration der Kautschukpartikel aus Beispiel 2.6b und Pfropfreaktion unter Einsatz eines Redox-Initiatorsystems

4254,6 g des in Beispiel 2.6b (QI = 40) hergestellten Kautschuklatex werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur auf wird auf 73°C eingestellt.
Anschließend wird eine Lösung aus Dextrose (6,9 g), Trilon B (0,32 g) und Eisen(II)-sulfat (0,194 g) in Wasser zugesetzt. Anschließend werden 66,4 g Acrylnitril sowie 265,6 g Styrol und 1,65 g tertiär-Dodecylmercaptan (TDM) kontinuierlich innerhalb von 45 Minuten zugesetzt (Zugabe 1). 3,4 g Cumolhydroperoxid (80%-ige Lösung in Cumol) als Initiator und 0,5 g Kaliumstearat werden der Polymerisationsreaktion kontinuierlich zugegeben.
Anschließend werden 199,2 g Acrylnitril, 796,8 g Styrol und 5 g TDM als Mischung zugeführt. Gleichzeitg wird 3,0 g Cumolhydroperoxid (80%-ige Lösung in Cumol) als Emulsion in 200g Wasser mit 0,5 g Kaliumstearat kontinuierlich zugefügt (Zugabe 2), wobei diese Zuführung innerhalb von 2 Stunden erfolgt, und wobei die Temperatur auf 80°C angehoben wird.
Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.37 Agglomeration der Kautschukpartikel aus Beispiel 2.6b und Pfropfreaktion unter Einsatz eines Redox-Initiatorsystems

4254,6 g des in Beispiel 2.6b (QI = 40) hergestellten Kautschuklatex werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur auf wird auf 73°C eingestellt.
Anschließend wird eine Lösung aus Dextrose (6,9 g), Trilon B (0,17 g) und Eisen(II)-sulfat (0,105 g) in Wasser zugesetzt. Anschließend werden 66,4 g Acrylnitril sowie 265,6 g Styrol und 1,65 g tertiär-Dodecylmercaptan (TDM) kontinuierlich innerhalb von 45 Minuten zugesetzt (Zugabe 1). 3,4 g Cumolhydroperoxid (80%-ige Lösung in Cumol) als-Initiator und 0,5 g Kaliumstearat werden der Polymerisationsreaktion kontinuierlich zugegeben.
Anschließend werden 199,2 g Acrylnitril, 796,8 g Styrol und 5 g TDM als Mischung zugeführt. Gleichzeitg wird 3,0 g Cumolhydroperoxid (80%-ige Lösung in Cumol) als Emulsion in 200g Wasser mit 0,5 g Kaliumstearat kontinuierlich zugefügt (Zugabe 2), wobei diese Zuführung innerhalb von 2 Stunden erfolgt, und wobei die Temperatur auf 80°C angehoben wird.
Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.38 Agglomeration der Kautschukpartikel aus Beispiel 2.6b und Pfropfreaktion unter Einsatz eines Redox-Initiatorsystems

4254,6 g des in Beispiel 2.6b (QI = 40) hergestellten Kautschuklatex werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur auf wird auf 73°C eingestellt.
Anschließend wird eine Lösung aus Rongalit C (2,8 g), Trilon B (0,17 g) und Eisen(II)-sulfat (0,105 g) in Wasser zugesetzt. Anschließend werden 66,4 g Acrylnitril sowie 265,6 g Styrol und 1,65 g tertiär-Dodecylmercaptan (TDM) kontinuierlich innerhalb von 45 Minuten zugesetzt (Zugabe 1). 3,4 g Cumolhydroperoxid (80%-ige Lösung in Cumol) als Initiator und 0,5 g Kaliumstearat werden der Polymerisationsreaktion kontinuierlich zugegeben.
Anschließend werden 199,2 g Acrylnitril, 796,8 g Styrol und 5 g TDM als Mischung zugeführt. Gleichzeitg wird 3,0 g Cumolhydroperoxid (80%-ige Lösung in Cumol) als Emulsion in 200g Wasser mit 0,5 g Kaliumstearat kontinuierlich zugefügt (Zugabe 2), wobei diese Zuführung innerhalb von 2 Stunden erfolgt, und wobei die Temperatur auf 80°C angehoben wird.

Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 4.39 Agglomeration der Kautschukpartikel aus Beispiel 2.6b und Pfropfreaktion unter Einsatz eines Redox-Initiatorsystems

4254,6 g des in Beispiel 2.6b (QI = 40) hergestellten Kautschuklatex werden einer Agglomeration (bei 68°C, FG = 40%) wie in Beispiel 3 beschrieben unterzogen und anschließend mit 20 g Kaliumstearat als Emulgator versetzt. Anschließend wird Wasser in einer Menge zugesetzt, die nach erfolgter Polymerisation zu einem Feststoffgehalt von etwa 40% führt. Die Temperatur auf wird auf 73°C eingestellt.

Anschließend wird eine Lösung aus Rongalit C (2,8 g), Trilon B (0,17 g) und Eisen(II)-sulfat (0,105 g) in Wasser zugesetzt. Anschließend werden 66,4 g Acrylonitril sowie 265,6 g Styrol und 3,32 g tertiär-Dodecylmercaptan (TDM) kontinuierlich innerhalb von 45 Minuten zugesetzt (Zugabe 1). 3,4 g Cumolhydroperoxid (80%-ige Lösung in Cumol) als Initiator und 0,5 g Kaliumstearat werden der Polymerisationsreaktion kontinuierlich zugegeben.

Anschließend werden 199,2 g Acrylnitril, 796,8 g Styrol und 10 g TDM als Mischung zugeführt. Gleichzeitg wird 3,0 g Cumolhydroperoxid (80%-ige Lösung in Cumol) als Emulsion in 200g Wasser mit 0,5 g Kaliumstearat kontinuierlich zugefügt (Zugabe 2), wobei diese Zuführung innerhalb von 2 Stunden erfolgt, und wobei die Temperatur auf 80°C angehoben wird.

Nach der Zugabe der Monomeren erfolgt eine erneute Zugabe von 2,0 g Cumolhydroperoxid (80%-ige Lösung in Cumol) und 0,5 g Kaliumstearat und die Temperatur wird für 60 Minuten bie 80°C gehalten, um eine Vervollständigung der Polymerisation zu erhalten.

Beispiel 5 Allgemeine Durchführung der Pfropfcopolymerisation

Zu dem agglomerierten Kautschuklatex aus Beispiel 3 erfolgte eine Zugabe von $H_2O$ und Kaliumstearat (bis zu 1,5 Gew.-%, bezogen auf B1). Anschließend erfolgt eine Zudosierung (Z4) der Komponenten des Redox-Initiatorsystems.

Dieses Redox-Initiatorsystem besteht z.B. aus einer wässrigen Mischung von:

- 0,3 bis 0,7 Gew.-% (bezogen auf B) eines Zuckers, z.B. Dextrose-Monohydrat, und
- 0,25 bis 0,9 Gew.-% (bezogen auf B) Natriumpyrophosphat-Decahydrat, und
- 0,001 bis 0,01Gew.-% (bezogen auf B) Eisensulfat-Heptahydrat, und
- 0 bis 0,4 Gew.-% (bezogen auf B) Cumolhydroperoxid (in Form einer 80 bis 90 gew.-%igen Lösung in Cumol),

wobei

- der Zucker, Natriumpyrophosphat-Decahydrat und Eisensulfat-Heptahydrat entweder zusammen oder separat in Wasser gelöst werden;
- die Dosierung der wässrigen Lösung oder wässrigen Lösungen der Komponenten als diskontinuierliche Zugabe bzw. Zugaben oder als kontinuierlicher Zulauf bzw. Zuläufe erfolgt;
- die Dosierung des Cumolhydroperoxids (in Form einer 80 bis 90 gew.-%igen Lösung in Cumol) - wenn überhaupt - als Zugabe oder als Zulauf erfolgt;
- die Geschwindigkeit des jeweiligen Zulaufs aus Z4 (falls Dosierung oder Dosierungen mittels Zulauf bzw. Zuläufe) gleichmäßig ein oder variiert werden kann;
- die Geschwindigkeit der Zuläufe in Schritt Z2 (falls es mehr als zwei Zuläufe gibt) gleich oder unterschiedlich sein.

Nach einer Wartezeit von 0 bis 30 Minuten bei einer semi-adiabatischen Fahrweise im Temperaturbereich von $75 \pm 10°C$ erfolgen:

- Zulauf (Z5a) von weniger als 35 Gew.-% der Gesamtmenge des agglomerierten Kautschuklatex (B) innerhalb von 40 Minuten als Mischung aus 75 bis 80 Gew.-% Styrol und 20 bis 25 Gew.-% Acrylnitril;
- Zulauf (Z5b) von 0,7 bis 1,2 Gew.-%, bezogen auf Z5a, tert.-Dodecylmercaptan (TDM) innerhalb von 40 Minuten;

und eventuell

- Zulauf (Z5c) von 0 bis 0,4 Gew.-%, bezogen auf B, Cumolhydroperoxid (in Form einer 80 bis 90 gew.-%igen Lösung in Cumol) innerhalb von 40 Minuten;

wobei die

- Zuläufe Z5a, Z5b und eventuell Z5c gleichzeitig oder sequentiell erfolgen können; oder
- Zulauf Z5b entweder separat oder als Mischung mit einem Teil des Zulaufs Z5a oder als Mischung mit dem kompletten Zulauf Z5a zudosiert werden kann;
- die Geschwindigkeit des jeweiligen Zulaufs gleichmäßig sein oder variiert werden kann;
- die Geschwindigkeit der Zuläufe von Z5a, Z5b und eventuell Z5c gleich oder unterschiedlich sein können.

Nach merklicher (mindestene mehrere Minuten) Wartezeit erfolgen:

- Zulauf (Z6a) der restlichen mindestens 65 Gew.-% der Gesamtmenge von agglomeriertem Kautschuklatex B innerhalb von 90 bis 190 Minuten als Mischung aus 75 bis 80 Gew.-% Styrol und 20 bis 25 Gew.-% Acrylnitril,
- Zulauf (Z6b) von 0,7 bis 1,2 Gew.-%, bezogen auf Monomermenge Z6a, tert.-Dodecylmercaptan (TDM) innerhalb von 90 bis 190 Minuten,

und

- Zulauf (Z6c) von 0,05 bis 0,4 Gew.-%, bezogen auf B2, Cumolhydroperoxid (in Form einer 80 bis 90 gew.-%igen Lösung in Cumol) innerhalb von 90 bis 190 Minuten,

wobei die

- Zuläufe Z6a, Z6b und Z6c gleichzeitig oder sequentiell erfolgen können;
- Zulauf Z6b entweder separat oder als Mischung mit einem Teil des Zulaufs Z6a oder als Mischung mit dem kompletten Zulauf Z6a zudosiert werden kann;
- die Geschwindigkeit des jeweiligen Zulaufs gleichmäßig sein oder variiert werden kann.

Cumolhydroperoxid wird zwingend in mindestens einem der Schritte Z2 oder Z5c zudosiert.
Die Geschwindigkeit des Zulaufs von Z5a und Z6a kann gleich oder unterschiedlich sein. Die Geschwindigkeit des Zulaufs von Z5b und Z6b kann gleich oder unterschiedlich sein. Die Geschwindigkeit des Zulaufs von Z5c und Z6c kann gleich oder unterschiedlich sein.
Bei dem sich ergebenden Pfropfcopolymerprodukt (B) ergibt sich eine breite Teilchengrößenverteilung von:

$d_{50}$ (Gewichtsmittel, Ultrazentrifuge) 200 +/- 100 nm,
$d_{50}$ (Zahlenmittel, Ultrazentrifuge) 110 +/- 30 nm.

Beispiel 6: Nachpolymerisation des Pfropfcopolymers (B)

Zur Reduzierung des Gehalts an Monomeren kann eine Nachpolymerisation mit 0 bis 0,4 Gew.-%, bezogen auf den agglomerierten Kautschuklatex B2, Cumolhydroperoxid (in Form einer 80 bis 90 gew.-%igen Lösung in Cumol) erfolgen. Diese wird bevorzugt in einem Zeitraum von 30 Minuten bis 3 Stunden bei einer Temperatur von 70 bis 90°C durchgeführt. Zur Absenkung des Restmonomergehalts kann auch die in EP-A 0771328 beschriebene Methode eingesetzt werden.
Die Herstellung des Kautschuklatex, die Agglomerisation und die Pfropfung sowie die Nachpolymerisation können im Prinzip entweder in einem Kessel oder durch Überführung in mehreren Kesseln erfolgen.

Beispiel 7: Allgemeine Aufarbeitung und Herstellung einer ABS-Formmasse

Die Aufarbeitung der in Beispiel 4 erhaltenen Dispersion enthaltend den Pfropfkautschuk B kann z.B. durch Ausfällen des Pfropfkautschuks durch Zusatz von Magnesiumsalz und Abtrennen des Wassers (zum Beispiel mittels Zentrifuge) erfolgen.
Die Herstellung der ABS-Formmasse durch Mischen und Extrudieren der CopolymerMatrix A, des Pfropfcopolymers B und gegebenenfalls weiterer Komponenten (D) erfolgt nach herkömmlichen Methoden, wobei als Zusätze bevorzugt folgende Komponenten in Frage kommen:

D1) 0 bis 1 Gew.-% eines sterisch gehinderten Phenols oder eines butylierten Reaktionsproduktes von p-Cresol und Dicyclopentadien (zum Beispiel Wingstay® L des Herstellers Goodyear) als Wärmestabilisator;
D2) 0 bis 1 Gew.-% eines divalenten Thioethers oder von Thiodipropionsäuredilaurylester (zum Beispiel Irganox®

PS 800 des Herstellers Ciba) als Stabilisator;

D3) 0 bis 1 Gew.-% Silikonöl;

D4) 0 bis 1 Gew.-% eines kationischen, anionischen oder nicht-ionischen Antistatikums, z.B. ein Ethylenoxid-Propylenoxid-Copolymeren (zum Beispiel Pluronic® des Herstellers BASF); sowie

D5) 0 bis 5 Gew.-% an Calciumstearat, eines Fettsäureesters oder Ethylen-bisstearämid (zum Beispiel Irgawax® des Herstellers Ciba) als Gleitmittel.

Beispiel 8 Allgemeine Herstellung der ABS-Formmasse

Der gemäß Beispiel 4 hergestellte Pfropfkautschuk mit einer Restfeuchte von etwa 30 % wurde in einen Extruder (Hersteller: Werner und Pfleiderer ZSK30) eingefüllt und durch einen Pressvorgang weitgehend von der Restfeuchte mechanisch befreit. Anschließend wurde die Copolymermatrix (A), die in Beispiel 1 beschrieben wurde, sowie die Hilfsstoffe (D) (siehe Beschreibung) sowie zwei weitere Hilfskomponenten (E) und (F) hinzugefügt. Als Hilfskomponente (E) wurde ein kommerziell erhältliches Polymer auf N-Phenylmaleinimid-Basis (Denker IP-MS-N) zugesetzt. Als weitere Hilfskomponente (F) wurde eine Mischung aus 0,1 Gew.% Wingstay (Polymer aus p-Cresol und Dicyclopentadien; Hersteller Goodyear) und 0,1 % Thiodipropionsäuredilaurylester (z. B. Irganox PS 800, Hersteller: Ciba) und 0,1 % Silikonöl zugesetzt.

Das verbleibende Restwasser wird durch Belüftung des Extruders und Erwärmen entfernt. Anschließend erfolgt das Extrudieren bei einer Temperatur von etwa 250°C bei 250 Umdrehungen pro Minute bei einem Durchsatz von 10 kg/h. Die Copolymer-mischung wurde extrudiert und nach dem Verschmelzen durch Einbringung in ein Wasserbad rasch auf eine Temperatur von 25°C abgekühlt. Anschließend wurde die Copolymermasse granuliert.

Beispiel 9.1 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.6b und Aufarbeitung wie in Beispiel 8 wird mit einem Pfropfkautschuk B mit einer Restfeuchte von etwa 30% und einer Copolymermatrix (A-3), wie in Beispiel 1 beschrieben, in einem Extruder (Hersteller: Werner und Pfleiderer ZSK30) eine Mischung der Polymeren so erzeugt, dass die Mischung schließlich gerade 31 Gew-.% B sowie 68,7 Gew.% der Copolymermatrix (A-3) sowie 0,3 Gew.-% der Hilfskomponenten (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Förmasse hat folgende Eigenschaften:

a) Charpy-Kerbschlagzähigkeit (ak) in $kJ/m^2$:

geprüft bei 23°C: 25.
geprüft bei -30°C: 9.

b) Glanzverhalten: gut.
c) Fließfähigkeit (MVR (ml/10')): 15.
d) Elastizität (E-Modul (MPa)): 2390.
e) Streckspannung (Tensile Strength at Yield): 46.

Beispiel 9.2 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.6c und Aufarbeitung wie in Beispiel 8 wird mit einem Pfropfkautschuk B mit einer Restfeuchte von etwa 30% und einer Copolymermatrix (A-9), wie in Beispiel 1 beschrieben, in einen Extruder (Hersteller: Werner und Pfleiderer ZSK30) eine Mischung der Polymeren so erzeugt, dass die Mischung gerade 40 Gew-.% B sowie 59,7 Gew.-% der Copolymermatrix (A-9) sowie 0,3 Gew.-% der Hilfskomponente (F) enthällt.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formasse hat folgende Eigenschaften:

a) Charpy-Kerbschlagzähigkeit (ak) in kJ/m$^2$:

geprüft bei 23°C: 36.
geprüft bei -30°C: 13.

b) Glanzverhalten: gut.
c) Fließfähigkeit (MVR (ml/10')): 2.
d) Elastizität (E-Modul (Mpa)): 2100.
e) Streckspannung (Tensile Strength at Yield): 45.

Beispiel 9.3 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.6c und Aufarbeitung wie in Beispiel 8 wird mit einem Pfropfkautschuk B mit einer Restfeuchte von etwa 30% und einer Copolymermatrix (A-9), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-9) sowie 0,3 Gew.-% der Hilfskomponente (F) enthällt.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formasse hat folgende Eigenschaften:

a) Charpy-Kerbschlagzähigkeit (ak) in kJ/m$^2$:

geprüft bei 23°C: 31.
geprüft bei -30°C: 12.

b) Glanzverhalten: gut.
c) Fließfähigkeit (MVR (ml/10')): 5.
d) Elastizität (E-Modul (Mpa)): 2332.
e) Streckspannung (Tensile Strength at Yield): 48.

Beispiel 9.4 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.6c und Aufarbeitung wie in Beispiel 8 wird mit einem Pfropfkautschuk B mit einer Restfeuchte von etwa 30% und einer Copolymermatrix (A-9), wie in Beispiel 1 beschrieben, in einen Extruder (Hersteller: Werner und Pfleiderer ZSK30) eine Mischung der Polymeren so erzeugt, dass die Mischung gerade 25 Gew.-% B sowie 74,7 Gew.-% der Copolymermatrix (A-9) sowie 0,3 Gew.-% der Hilfskomponente (F) enthällt.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formasse hat folgende Eigenschaften:

a) Charpy-Kerbschlagzähigkeit (ak) in kJ/m$^2$:

geprüft bei 23°C: 23.
geprüft bei -30°C: 9.

b) Glanzverhalten: gut.
c) Fließfähigkeit (MVR (ml/10')): 8.
d) Elastizität (E-Modul (Mpa)): 2600.
e) Streckspannung (Tensile Strength at Yield):

Beispiel 9.5 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.6c und Aufarbeitung wie in Beispiel 8 wird mit einem Pfropfkautschuk B mit einer Restfeuchte von etwa 30% und einer Copolymermatrix (A-8), wie in Beispiel 1 beschrieben, in einen Extruder (Hersteller: Werner und Pfleiderer ZSK30) eine Mischung der Polymeren so erzeugt, dass die Mischung gerade 31 Gew-.% B sowie 68,7 Gew.-% der Copolymermatrix (A-8) sowie 0,3 Gew.-% der Hilfskomponente (F) enthällt.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formasse hat folgende Eigenschaften:

a) Charpy-Kerbschlagzähigkeit (ak) in kJ/m$^2$:

geprüft bei 23°C: 24.
geprüft bei -30°C: 9.

b) Glanzverhalten: gut
c) Fließfähigkeit (MVR (ml/10')): 15.
d) Elastizität (E-Modul (Mpa)): 2410.
e) Streckspannung (Tensile Strength at Yield): 47.

Beispiel 9.6 Erstellung der ABS-Formmassen (Vergleich)

Ausgehend von einem Kautschuklatex aus Beispiel 2.7 (keine Agglomeration), gefolgt von einer Pfropfpolymerisation wie in Beispiel 4.7 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 41 Gew.-% B sowie 58,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 31.
geprüft bei -30°C: 12.

b) Glanzverhalten:
c) Fließfähigkeit (MVR (ml/10')): 15.
d) Elastizität (E-Modul (Mpa)): 1970.
e) Streckspannung (Tensile Strength at Yield): 40.

Beispiel 9.7 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.8 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 37 Gew.-% B sowie 62,7 Gew.-% der Copolymermatrix (A-1) sowie 0,3 Gew.-% der Hilfskomponentn (F) enthält.

Anschließend erfolgt das Extrudieren bei einer Temperatur von etwa 250°C blei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in kJ/m$^2$:

geprüft bei 23°C: 16.
geprüft bei -30°C: 8.

b) Glanzverhalten: schlecht.
c) Fließfähigkeit (MVR (ml/10')): 25.
d) Elastizität (E-Modul (Mpa)): 2080.
e) Streckspannung (Tensile Strength at Yield): 39.

Beispiel 9.8 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.9 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 35 Gew.-% B sowie 64,7 Gew.-% der Copolymermatrix (A-1) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25 C abgekühlt. Anschließend wurde die Copolymer-masse granuliert.
Die erhaltene ABS-Formmasse hat folgende Eigenschaften:

a) Charpy-Kerbschlagzähigkeit (ak) in kJ/m$^2$:

geprüft bei 23°C: 29.
geprüft bei -30°C: 8.

a) Glanzverhalten: schlecht.
c) Fließfähigkeit (MVR (ml/10')): 18.
d) Elastizität (E-Modul (Mpa)): 2175.
e) Streckspannung (Tensile Strength at Yield): 42.

Beispiel 9.9 Herstellung der ABS-Formmassen

Ausgehend von einem Kautschuklatex aus Beispiel 2.1 und Agglomeration wie in Beispiel 3.11, gefolgt von einer Pfropfpolymerisation wie in Beispiel 4.10 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 36 Gew.-% B sowie 63,7 Gew.-% der Copolymermatrix (A-1) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formmasse hat folgende Eigenschaften:

a) Charpy-Kerbschlagzähigkeit (ak) in kJ/m$^2$:

geprüft bei 23°C: 27.
geprüft bei -30°C: 8.

b) Glanzverhalten: gut.
c) Fließfähigkeit (MVR (ml/10')): 28.
d) Elastizität (E-Modul (Mpa)): 2170.
e) Streckspannung (Tensile Strength at Yield): 43.

Beispiel 9.10 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.10 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 36 Gew.-% B sowie 63,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25 °C abgekühlt. Anschließend wurde die Copolymermasse granuliert.

Die erhaltene ABS-Formmasse hat folgende Eigenschaften:

a) Charpy-Kerbschlagzähigkeit (ak) in $kJ/m^2$:

geprüft bei 23°C: 27.
geprüft bei -30°C: 8.

b) Glanzverhalten: gut.
c) Fließfähigkeit (MVR (ml/10')): 25.
d) Elastizität (E-Modul (Mpa)): 2200.
e) Streckspannung (Tensile Strength at Yield): 43.

Beispiel 9.11 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.11 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in $kJ/m^2$:

geprüft bei 23°C: 24.
geprüft bei -30°C: 8.

b) Glanzverhalten: gut.
c) Fließfähigkeit (MVR (ml/10')): 24.
d) Elastizität (E-Modul (Mpa)): 2250.
e) Streckspannung (Tensile Strength at Yield): 44.

Beispiel 9.12 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.12 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 22.
geprüft bei -30°C: 8.

b) Glanzverhalten: gut.
c) Fließfähigkeit (MVR (ml/10')): 23.
d) Elastizität (E-Modul (Mpa)): 2250.
e) Streckspannung (Tensile Strength at Yield): 44.

Beispiel 9.13 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.13 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 28 Gew.-% B sowie 71,7 Gew.-% der Copolymermatrix (A-1) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formmasse hat folgende Eigenschaften:

a) Charpy-Kerbschlagzähigkeit (ak) in kJ/m$^2$:

geprüft bei 23°C: 15.
geprüft bei -30°C: 6.

b) Glanzverhalten: gut.
c) Fließfähigkeit (MVR (ml/10')): 32.
d) Elastizität (E-Modul (Mpa)): 2500.
e) Streckspannung (Tensile Strength at Yield): 46.

Beispiel 9.14 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.14 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 37 Gew.-% B sowie 62,7 Gew.-% der Copolymermatrix (A-1) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formmasse hat folgende Eigenschaften:

a) Charpy-Kerbschlagzähigkeit (ak) in kJ/m$^2$:

geprüft bei 23°C: 31.
geprüft bei -30°C: 11.

b) Glanzverhalten: gut.
c) Fließfähigkeit (MVR (ml/10')): 11.
d) Elastizität (E-Modul (Mpa)): 2150.
e) Streckspannung (Tensile Strength at Yield): 44.

Beispiel 9.15 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.15 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 32 Gew.-% B sowie 67,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Förmmasse hat folgende Eigenschaften:

a) Charpy-Kerbschlagzähigkeit (ak) in $kJ/m^2$:

geprüft bei 23°C: 26.
geprüft bei -30°C: 9.

b) Glanzverhalten: gut.
c) Fließfähigkeit (MVR (ml/10')): 17.
d) Elastizität (E-Modul (Mpa)): 2350.
e) Streckspannung (Tensile Strength at Yield): 46.

Beispiel 9.16 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.15 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 34 Gew.-% B sowie 65,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Förmmasse hat folgende Eigenschaften:

a) Charpy-Kerbschlagzähigkeit (ak) in $kJ/m^2$:

geprüft bei 23°C: 31.
geprüft bei -30°C: 10.

b) Glanzverhalten: gut.
c) Fließfähigkeit (MVR (ml/10')): 16.
d) Elastizität (E-Modul (Mpa)): 2213.
e) Streckspannung (Tensile Strength at Yield): 43.

Beispiel 9.17 Herstellung der ABS-Formmassen

Ausgehend von einem Kautschuklatex aus Beispiel 2.1 und Agglomeration wie in Beispiel 3.11, gefolgt von einer Pfropfpolymerisation wie in Beispiel 4.15 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 35 Gew.-% B sowie 64,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 31.
geprüft bei -30°C: 10.

b) Glanzverhalten: gut.
c) Fließfähigkeit (MVR (ml/10')): 16.
d) Elastizität (E-Modul (Mpa)): 2213.
e) Streckspannung (Tensile Strength at Yield): 43.

Beispiel 9.18 Herstellung der ABS-Formmassen

Ausgehend von einem Kautschuklatex aus Beispiel 2.1 und Agglomeration wie in Beispiel 3.2, gefolgt von einer Pfropfpolymerisation wie in Beispiel 4.15 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 36 Gew.-% B sowie 63,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23 C: 32.
geprüft bei-30°C: 11.

b) Glanzverhalten: gut.
c) Fließfähigkeit (MVR (ml/10')): 15.
d) Elastizität (E-Modul (Mpa)): 2200.
e) Streckspannung (Tensile Strength at Yield): 43.

Beispiel 9:19 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.16a und Aufarbeitung wie in Beispiel 8 wird mit einem Pfropfkautschuk B mit einer Restfeuchte von etwa 30% und einer Copolymermatrix (A-7), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-7) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 27.
geprüft bei -30°C: 9.

b) Glanzverhalten: gut.
c) Fließfähigkeit (MVR (ml/10')): 11.
d) Elastizität (E-Modul (Mpa)): 2260.
e) Streckspannung (Tensile Strength at Yield): 45.

Beispiel 9.20 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.16a und Aufarbeitung wie in Beispiel 8 wird mit einem Pfropfkautschuk B mit einer Restfeuchte von etwa 30% und einer Copolymermatrix (A-7), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-7) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in $kJ/m^2$:

geprüft bei 23°C: 23.
geprüft bei -30°C: 8.

b) Glanzverhalten: gut.
c) Fließfähigkeit (MVR (ml/10')): 12.
d) Elastizität (E-Modul (Mpa)): 2385.
e) Streckspannung (Tensile Strength at Yield): 47.

Beispiel 9.21 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.16a und Aufarbeitung wie in Beispiel 8 wird mit einem Pfropfkautschuk B mit einer Restfeuchte von etwa 30% und einer Copolymermatrix (A-7), wie in Beispiel 1 beschrieben, in einen Extruder (Hersteller: Werner und Pfleiderer ZSK30) eine Mischung der Polymeren so erzeugt, dass die Mischung gerade 25 Gew.-% B sowie 74,7 Gew.-% der Copolymermatrix (A-7) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in $kJ/m^2$:

geprüft bei 23°C: 19.
geprüft bei -30°C: 6.

b) Glanzverhalten: gut.
c) Fließfähigkeit (MVR (ml/10')): 14.
d) Elastizität (E-Modul (Mpa)): 2540.
e) Streckspannung (Tensile Strength at Yield): 49.

Beispiel 9.22 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.16b und Aufarbeitung wie in Beispiel 8 wird mit einem Pfropfkautschuk B mit einer Restfeuchte von etwa 30% und einer Copolymermatrix (A-9), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-9) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in kJ/m$^2$:

geprüft bei 23°C: 30.
geprüft bei -30°C: 9.

b) Glanzverhalten: gut.
c) Fließfähigkeit (MVR (ml/10')): 11.
d) Elastizität (E-Mödul (Mpa)): 2360.
e) Streckspannung (Tensile Strength at Yield): 47.

Beispiel 9.23 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.16b und Aufarbeitung wie in Beispiel 8 wird mit einem Pfropfkautschuk B mit einer Restfeuchte von etwa 30% und einer Copolymermatrix (A-9), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-9) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25 °C abgekühlt. Anschließend wurde die Copolymer-masse granuliert.
Die erhaltene ABS-Formmasse hat folgende Eigenschaften:

a) Charpy-Kerbschlagzähigkeit (ak) in kJ/m$^2$:

geprüft bei 23°C: 24.
geprüft bei -30°C: 8.

b) Glanzverhalten: gut.
c) Fließfähigkeit (MVR (ml/10')): 18.
d) Elastizität (E-Modul (Mpa)): 2440.
e) Streckspannung (Tensile Strength at Yield): 48.

Beispiel 9.24 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.16b und Aufarbeitung wie in Beispiel 8 wird mit einem Pfropfkautschuk B mit einer Restfeuchte von etwa 30% und einer Copolymermatrix (A-9), wie in Beispiel 1 beschrieben, in einen Extruder (Hersteller: Werner und Pfleiderer ZSK30) eine Mischung der Polymeren so erzeugt, dass die Mischung gerade 22 Gew.-% B sowie 77,7 Gew.-% der Copolymermatrix (A-9) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25 °C abgekühlt. Anschließend wurde die Copolymermasse granuliert.
Die erhaltene ABS-Formmasse hat folgende Eigenschaften:

a) Charpy-Kerbschlagzähigkeit (ak) in kJ/m$^2$:

geprüft bei 23°C: 17.
geprüft bei -30°C: 6.

b) Glanzverhalten: gut.
c) Fließfähigkeit (MVR (ml/10')): 14.
d) Elastizität (E-Modul (Mpa)): 2650.
e) Streckspannung (Tensile Strength at Yield): 53.

Beispiel 9.25 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.17 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 35 Gew.-% B sowie 64,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

    a) Charpy-Kerbschlagzähigkeit (ak) in kJ/m$^2$:

        geprüft bei 23°C: 24.
        geprüft bei -30°C: 8.

    b) Glanzverhalten: gut.
    c) Fließfähigkeit (MVR (ml/10')): 27.
    d) Elastizität (E-Modul (Mpa)): 2260.
    e) Streckspannung (Tensile Strength at Yield): 44.

Beispiel 9.26 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.18 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 35 Gew.-% B sowie 64,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

    a) Charpy-Kerbschlagzähigkeit (ak) in kJ/m$^2$:

        geprüft bei 23°C: 23.
        geprüft bei -30°C: 8.

    b) Glanzverhalten: gut.
    c) Fließfähigkeit (MVR (ml/10')): 28.
    d) Elastizität (E-Modul (Mpa)):2280.
    e) Streckspannung (Tensile Strength at Yield): 44.

Beispiel 9.27 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.19 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 36 Gew.-% B sowie 63,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in kJ/m$^2$:

geprüft bei 23°C: 24.
geprüft bei -30°C: 8.

b) Glanzverhalten: gut.
c) Fließfähigkeit (MVR (ml/10')): 28.
d) Elastizität (E-Modul (Mpa)): 2270.
e) Streckspannung (Tensile Strength at Yield): 44.

Beispiel 9.28 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.20 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 35 Gew.-% B sowie 64,7 Gew.-% der Copolymermatrix (A-1) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formmasse hat folgende Eigenschaften:

a) Charpy-Kerbschlagzähigkeit (ak) in kJ/m$^2$:

geprüft bei 23°C: 26.
geprüft bei -30°C: 8.

b) Glanzverhalten: gut.
c) Fließfähigkeit (MVR (ml/10')): 21.
d) Elastizität (E-Modul (Mpa)): 2265.
e) Streckspannung (Tensile Strength at Yield): 45.

Beispiel 9.29 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.21 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, däss die Mischung gerade 34 Gew.-% B sowie 65,7 Gew.-% der Copolymermatrix (A-1) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formmasse hat folgende Eigenschaften:

a) Charpy-Kerbschlagzähigkeit (ak) in kJ/m$^2$:

geprüft bei 23°C: 21.
geprüft bei -30°C: 8.

b) Glanzverhalten: gut.
c) Fließfähigkeit (MVR (ml/10')): 26.
d) Elastizität (E-Modul (Mpa)): 2250.
e) Streckspannung (Tensile Strength at Yield): 45.

Beispiel 9.30 Herstellung der ABS-Formmassen (Vergleich)

Ausgehend von einem Kautschuklatex aus Beispiel 2.6c und Agglomeration wie in Beispiel 3.6, gefolgt von einer Pfropfpolymerisation wie in Beispiel 4.22 und Aufarbeitung wie in Beispiel 8 wird mit einem Pfropfkautschuk B mit einer Restfeuchte von etwa 30% und einer Copolymermatrix (A-10), wie in Beispiel 1 beschrieben, in einen Extruder (Hersteller: Werner und Pfleiderer ZSK30) eine Mischung der Polymeren so erzeugt, dass die Mischung gerade 32 Gew.-% B sowie 67,7 Gew.-% der Copolymermatrix (A-10) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in $kJ/m^2$:

geprüft bei 23°C: 34.
geprüft bei -30°C: 9.

b) Glanzverhalten: gut.
c) Fließfähigkeit (MVR (ml/10')): 18.
d) Elastizität (E-Modul (Mpa)): 2375.
e) Streckspannung (Tensile Strength at Yield): 45.

Beispiel 9.31 Herstellung derABS-Formmassen (Vergleich)

Ausgehend von einem Kautschuklatex aus Beispiel 2.6c und Agglomeration wie in Beispiel 3.6, gefolgt von einer Pfropfpolymerisation wie in Beispiel 4.22 und Aufarbeitung wie in Beispiel 8 wird mit einem Pfropfkautschuk B mit einer Restfeuchte von etwa 30% und einer Copolymermatrix (A-10), wie in Beispiel 1 beschrieben, in einen Extruder (Hersteller: Werner und Pfleiderer ZSK30) eine Mischung der Polymeren so erzeugt, dass die Mischung gerade 37 Gew.-% B sowie 62,7 Gew.-% der Copolymermatrix (A-10) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in $kJ/m^2$:

geprüft bei 23°C: 40.
geprüft bei -30°C: 13.

b) Glanzverhalten: gut.
c) Fließfähigkeit (MVR (ml/10')): 11.
d) Elastizität (E-Modul (Mpa)): 2150.
e) Streckspannung (Tensile Strength at Yield): 42.

Beispiel 9.32 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.23 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung gerade 31 Gew.-% B sowie 68,7 Gew.-% der Copolymermatrix (A-1) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in kJ/m$^2$:

geprüft bei 23°C: 20.
geprüft bei -30°C: 8.

b) Glanzverhalten: gut.
c) Fließfähigkeit (MVR (ml/10')): 27.
d) Elastizität (E-Mödul (Mpa)): 2330.
e) Streckspannung (Tensile Strength at Yield): 46.

Beispiel 9.33 Herstellung der ABS-Formmassen (Vergleich)

Ausgehend von einem Kautschuklatex aus Beispiel 2.6c und Agglomeration wie in Beispiel 3.6, gefolgt von einer Pfropfpolymerisation wie in Beispiel 4.24 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-11) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringurig in ein Wasserbad rasch auf eine Temperatur von 25°C abgekühlt. Anschließend wurde die Copolymermasse granuliert.
Die erhaltene ABS-Formmasse hat folgende Eigenschaften:

a) Charpy-Kerbschlagzähigkeit (ak) in kJ/m$^2$:

geprüft bei 23°C: 31.
geprüft bei -30°C: 12.

b) Glanzverhalten: sehr gut.
c) Fließfähigkeit (MVR (ml/10')): 18.
d) Elastizität (E-Modul (Mpa)): 2400.
e) Streckspannung (Tensile Strength at Yield): 45.

Beispiel 9.34 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.25 und Aufarbeitung wie in Beispiel 8 wird mit einem Pfropfkautschuk B mit einer Restfeuchte von etwa 30% und einer Copolymermatrix (A-12), wie in Beispiel 1 beschrieben, in einen Extruder (Hersteller: Werner und Pfleiderer ZSK30) eine Mischung der Polymeren so erzeugt, dass die Mischung gerade 36 Gew.-% B sowie 63,7 Gew.-% der Copolymermatrix (A-12) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formmasse hat folgende Eigenschaften:

a) Charpy-Kerbschlagzähigkeit (ak) in kJ/m$^2$:

geprüft bei 23°C: 28.
geprüft bei -30°C: 11.

b) Glanzverhalten: sehr gut.
c) Fließfähigkeit (MVR (ml/10')): 17.
d) Elastizität (E-Modul (Mpa)): 2195.
e) Streckspannung (Tensile Strength at Yield): 45.

Beispiel 9.35 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.26 und Aufarbeitung wie in Beispiel 8 wird mit einem Pfropfkautschuk B mit einer Restfeuchte von etwa 30% und einer Copolymermatrix (A-12), wie in Beispiel 1 beschrieben, in einen Extruder (Hersteller: Werner und Pfleiderer ZSK30) eine Mischung der Polymeren so erzeugt, dass die Mischung gerade 35 Gew.-% B Sowie 64,7 Gew.-% der Copolymermatrix (A-12) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in $kJ/m^2$:

geprüft bei 23°C: 29.
geprüft bei -30°C: 12.

b) Glanzverhalten: gut.
c) Fließfähigkeit (MVR (ml/10')): 17.
d) Elastizität (E-Modul (Mpa)): 2241.
e) Streckspannung (Tensile Strength at Yield): 45.

Beispiel 9.36 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.27 und Aufarbeitung wie in Beispiel 8 wird mit einem Pfropfkautschuk B mit einer Restfeuchte von etwa 30% und einer Copolymermatrix (A-12), wie in Beispiel 1 beschrieben, in einen Extruder (Hersteller: Werner und Pfleiderer ZSK30) eine Mischung der Polymeren so erzeugt, dass die Mischung gerade 35 Gew.-% B sowie 64,7 Gew.-% der Copolymermatrix (A-12) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

a) Charpy-Kerbschlagzähigkeit (ak) in $kJ/m^2$:

geprüft bei 23°C: 34.
geprüft bei -30°C: 12.

b) Glanzverhalten: gut.
c) Fließfähigkeit (MVR (ml/10')): 12.
d) Elastizität (E-Modul (Mpa)): 2250.
e) Streckspannung (Tensile Strength at Yield): 45.

Beispiel 9.37 Herstellung der ABS-Formmassen (Vergleich)

Ausgehend von einem Kautschuklatex aus Beispiel 2.5 und Agglomeration wie in Beispiel 3.6, gefolgt von einer Pfropfpolymerisation wie in Beispiel 4.28 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung gerade 32 Gew.-% B sowie 67,7 Gew.-% der Copolymermatrix (A-11) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 32.
geprüft bei -30°C: 12.

b) Glanzverhalten: sehr gut.
c) Fließfähigkeit (MVR (ml/10')): 17.
d) Elastizität (E-Modul (Mpa)): 2360.
e) Streckspannung (Tensile Strength at Yield): 46.

Beispiel 9.38 Herstellung der ABS-Formmassen (Vergleich)

Ausgehend von einem Kautschuklatex aus Beispiel 2.4 und Agglomeration wie in Beispiel 3.6, gefolgt von einer Pfropfpolymerisation wie in Beispiel 4.29 und Aufarbeitung wie in Beispiel 8 wird mit einem Pfropfkautschuk B mit einer Restfeuchte von etwa 30% und einer Copolymermatrix (A-5), wie in Beispiel 1 beschrieben, in einen Extruder (Hersteller: Werner und Pfleiderer ZSK30) eine Mischung der Polymeren so erzeugt, dass die Mischung gerade 28 Gew.-% B sowie 71,7 Gew.-% der Copolymermatrix (A-5) sowie 0,3 Gew.-% der Hilfskomponente,(F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formmasse hat folgende Eigenschaften:

a) Charpy-Kerbschlagzähigkeit (ak) in kJ/m$^2$:

geprüft bei 23°C: 29.
geprüft bei -30°C: 9.

b) Glanzverhalten: sehr gut.
c) Fließfähigkeit (MVR (ml/10')): 22.
d) Elastizität (E-Modul (Mpa)): 2551.
e) Streckspannung (Tensile Strength al Yield): 45.

Beispiel 9.39 Herstellung der ABS-Formmassen (Vergleich)

Ausgehend von einem Kautschuklatex aus Beispiel 2.2 und Agglomeration wie in Beispiel 3.6, gefolgt von einer Pfropfpolymerisation wie in Beispiel 4.30 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-11) sowie 0,3 Gew.-% der Hilfskomponente (F) enthält.
Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formmasse hat folgende Eigenschaften:

a) Charpy-Kerbschlagzähigkeit (ak) in kJ/m$^2$:

geprüft bei 23°C: 32.
geprüft bei -30°C: 12.

b) Glanzverhalten: sehr gut.
c) Fließfähigkeit (MVR (ml/10')): 19.
d) Elastizität (E-Modul (Mpa)): 2420.
e) Streckspannung (Tensile Strength at Yield): 47.

Beispiel 9.40 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.31 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-11) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 33.
geprüft bei -30°C: 9.

b) Glanzverhalten: gut.
c) Fließfähigkeit (MVR (ml/10')): 19.
d) Elastizität (E-Modul (Mpa)): 2415.
e) Streckspannung (Tensile Strength at Yield): 47.

Beispiel 9.41 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.32 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung gerade 28 Gew.-% B sowie 71,7 Gew.-% der Copolymermatrix (A-11) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 35.
geprüft bei -30°C: 10.

b) Glanzverhalten: gut.
c) Fließfähigkeit (MVR (ml/10')): 17.
d) Elastizität (E-Modul (Mpa)): 2435.
e) Streckspannung (Tensile Strength at Yield): 47.

Beispiel 9.42 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.33 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-11) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 34.
geprüft bei -30°C: 11.

b) Glanzverhalten : sehr gut.
c) Fließfähigkeit (MVR (mol/10')): 18.
d) Elastizität (E-Modul (Mpa)): 2400.
e) Streckspannung (Tensile Strength at Yield): 47.

Beispiel 9.43 Herstellung der ABS-Formmassen (Vergleich)

Ausgehend von einem Kautschuklatex aus Beispiel 2.3 und Agglomeration wie in Beispiel 3.6, gefolgt von einer Pfropfpolymerisation wie in Beispiel 4.34 und Aufarbeitung wie in Beispiel 8 wird mit einem Pfropfkautschuk B mit einer Restfeuchte von etwa 30% und einer Copolymermatrix (A-5), wie in Beispiel 1 beschrieben, in einen Extruder (Hersteller: Werner und Pfleiderer ZSK30) eine Mischung der Polymeren so erzeugt, dass die Mischung gerade 25 Gew.-% B sowie 74,7 Gew.-% der Copolymermatrix (A-5) sowie 0,3 Gew.-% der Hilfskömponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 25.
geprüft bei -30°C: 9.

b) Glanzverhalten: gut.
c) Fließfähigkeit (MVR (ml/10')): 15.
d) Elastizität (E-Modul (Mpa)): 2645.
e) Streckspannung (Tensile Strength at Yield): 51.

Beispiel 9.44 Herstellung der ABS-Formmassen (Vergleich)

Ausgehend von einem Kautschuklatex aus Beispiel 2.3 und Agglomeration wie in Beispiel 3.6, gefolgt von einer Pfropfpolymerisation wie in Beispiel 4.34 und Aufarbeitung wie in Beispiel 8 wird mit einem Pfropfkautschuk B mit einer Restfeuchte von etwa 30% und einer Copolymermatrix (A-5), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-5) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 35.
geprüft bei -30°C: 12.

b) Glanzverhalten: sehr gut.
c) Fließfähigkeit (MVR (ml/10')): 12.
d) Elastizität (E-Modul (Mpa)): 2450.
e) Streckspannung (Tensile Strength at Yield): 48.

Beispiel 9.45 Herstellung der ABS-Formmassen (Vergleich)

Ausgehend von einem Kautschuklatex aus Beispiel 2.3 und Agglomeration wie in Beispiel 3.6, gefolgt von einer Pfropfpolymerisation wie in Beispiel 4.34 und Aufarbeitung wie in Beispiel 8 wird mit einem Pfropfkautschuk B mit einer Restfeuchte von etwa 30% und einer Copolymermatrix (A-5), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-5) sowie 0,3 Gew.-% der Hilfskomponenten (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

  a) Charpy-Kerbschlagzähigkeit (ak) in kJ/m$^2$:

     geprüft bei 23°C: 37.
     geprüft bei -30°C: 13.

  b) Glanzverhalten: sehr gut.
  c) Fließfähigkeit (MVR (ml/10')): 11.
  d) Elastizität (E-Modul (Mpa)): 2360.
  e) Streckspannung (Tensile Strength at Yield): 46.

Beispiel 9.46 Herstellung der ABS-Formmassen (Vergleich)

Ausgehend von einem Kautschuklatex aus Beispiel 2.3 und Agglomeration wie in Beispiel 3.6, gefolgt von einer Pfropfpolymerisation wie in Beispiel 4.34 und Aufarbeitung wie in Beispiel 8 wird mit einem Pfropfkautschuk B mit einer Restfeuchte von etwa 30% und einer Copolymermatrix (A-4), wie in Beispiel 1 beschrieben, in einen Extruder (Hersteller: Werner und Pfleiderer ZSK30) eine Mischung der Polymeren so erzeugt, dass die Mischung gerade 27 Gew.-% B sowie 72,7 Gew.-% der Copolymermatrix (A-4) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.

Die erhaltene ABS-Formmasse hat folgende Eigenschaften:

  a) Charpy-Kerbschlagzähigkeit (ak) in kJ/m$^2$:

     geprüft bei 23°C: 29.
     geprüft bei -30°C: 9.

  b) Glanzverhalten: sehr gut.
  c) Fließfähigkeit (MVR (ml/10')): 15.
  d) Elastizität (E-Modul (Mpa)): 2660.
  e) Streckspannung (Tensile Strength at Yield): 50.

Beispiel 9.47 Herstellung der ABS-Formmassen (Vergleich)

Ausgehend von einem Kautschuklatex aus Beispiel 2.3 und Agglomeration wie in Beispiel 3.6, gefolgt von einer Pfropfpolymerisation wie in Beispiel 4.34 und Aufarbeitung wie in Beispiel 8 wird mit einem Pfropfkautschuk B mit einer Restfeuchte von etwa 30% und einer Copolymermatrix (A-4), wie in Beispiel 1 beschrieben, in einen Extruder (Hersteller: Werner und Pfleiderer ZSK30) eine Mischung der Polymeren so erzeugt, dass die Mischung gerade 33 Gew.-% B sowie 66,7 Gew.-% der Copolymermatrix (A-4) sowie 0,3 Gew.-% der Hilfskomponente (F) enthält.

Anschließend erfolgt das Extrudieren bei einer Temperatur von etwa 250° C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formmasse hat folgende Eigenschaften:

a) Charpy-Kerbschlagzähigkeit (ak) in kJ/m$^2$:

geprüft bei 23°C: 36.
geprüft bei -30°C: 12.

b) Glanzverhalten: sehr gut.
c) Fließfähigkeit (MVR (ml/10')): 14.
d) Elastizität (E-Modul (Mpa)): 2460.
e) Streckspannung (Tensile Strength at Yield): 48.

Beispiel 9.48 Herstellung der ABS-Formmassen (Vergleich)

Ausgehend von einem Kautschuklatex aus Beispiel 2.1 und Agglomeration wie in Beispiel 3.6, gefolgt von einer Pfropfpolymerisation wie in Beispiel 4.35 und Aufarbeitung wie in Beispiel 8 wird mit einem Pfropfkautschuk B mit einer Restfeuchte von etwa 30% und einer Copolymermatrix (A-1), wie in Beispiel 1 beschrieben, in einen Extruder (Hersteller: Werner und Pfleiderer ZSK30) eine Mischung der Polymeren so erzeugt, dass die Mischung schließlich gerade 27 Gew-.% B sowie 72,7 Gew.% der Copolymermatrix (A-1) sowie 0,3 Gew.-% der Hilfskomponenten (F) enthält.
Anschließend erfolgt das Extrudieren bei einer Temperatur von etwa 250 C bei 250 Umdrehungen pro Minute bei einem Durchsatzt von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formasse hat folgende Eigenschaften:

a) Charpy-Kerbschlagzähigkeit (ak) in kJ/m$^2$:

geprüft bei 23°C: 28.
geprüft bei -30°C: 10.

b) Glanzverhalten: gut.
c) Fließfähigkeit (MVR (ml/10')): 18.
d) Elastizität (E-Modul (Mpa)): 2125.
e) Streckspannung (Tensile Strength at Yield): 41.

Beispiel 9.49 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.36 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung schließlich gerade 31 Gew-.% B sowie 68,7 Gew.% der Copolymermatrix (A-11) sowie 0,3 Gew.-% der Hilfskomponenten (F) enthällt.
Anschließend erfolgt das Extrudieren bei einer Temperatur von etwa 250°C bei 250 Umdrehungen pro Minute bei einem Durchsatzt von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formasse hat folgende Eigenschaften:

a) Charpy-Kerbschlagzähigkeit (ak) in kJ/m$^2$:

geprüft bei 23°C: 33.
geprüft bei -30°C: 12.

b) Glanzverhalten: gut.
c) Fließfähigkeit (MVR (ml/10')): 11.
d) Elastizität (E-Modul (Mpa)): 2400.
e) Streckspannung (Tensile Strength at Yield): 48.

Beispiel 9.50 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.37 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung schließlich gerade 31 Gew-.% B sowie 68,7 Gew.% der Copolymermatrix (A-11) sowie 0,3 Gew.-% der Hilfskomponenten (F) enthällt.
Anschließend erfolgt das Extrudieren bei einer Temperatur von etwa 250°C bei 250 Umdrehungen pro Minute bei einem Durchsatzt von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.
Die erhaltene ABS-Formasse hat folgende Eigenschaften:

a) Charpy-Kerbschlagzähigkeit (ak) in kJ/m$^2$:

geprüft bei 23°C: 34.
geprüft bei-30°C: 12.

b) Glanzverhalten: gut.
c) Fließfähigkeit (MVR (ml/10')): 10.
d) Elastizität (E-Modul (Mpa)): 2400.
e) Streckspannung (Tensile Strength at Yield): 48.

Beispiel 9.51 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.38 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung schließlich gerade 33 Gew-.% B sowie 66,7 Gew.% der Copolymermatrix (A-11) sowie 0,3 Gew.-% der Hilfskomponenten (F) enthällt.
Anschließend erfolgt das Extrudieren bei einer Temperatur von etwa 250°C bei 250 Umdrehungen pro Minute bei einem Durchsatzt von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formasse hat folgende Eigenschaften:

a) Charpy-Kerbschlagzähigkeit (ak) in kJ/m$^2$:

geprüft bei 23°C: 37.
geprüft bei -30°C: 12.

b) Glanzverhalten: gut.
c) Fließfähigkeit (MVR (ml/10')): 10.
d) Elastizität (E-Modul (Mpa)): 2370.
e) Streckspannung (Tensile Strength at Yield): 47.

Beispiel 9.52 Herstellung der ABS-Formmassen (Vergleich)

Ausgehend von einem Kautschuklatex aus Beispiel 2.6b und Agglomeration wie in Beispiel 3.6, gefolgt von einer Pfropfpolymerisation wie in Beispiel 4.39 und Aufarbeitung wie in Beispiel 8 wird mit einem Pfropfkautschuk B mit einer Restfeuchte von etwa 30% und einer Copolymermatrix (A-11), wie in Beispiel 1 beschrieben, in einen Extruder (Hersteller: Werner und Pfleiderer ZSK30) eine Mischung der Polymeren so erzeugt, dass die Mischung schließlich gerade 34 Gew-.% B sowie 65,7 Gew.% der Copoly-mermatrix (A-11) sowie 0,3 Gew.-% der Hilfskomponenten (F) enthällt.
Anschließend erfolgt das Extrudieren bei einer Temperatur von etwa 250°C bei 250 Umdrehungen pro Minute bei einem Durchsatzt von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymermasse granuliert.

Die erhaltene ABS-Formasse hat folgende Eigenschaften:

a) Charpy-Kerbschlagzähigkeit (ak) in $kJ/m^2$:

geprüft bei 23°C: 37.
geprüft bei -30°C: 12.

b) Glanzverhalten: gut.
c) Fließfähigkeit (MVR (ml/10')): 10.
d) Elastizität (E-Modul (Mpa)): 2350.
e) Streckspannung (Tensile Strength at Yield): 45.

Beispiel 9.53 Herstellung der ABS-Formmassen

Ausgehend von einem Kautschuklatex aus Beispiel 2.2 und Agglomeration wie in Beispiel 3, gefolgt von einer Pfropfpolymerisation wie in Beispiel 4.2b und Aufarbeitung wie in Beispiel 8 wird mit einem Pfropfkautschuk B mit einer Restfeuchte von etwa 30 % und einer Copolymermatrix (A-5), wie in Beispiel 1 beschrieben, in einen Extruder (Hersteller: Werner und Pfleiderer ZSK30) eine Mischung der Polymeren so erzeugt, dass die Mischung gerade 30 Gew.-% B sowie 69,7 Gew.-% der Copolymermatrix (A-2) sowie 0,3 Gew.-% der Hilfskomponente (F) enthält.

Anschließend erfolgt das Extrudieren bei einer Temperatur von etwa 250°C bei 250 Umdrehungen pro Minute bei einem Durchsatz von 10 kg/h. Die Copolymer-Mischung wurde extrudiert und nach dem Verschmelzen durch Einbringung in ein Wasserbad rasch auf eine Temperatur von 25°C abgekühlt. Anschließend wurde die Copolymer-masse granuliert.
Die erhaltene ABS-Formmasse hat folgende Eigenschaften:

a) Charpy-Kerbschlagzähigkeit (ak) [$kJ/m^2$]:

geprüft bei 23°C : 34
geprüft bei -30°C : 11.

b) Glanzverhalten: schlecht.
c) Fließfähigkeit (MVR[ml/10']): 9.
d) Elastizität (E-Modul [MPa]): 2400.
e) Streckspannung (Tensile Strength at Yield): 48.

**Patentansprüche**

1.  Thermoplastische Formmasse, enthaltend ein thermoplastisches Copolymer A und ein Pfropfcopolymer B sowie gegebenenfalls weitere Komponenten K, wobei die Formmasse enthält:

A: 40 bis 80 Gew.-% eines thermoplastischen Copolymers A erhältlich aus:

A1: 20 bis 31 Gew.-%, bezogen auf das Copolymer A, Acrylnitril, und
A2: 69 bis 80 Gew.-%, bezogen auf das Copolymer A, Styrol oder
$\alpha$-Methylstyrol oder einer Mischung aus Styrol und $\alpha$-Methylstyrol,

B: 20 bis 60 Gew.-% eines Pfropfcopolymers B, herstellbar im Wesentlichen aus:

B1: 55 bis 70 Gew.-%, bezogen auf das Pfropfcopolymer B, einer Pfropfgrundlage (B1), erhältlich durch die Umsetzung von:

(B11): 0 bis 10 Gew.-%, bezogen auf die Pfropfgrundlage B1, Styrol,
(B12): 90 bis 100 Gew.-%, bezogen auf die Pfropfgrundlage B1, Butadien,
und
(B13): 0,01 bis 5 Gew.-%, bezogen auf die Pfropfgrundlage B1, eines copolymerisierbaren, polyfunktionellen, agglomerierend wirkenden, Copolymerisat (C) aus

92 bis 98 Gew.-%, bezogen auf die Gesamtfeststoffe in (C), Ethylacrylat und
2 bis 8 Gew.-%, bezogen auf die Gesamtfeststoffe in (C), Methylacrylamid

wobei dieses Copolymerisat (C)

40 bis 85 Gew.-% einer Homopolymer-Komponente aus Ethylacrylat und
15 bis 60 Gew.-% einer weiteren Polymer-Komponente enthält,

wobei diese weitere Polymer-Komponente einen Methacrylamid-Anteil von 6 bis 15 Gew.-% aufweist;

und wobei die Summe (B11) + (B12) + (B13) gerade 100 Gew.-% ergibt; und
B2: 30 bis 45 Gew.-%, bezogen auf das Pfropfcopolymer B, einer Pfropfhülle erhältlich durch Umsetzung der Pfropfgrundlage B1 mit einer Mischung von:

(B21) 75 bis 80 Gew.-%, bezogen auf die Pfropfhülle (B2), Styrol und
(B22) 20 bis 25 Gew.-%, bezogen auf die Pfropfhülle (B2), Acrylnitril,

wobei die Gesamtsumme aus Pfropfgrundlage B1 und Pfropfhülle B2 gerade 100 Gew.-% ergibt; und
K: 0 bis 5 Gew.-% weiterer Komponenten K,
wobei die Summe aus thermoplastischem Copolymer A, Pfropfcopolymer B und weiteren Komponenten K gerade 100 % ergibt.

2. Thermoplastische Formmasse gemäß Anspruch 1, **dadurch gekennzeichnet, dass** das thermoplastische Pfropfpolymerisat B einen Kautschukgehalt von 20 bis 80 Gew.-% hat.

3. Thermoplastische Formmasse gemäß einem der Ansprüche 1 bis 2, **dadurch gekennzeichnet, dass** das Copolymerisat A aus den Monomeren Styrol und Acrylnitril aufgebaut ist.

4. Thermoplastische Formmasse gemäß einem der Ansprüche 1 bis 3, **dadurch gekennzeichnet, dass** das Copolymerisat A aus den Monomeren α-Methylstyrol und Acrylnitril aufgebaut ist.

5. Thermoplastische Formmasse gemäß einem der Ansprüche 1 bis 4, **dadurch gekennzeichnet, dass** das Copolymerisat A aus den Monomeren Styrol, α-Methylstyrol und Acrylnitril aufgebaut ist.

6. Thermoplastische Formmasse gemäß einem der Ansprüche 1 bis 5, **dadurch gekennzeichnet, dass** für die Herstellung des Pfropfgrundlage (B1) als copolymerisierbare, polyfunktionelle, agglomerierend wirkende Komponente mindestens ein Copolymerisat (C) aus 92 bis 98 Gew.-%, bezogen auf die Gesamtfeststoffe in (C), Ethylacrylat und 2 bis 8 Gew.-% Methylacrylamid, bezogen auf die Gesamtfeststoffe in (C), eingesetzt wird, wobei dieses Copolymerisat (C) 40 bis 85 Gew.-% einer Homopolymer-Komponente aus Ethylacrylat und 15 bis 60 Gew.-% einer weiteren Polymer-Komponente enthält, wobei diese weitere Polymer-Komponente einen Methacrylamid-Anteil von 7 bis 12 Gew.-% aufweist.

7. Thermoplastische Formmasse gemäß einem der Ansprüche 1 bis 6, **dadurch gekennzeichnet, dass** für die Herstellung des Pfropfcopolymers B von einer agglomerierten Pfropfgrundlage ausgegangen wird, die eine bimodale Teilchengrößenverteilung mit zwei Maxima aufweist, wobei diese Maxima bei Teilchengrößen von 80 bis 120 nm einerseits und 350 bis 550 nm andererseits liegen.

8. Thermoplastische Formmasse gemäß einem der Ansprüche 1 bis 7, **dadurch gekennzeichnet, dass** sie als weitere Komponenten (K) eine oder mehrere Komponente ausgewählt aus der Gruppe der Dispergiermittel (DM), Puffersubstanzen (PS), Molekulargewichtsregler (MR), Füllstoffe (F) und Zusatzstoffe (D) enthält.

9. Thermoplastische Formmasse gemäß einem der Ansprüche 1 bis 8, **dadurch gekennzeichnet, dass** sie zusätzlich mindestens ein weiteres thermoplastisches Polymer (TP), ausgewählt aus der Gruppe der Polycarbonate, Polyestercarbonate, Polyester und Polyamide enthält.

10. Verwendung einer thermoplastischen Formmasse gemäß einem der Ansprüche 1 bis 9 zur Herstellung von Form-teilen.

**EP 2 054 472 B1**

11. Formkörper, hergestellt aus einer thermoplastischen Formmasse gemäß einem der Ansprüche 1 bis 9.

12. Verfahren zur Herstellung einer thermoplastischen Formmasse gemäß einem der Ansprüche 1 bis 9, **dadurch gekennzeichnet, dass** man durch Massepolymerisation oder Lösungsmittelpolymerisation das thermoplastische Copolymers A herstellt, durch Emulsionspolymerisation unter Verwendung eines Redöx-Initiatorsystems das Pfropfcopolymer B herstellt, und dann das thermoplastische Copolymer A und das Pfropfcopolymer B sowie gegebenenfalls die weiteren Komponenten K und/oder die weiteren thermoplastischen Polymere (TP) mischt.

13. Verfahren zur Herstellung einer thermoplastischen Formmasse gemäß Anspruch 12, **dadurch gekennzeichnet, dass** man durch Polymerisation in Gegenwart eines Lösungsmittels das thermoplastische Copolymers A herstellt, durch Emulsionspolymerisation unter Verwendung von Kaliumperoxodisulfat zunächst eine Pfropfgrundlage B1 herstellt, diese Pfropfgrundlage einer Agglomeration unterzieht und dann in einer weiteren Emulsionspolymerisation unter Einsatz weiterer Monomere und eines Redox-Initiatorsystems das Pfropfcopolymer B herstellt, und dann das thermoplastische Copolymer A und das Pfropfcopolymer B sowie gegebenenfalls die weiteren Komponenten K und/oder die weiteren thermoplastischen Polymere (TP) mischt.

14. Verfahren zur Herstellung einer thermoplastischen Formmasse gemäß einem der Ansprüche 12 oder 13 **dadurch gekennzeichnet, dass** zur Herstellung des Pfropfpolymerisats B ein Redox-Initiatorsystem eingesetzt wird, enthaltend ein organisches Peroxid sowie mindestens ein Reduktionsmittel.

15. Verfahren zur Herstellung einer thermoplastischen Formmasse gemäß einem der Ansprüche 12 bis 14, **dadurch gekennzeichnet, dass** zur Herstellung des Pfropfpolymerisats B ein Redox-Initiatorsystem eingesetzt wird, enthaltend ein organisches Peroxid ausgewählt aus der Gruppe: Di-tert.-butylperoxid, Cumolhydroperoxid, tert.-Butylhydroperoxid und p-Menthanhydroperoxid oder Gemischen hieraus, sowie als Reduktionsmittel mindestens eine wasserlösliche Verbindung mit reduzierender Wirkung.

16. Verfahren zur Herstellung einer thermoplastischen Formmasse gemäß einem der Ansprüche 12 bis 15, **dadurch gekennzeichnet, dass** zur Herstellung des Pfropfpolymerisats B ein Redox-Initiatorsystem eingesetzt wird, enthaltend mindestens ein organisches Peroxid ausgewählt aus der Gruppe: Cumolhydroperoxid, p-Menthanhydroperoxid und Mischungen hieraus, sowie mindestens ein Reduktionsmittel ausgewählt aus der Gruppe: Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)salze, Zinn(II)salze und Titan(III)salze.

17. Verfahren zur Herstellung einer thermoplastischen Formmasse gemäß einem der Ansprüche 12 bis 16, **dadurch gekennzeichnet, dass** zur Herstellung des Pfropfpolymerisats B ein Emulsionspolymerisation unter Verwendung eines Redox-Initiatorsystem enthaltend Cumolhydroperoxid, Dextrose sowie Eisen(II)salze durchgeführt wird, wobei das Cumolhydroperoxid kontinuierlich während der Pfropfpolymerisation zugeführt wird.

18. Verfahren zur Herstellung einer thermoplastischen Formmasse gemäß einem der Ansprüche 12 bis 17, **dadurch gekennzeichnet, dass** zur Herstellung der Pfropfgrundlage B1 eine Emulsionspolymerisation unter Einsatz von Kaliumperoxodisulfat als Initiator durchgeführt wird.

19. Verfahren zur Agglomeration eines in wässriger Phase dispergierten Kautschuks durch die Zugabe einer wässrigen Dispersion enthaltend eine copolymerisierbare, polyfunktionelle, agglomerierend wirkende Komponente (C), enthaltend Ethylacrylat und Methylacrylamid, wobei es sich bei der Komponente (C) um ein Copolymerisat aus

> 92 bis 98 Gew.-%, bezogen auf die Gesamtfeststoffe in (C), Ethylacrylat und
> 2 bis 8 Gew.-%, bezogen auf die Gesamtfeststoffe in (C), Methylacrylamid,

handelt, wobei dieses Copolymerisat (C)

> 40 bis 85 Gew.-% einer Homopolymer-Komponente aus Ethylacrylat und
> 15 bis 60 Gew.-% einer weiteren Polymer-Komponente enthält,

wobei diese weitere Polymer-Komponente einen Methacrylämid-Anteil von 6 bis 15 Gew.-% aufweist.

20. Verfahren zur Herstellung einer agglomerierend wirkenden Komponente (C), enthaltend Ethylacrylat und Methyl-

EP 2 054 472 B1

acrylamid, wobei es sich bei der Komponente (C) um ein Copolymerisat aus

92 bis 98 Gew.-%, bezogen auf die Gesamtfeststoffe in (C), Ethylacrylat und
2 bis 8 Gew.-%, bezogen auf die Gesamtfeststoffe in (C), Methylacrylamid

handelt, wobei dieses Copolymerisat (C)

40 bis 85 Gew.-% einer Homopolymer-Komponente aus Ethylacrylat und
15 bis 60 Gew.-% einer weiteren Polymer-Komponente enthält,

wobei diese weitere Polymer-Komponente einen Methacrylamid-Anteil von 6 bis 15 Gew.-% aufweist, **dadurch gekennzeichnet, dass** man zunächst eine Teilmenge des Ethylacrylats polymerisiert und anschließend in einem mehrstufigen Zugabeverfahren die weiteren Teilmengen an Ethylacrylat sowie das Methylacrylamid zugibt.

21. Verfahren zur Herstellung einer agglomerierend wirkenden Komponente (C), gemäß Anspruch 20, **dadurch gekennzeichnet, dass** man zunächst eine Teilmenge des Ethylacrylats polymerisiert, dann eine weitere Teilmenge an Ethylacrylat zugibt sowie erst anschließend Ethylacrylat und das Methylacrylamid als Mischung zugibt.

22. Verwendung einer agglomerierend wirkenden Komponente (C), herstellbar gemäß einem der Ansprüche 20 oder 21, zur Herstellung eines agglomerierten Kautschuklatex.

23. Agglomerierend wirkende Komponente (C) enthaltend

92 bis 98 Gew.-%, bezogen auf die Gesamtfeststoffe in (C), Ethylacrylat und
2 bis 8 Gew.-%, bezogen auf die Gesamtfeststoffe in (C), Methylacrylamid,

**dadurch gekennzeichnet, dass** sie 40 bis 85 Gew.-% einer Homopolymer-Komponente aus Ethylacrylat und 15 bis 60 Gew.-% einer weiteren Polymer-Komponente enthält, wobei diese weitere Polymer-Komponente einen Methacrylamid-Anteil von 6 bis 15 Gew.-% aufweist.

24. Agglomerierend wirkende Komponente (C) gemäß Patentanspruch 23, **dadurch gekennzeichnet, dass** sie 40 bis 85 Gew.-% einer Homopolymer-Komponente aus Ethylacrylat und 15 bis 60 Gew.-% einer weiteren Polymer-Komponente enthält, wobei diese weitere Polymer-Komponente einen Methacrylamid-Anteil von 7 bis 13 Gew.-% aufweist.

## Claims

1. Thermoplastic molding composition, comprising a thermoplastic copolymer A and a graft copolymer B, and also, if appropriate, further components K, where the molding composition comprises:

A: from 40 to 80% by weight of a thermoplastic copolymer A obtainable from:

A1: from 20 to 31% by weight, based on the copolymer A, of acrylonitrile, and
A2: from 69 to 80% by weight, based on the copolymer A, of styrene or $\alpha$-methylstyrene or of a mixture composed of styrene and $\alpha$-methylstyrene,

B: from 20 to 60% by weight of a graft copolymer B, which can be prepared in essence from:

B1: 55 to 70% by weight, based on the graft copolymer B, of a graft base (B1), obtainable via the reaction of:

(B11): from 0 to 10% by weight, based on the graft base B1, of styrene,
(B12): from 90 to 100% by weight, based on the graft base B1, of butadiene, and
(B13): from 0.01 to 5% by weight, based on the graft base B1, of a copolymerizable, polyfunctional, agglomerating copolymer (C) composed of from 92 to 98% by weight, based on the total solids in (C), of ethyl acrylate and from 2 to 8% by weight, based on the total solids in (C), of methylacrylamide, where this copolymer (C) comprises from 40 to 85% by weight of a homopolymer component composed of ethyl acrylate and from 15 to 60% by weight of a further polymer component, where this further polymer component has from 6 to 15% by weight methacrylamide content;

and where the entirety of (B11) + (B12) + (B13) gives exactly 100% by weight; and
B2: from 30 to 45% by weight, based on the graft copolymer B, of a graft shell obtainable via reaction of the graft base B1 with a mixture of:

(B21) from 75 to 80% by weight, based on the graft shell (B2), of styrene, and
(B22) from 20 to 25% by weight, based on the graft shell (B2), of acrylonitrile,
where the entirety composed of graft base B1 and graft shell B2 gives exactly 100% by weight; and

K: from 0 to 5% by weight of further components K,
where the entirety composed of thermoplastic copolymer A, of graft copolymer B, and of further components K gives exactly 100% by weight.

2. Thermoplastic molding composition according to Claim 1, **characterized in that** the thermoplastic graft polymer B has from 20 to 80% by weight rubber content.

3. Thermoplastic molding composition according to any of Claims 1 to 2, **characterized in that** the copolymer A is composed of the monomers styrene and acrylonitrile.

4. Thermoplastic molding composition according to any of Claims 1 to 3, **characterized in that** the copolymer A is composed of the monomers α-methylstyrene and acrylonitrile.

5. Thermoplastic molding composition according to any of Claims 1 to 4, **characterized in that** the copolymer A is composed of the monomers styrene, α-methylstyrene, and acrylonitrile.

6. Thermoplastic molding composition according to any of Claims 1 to 5, **characterized in that** the copolymerizable, polyfunctional, agglomerating component used for preparation of the graft base (B1) comprises at least one copolymer (C) composed of from 92 to 98% by weight, based on the total solids in (C), of ethyl acrylate and from 2 to 8% by weight of methylacrylamide, based on the total solids in (C), where this copolymer (C) comprises from 40 to 85% by weight of a homopolymer component composed of ethyl acrylate and from 15 to 60% by weight of a further polymer component, where this further polymer component has from 7 to 12% by weight methacrylamide content.

7. Thermoplastic molding composition according to any of Claims 1 to 6, **characterized in that** the preparation of the graft copolymer B starts from an agglomerated graft base which has bimodal particle size distribution with two maxima, these maxima lying firstly at particle sizes of from 80 to 120 nm and secondly at particle sizes of from 350 to 550 nm.

8. Thermoplastic molding composition according to any of Claims 1 to 7, **characterized in that** it comprises, as further components (K), one or more components selected from the group of the dispersing agents (DA), buffer substances (BS), molecular weight regulators (MR), fillers (F), and additives (D).

9. Thermoplastic molding composition according to any of Claims 1 to 8, **characterized in that** it also comprises at least one further thermoplastic polymer (TP), selected from the group of the polycarbonates, polyester carbonates, polyesters, and polyamides.

10. Use of a thermoplastic molding composition according to any of Claims 1 to 9 for production of moldings.

11. Molding, produced from a thermoplastic molding composition according to any of Claims 1 to 9.

12. Process for preparation of a thermoplastic molding composition according to any of Claims 1 to 9, **characterized in that** the thermoplastic copolymer A is prepared via bulk polymerization or solution polymerization, the graft copolymer B is prepared via emulsion polymerization using a redox initiator system, and then the thermoplastic copolymer A and the graft copolymer B, and also, if appropriate, the further components K and/or the further thermoplastic polymers (TP) are mixed.

13. Process for preparation of a thermoplastic molding composition according to Claim 12, **characterized in that** the thermoplastic copolymer A is prepared via polymerization in the presence of a solvent, then a graft base B1 is prepared via emulsion polymerization using potassium peroxodisulfate, this graft base is subjected to agglomeration, and then the graft copolymer B is prepared in a further emulsion polymerization using further monomers and using a redox initiator system, and then the thermoplastic copolymer A and the graft copolymer B, and also, if appropriate, the further components K and/or the further thermoplastic polymers (TP) are mixed.

14. Process for preparation of a thermoplastic molding composition according to either of Claims 12 and 13, **characterized in that** a redox initiator system is used for preparation of the graft polymer B and comprises an organic peroxide, and also at least one reducing agent.

15. Process for preparation of a thermoplastic molding composition according to any of Claims 12 to 14, **characterized in that** a redox initiator system is used for preparation of the graft polymer B and comprises an organic peroxide selected from the group of di-tert-butyl peroxide, cumene hydroperoxide, tert-butyl hydroperoxide, and p-menthane hydroperoxide, and mixtures thereof, and also, as reducing agent, at least one water-soluble compound with reducing action.

16. Process for the preparation of a thermoplastic molding composition according to any of Claims 12 to 15, **characterized in that** a redox initiator system is used for preparation of the graft polymer B and comprises at least one organic peroxide selected from the group of cumene hydroperoxide, p-menthane hydroperoxide, and mixtures thereof, and also at least one reducing agent selected from the group of: salts of sulfinic acid, salts of sulfurous acid, sodium dithionite, sodium sulfite, sodium hyposulfite, sodium hydrogensulfite, ascorbic acid, and also salts thereof, Rongalit C (sodium formaldehyde-sulfoxylate), mono- and dihydroxyacetone, sugars, ferrous salts, stannous salts, and titanium(III) salts.

17. Process for preparation of a thermoplastic molding composition according to any of Claims 12 to 16, **characterized in that** an emulsion polymerization is carried out for preparation of the graft polymer B and uses a redox initiator system comprising cumene hydroperoxide, dextrose, and also ferrous salts, the cumene hydroperoxide being introduced continuously during the graft polymerization.

18. Process for preparation of a thermoplastic molding composition according to any of Claims 12 to 17, **characterized in that** an emulsion polymerization is carried out for preparation of the graft base B1 and uses potassium peroxodisulfate as initiator.

19. Process for agglomeration of a rubber dispersed in an aqueous phase, via addition of an aqueous dispersion comprising a copolymerizable, polyfunctional, agglomerating component (C), comprising ethyl acrylate and methylacrylamide, where component (C) is a copolymer composed of from 92 to 98% by weight, based on the total solids in (C), of ethyl acrylate and from 2 to 8% by weight, based on the total solids in (C), of methylacrylamide, where this copolymer (C) comprises from 40 to 85% by weight of a homopolymer component composed of ethyl acrylate and from 15 to 60% by weight of a further polymer component, where this further polymer component has from 6 to 15% by weight methacrylamide content.

20. Process for preparation of an agglomerating component (C), comprising ethyl acrylate and methylacrylamide, where component (C) is a copolymer composed of from 92 to 98% by weight, based on the total solids in (C), of ethyl acrylate and from 2 to 8% by weight, based on the total solids in (C), of methylacrylamide, where this copolymer (C) comprises from 40 to 85% by weight of a homopolymer component composed of ethyl acrylate and from 15 to 60% by weight of a further polymer component, where this further polymer component has from 6 to 15% by weight methacrylamide content, **characterized in that** a portion of the ethyl acrylate is first polymerized and then, in a multistage addition process, the further portions of ethyl acrylate, and also the methylacrylamide, are added.

21. Process for preparation of an agglomerating component (C), according to Claim 20, **characterized in that** a portion of the ethyl acrylate is first polymerized and then a further portion of ethyl acrylate is added, and only then are ethyl acrylate and the methylacrylamide added in the form of a mixture.

22. Use of an agglomerating component (C), which can be prepared according to Claim 20 or 21, for preparation of an agglomerated rubber latex.

23. Agglomerating component (C) comprising from 92 to 98% by weight, based on the total solids in (C), of ethyl acrylate and from 2 to 8% by weight, based on the total solids in (C), of methylacrylamide, **characterized in that** it comprises from 40 to 85% by weight of a homopolymer component composed of ethyl acrylate and from 15 to 60% by weight of a further polymer component, where this further polymer component has from 6 to 15% by weight methacrylamide content.

24. Agglomerating component (C) according to Patent Claim 23, **characterized in that** it comprises from 40 to 85% by weight of a homopolymer component composed of ethyl acrylate and from 15 to 60% by weight of a further polymer component, where this further polymer component has from 7 to 13% by weight methacrylamide content.

**Revendications**

1. Masse de moulage thermoplastique, contenant un copolymère thermoplastique A et un copolymère greffé B ainsi que le cas échéant d'autres composants K, la masse de moulage contenant :

A : 40 à 80% en poids d'un copolymère thermoplastique A pouvant être obtenu à partir de :

A1 : 20 à 31% en poids, par rapport au copolymère A, d'acrylonitrile, et
A2 : 69 à 80% en poids, par rapport au copolymère A, de styrène ou d'$\alpha$-méthylstyrène ou d'un mélange de styrène et d'$\alpha$-méthylstyrène,

B : 20 à 60% en poids d'un copolymère greffé B, pouvant être préparé essentiellement à partir de :

B1 : 55 à 70% en poids, par rapport au copolymère greffé B, d'une base de greffage (B1), pouvant être obtenue par la transformation de :

(B11) : 0 à 10% en poids, par rapport à la base de greffage B1, de styrène,
(B12) : 90 à 100% en poids, par rapport à la base de greffage B1, de butadiène et
(B13) : 0,01 à 5% en poids, par rapport à la base de greffage B1, d'un copolymère (C) copolymérisable, polyfonctionnel, à effet agglomérant constitué par

92 à 98% en poids, par rapport à la totalité des solides dans (C), d'acrylate d'éthyle et
2 à 8% en poids, par rapport à la totalité des solides dans (C), de méthacrylamide

ce copolymère (C) contenant

40 à 85% en poids d'un composant homopolymère d'acrylate d'éthyle et
15 à 60% en poids d'un autre composant polymère,
cet autre composant polymère présentant une proportion de méthacrylamide de 6 à 15% en poids ;

la somme de (B11) + (B12) + (B13) valant précisément 100% en poids ; et
B2 : 30 à 45% en poids, par rapport au copolymère greffé B, d'une enveloppe de greffage pouvant être obtenue par la transformation de la base de greffage B1 avec un mélange de :

(B21) 75 à 80% en poids, par rapport à l'enveloppe de greffage (B2), de styrène et
(B22) 20 à 25% en poids, par rapport à l'enveloppe de greffage (B2), d'acrylonitrile,

la somme totale de la base de greffage B1 et de l'enveloppe de greffage B2 valant précisément 100% en poids ; et
K : 0 à 5% en poids d'autres composants K,
la somme du copolymère thermoplastique A, du copolymère greffé B et des autres composants K valant précisément 100%.

2. Masse de moulage thermoplastique selon la revendication 1, **caractérisée en ce que** le polymère greffé thermoplastique B présente une teneur en caoutchouc de 20 à 80% en poids.

3. Masse de moulage thermoplastique selon l'une quelconque des revendications 1 à 2, **caractérisée en ce que** le copolymère A est formé à partir des monomères styrène et acrylonitrile.

4. Masse de moulage thermoplastique selon l'une quelconque des revendications 1 à 3, **caractérisée en ce que** le copolymère A est formé à partir des monomères $\alpha$-méthylstyrène et acrylonitrile.

**5.** Masse de moulage thermoplastique selon l'une quelconque des revendications 1 à 4, **caractérisée en ce que** le copolymère A est formé à partir des monomères styrène, α-méthylstyrène et acrylonitrile.

**6.** Masse de moulage thermoplastique selon l'une quelconque des revendications 1 à 5, **caractérisée en ce que**, pour la préparation de la base de greffage (B1), on utilise comme composant copolymérisable, polyfonctionnel, à effet agglomérant, au moins un copolymère (C) constitué par 92 à 98% en poids, par rapport à la totalité des solides dans (C), d'acrylate d'éthyle et 2 à 8% en poids de méthacrylamide, par rapport à la totalité des solides dans (C), ce copolymère (C) présentant 40 à 85% en poids d'un composant homopolymère d'acrylate d'éthyle et 15 à 60% en poids d'un autre composant polymère, cet autre composant polymère présentant une proportion de méthacrylamide de 7 à 12% en poids.

**7.** Masse de moulage thermoplastique selon l'une quelconque des revendications 1 à 6, **caractérisée en ce qu'**on part, pour la préparation du copolymère greffé B, d'une base de greffage agglomérée qui présente une distribution bimodale des grosseurs de particule avec deux maxima, ces maxima se situant à des grosseurs de particule de 80 à 120 nm d'une part et de 350 à 550 nm d'autre part.

**8.** Masse de moulage thermoplastique selon l'une quelconque des revendications 1 à 7, **caractérisée en ce qu'**elle contient, comme autres composants (K), un ou plusieurs composants choisis dans le groupe des dispersants (DM), des substances tampon (PS), des agents de régulation du poids moléculaire (MR), des charges (F) et des additifs (D).

**9.** Masse de moulage thermoplastique selon l'une quelconque des revendications 1 à 8, **caractérisée en ce qu'**elle comprend en outre au moins un autre polymère thermoplastique (TP), choisi dans le groupe des polycarbonates, des polyestercarbonates, des polyesters et des polyamides.

**10.** Utilisation d'une masse de moulage thermoplastique selon l'une quelconque des revendications 1 à 9 pour la production de pièces moulées.

**11.** Corps moulés produits à partir d'une masse de moulage thermoplastique selon l'une quelconque des revendications 1 à 9.

**12.** Procédé pour la préparation d'une masse de moulage thermoplastique selon l'une quelconque des revendications 1 à 9, **caractérisé en ce qu'**on prépare, par polymérisation en masse ou polymérisation dans un solvant, le copolymère thermoplastique A, on prépare par polymérisation en émulsion en utilisant un système d'initiateur redox le copolymère greffé B, puis on mélange le copolymère thermoplastique A et le copolymère greffé B ainsi que le cas échéant les autres composants K et/ou les autres polymères thermoplastiques (TP).

**13.** Procédé pour la préparation d'une masse de moulage thermoplastique selon la revendication 12, **caractérisé en ce qu'**on prépare, par polymérisation en présence d'un solvant, le copolymère thermoplastique A, puis, par polymérisation en émulsion en utilisant du peroxodisulfate de potassium, d'abord une base de greffage B1, on soumet cette base de greffage à une agglomération puis on prépare, dans une autre polymérisation en émulsion en utilisant d'autres monomères et un système d'initiateur redox, le copolymère greffé B, puis on mélange le copolymère thermoplastique A et le copolymère greffé B ainsi que le cas échéant les autres composants K et/ou les autres polymères thermoplastiques (TP).

**14.** Procédé pour la préparation d'une masse de moulage thermoplastique selon l'une quelconque des revendications 12 ou 13, **caractérisé en ce qu'**on utilise, pour la préparation du polymère greffé B, un système d'initiateur redox, contenant un peroxyde organique ainsi qu'au moins un agent de réduction.

**15.** Procédé pour la préparation d'une masse de moulage thermoplastique selon l'une quelconque des revendications 12 à 14, **caractérisé en ce qu'**on utilise, pour la préparation du polymère greffé B, un système d'initiateur redox, contenant un peroxyde organique choisi dans le groupe : peroxyde de di-tert-butyle, hydroperoxyde de cumène, hydroperoxyde de tert-butyle et hydroperoxyde de p-menthane ou des mélanges correspondants, ainsi que, comme agent de réduction, au moins un composé soluble dans l'eau présentant un effet réducteur.

**16.** Procédé pour la préparation d'une masse de moulage thermoplastique selon l'une quelconque des revendications 12 à 15, **caractérisé en ce qu'**on utilise, pour la préparation du polymère greffé B, un système d'initiateur redox, contenant au moins un peroxyde organique choisi dans le groupe : hydroperoxyde de cumène, hydroperoxyde de p-menthane et des mélanges correspondants ainsi qu'au moins un agent de réduction choisi dans le groupe : sels de l'acide sulfinique, sels de l'acide sulfureux, dithionite de sodium, sulfite de sodium, hyposulfite de sodium, hydrogénosulfite de sodium, acide ascorbique ainsi que ses sels, Rongalite C (formaldéhydesulfoxylate de sodium), monohydroxyacétone et dihydroxyacétone, sucre, sels de fer (II), sels d'étain (II) et sels de titane (III).

**17.** Procédé pour la préparation d'une masse de moulage thermoplastique selon l'une quelconque des revendications 12 à 16, **caractérisé en ce que**, pour la préparation du copolymère greffé B, on réalise une polymérisation en émulsion en utilisant un système d'initiateur redox contenant de l'hydroperoxyde de cumène, du dextrose ainsi que des sels de fer (II), l'hydroperoxyde de cumène étant introduit en continu pendant la polymérisation greffée.

**18.** Procédé pour la préparation d'une masse de moulage thermoplastique selon l'une quelconque des revendications 12 à 17, **caractérisé en ce que**, pour la préparation de la base de greffage B1, on utilise une polymérisation en émulsion en utilisant du peroxodisulfate de potassium comme initiateur.

**19.** Procédé pour l'agglomération d'un caoutchouc dispersé en phase aqueuse par addition d'une dispersion aqueuse contenant un composant (C) copolymérisable, polyfonctionnel, à effet agglomérant contenant de l'acrylate d'éthyle et du méthacrylamide, le composant (C) étant un copolymère de

92 à 98% en poids, par rapport à la totalité des solides dans (C), d'acrylate d'éthyle et
2 à 8% en poids, par rapport à la totalité des solides dans (C), de méthacrylamide

ce copolymère (C) contenant

40 à 85% en poids d'un composant homopolymère d'acrylate d'éthyle et
15 à 60% en poids d'un autre composant polymère, cet autre composant polymère présentant une proportion de méthacrylamide de 6 à 15% en poids.

**20.** Procédé pour la préparation d'un composant (C) à effet agglomérant contenant de l'acrylate d'éthyle et du méthacrylamide, le composant (C) étant un copolymère de

92 à 98% en poids, par rapport à la totalité des solides dans (C), d'acrylate d'éthyle et
2 à 8% en poids, par rapport à la totalité des solides dans (C), de méthacrylamide

ce copolymère (C) contenant

40 à 85% en poids d'un composant homopolymère d'acrylate d'éthyle et
15 à 60% en poids d'un autre composant polymère, cet autre composant polymère présentant une proportion de méthacrylamide de 6 à 15% en poids,

**caractérisé en ce qu'**on polymérise d'abord une quantité partielle de l'acrylate d'éthyle puis on ajoute, dans un procédé d'addition à plusieurs étapes, les autres quantités partielles d'acrylate d'éthyle ainsi que le méthacrylamide.

**21.** Procédé pour la préparation d'un composant (C) à effet agglomérant selon la revendication 20, **caractérisé en ce qu'**on polymérise d'abord une quantité partielle de l'acrylate d'éthyle puis on ajoute une autre quantité partielle d'acrylate d'éthyle ainsi que seulement consécutivement l'acrylate d'éthyle et le méthacrylamide sous forme de mélange.

**22.** Utilisation d'un composant (C) à effet agglomérant, pouvant être préparé selon l'une quelconque des revendications 20 ou 21, pour la préparation d'un latex de caoutchouc aggloméré.

**23.** Composant (C) à effet agglomérant, contenant

92 à 98% en poids, par rapport à la totalité des solides dans (C), d'acrylate d'éthyle et
2 à 8% en poids, par rapport à la totalité des solides dans (C), de méthacrylamide

**caractérisé en ce qu'**il présente 40 à 85% en poids d'un composant homopolymère d'acrylate d'éthyle et 15 à 60% en poids d'un autre composant polymère, cet autre composant polymère présentant une proportion de méthacrylamide de 6 à 15% en poids.

**24.** Composant (C) à effet agglomérant selon la revendication 23, **caractérisé en ce qu'**il présente 40 à 85% en poids d'un composant homopolymère d'acrylate d'éthyle et 15 à 60% en poids d'un autre composant polymère, cet autre composant polymère présentant une proportion de méthacrylamide de 7 à 13% en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0022200 A
- EP 077038 A
- EP 1305345 A
- EP 0714941 A
- EP 0429957 A2
- EP 1108732 A1
- WO 200210222 A
- DE 2826925 A
- EP 022200 A
- US 2520959 A
- US 3397165 A
- EP 000419 A
- EP 080720 A
- EP 188814 A
- WO 03091300 A
- WO 200130901 A
- WO 200228931 A
- EP 1191044 A
- EP 029613 A
- EP 007810 A
- DE 1233131 A
- DE 1258076 A
- DE 2101650 A
- DE 2407647
- DE 2407776
- DE 2715932
- DE 1900270
- US 3692744 A
- DE 19907136 A
- EP 0771328 A

**In der Beschreibung aufgeführte Nicht-Patentliteratur**

- **KYO DONG CHO et al.** *J. App. Pol. Sci., Bd.,* 2002, vol. 84 (2), 276-282
- Kunststoff-Handbuch, Vieweg-Daumiller, Band V, (Polystyrol). Carl-Hanser-Verlag, 1969, 122 f
- Methoden der organischen Chemie. **HOUBEN-WEYL.** Makromolekulare Stoffe. Georg-Thieme-Verlag, 1961, 411-420
- **HOUBEN-WEYL.** Methoden der organischen Chemie. vol. E 20, 2168
- **W. SCHOLTAN ; H. LANGE.** *Kolloid.-Zeitschrift und Z.-Polymere,* 1972, vol. 250, 782-796
- Kunststoff-Handbuch. Carl Hanser Verlag, 1973, vol. VIII, 695 ff
- Plastics Additives Handbook. Hanser Publ, 1996
- Analytische Ultrazentrifuge (AUC) in Biochemistry and Polymer Science. Royal Society of Chemistry, 1992, 1447-1475